# EUROPÄISCHE PATENTSCHRIFT

(11) **EP 1 283 770 B1**
(45) Veröffentlichungstag und Bekanntmachung des Hinweises auf die Patenterteilung: **08.09.2004**
(21) Anmeldenummer: 01940378.1
(22) Anmeldetag: 28.04.2001
(51) Int. Cl.: B29C 45/68, B29C 45/40

(54) **ANTRIEBSVORRICHTUNG, INSBESONDERE FÜR DIE SCHLIESSEINHEIT, DIE EINSPRITZEINHEIT ODER DIE AUSWERFER EINER KUNSTSTOFFSPRITZGIESSMASCHINE**
DRIVE DEVICE, IN PARTICULAR FOR THE LOCKING UNIT, THE INJECTION UNIT OR THE EJECTOR OF AN INJECTION-MOULDING MACHINE FOR PLASTICS
DISPOSITIF D'ENTRAINEMENT, NOTAMMENT POUR L'UNITE DE VERROUILLAGE, L'UNITE D'INJECTION OU L'UNITE D'EJECTION D'UNE PRESSE D'INJECTION DE MATIERE PLASTIQUE

(30) Priorität: 23.05.2000 DE 10025068; 01.09.2000 DE 10042986; 13.12.2000 DE 10061992; 20.01.2001 DE 10102602; 10.03.2001 DE 10111593; 21.03.2001 DE 10113808
(43) Veröffentlichungstag der Anmeldung: 19.02.2003
(73) Patentinhaber: Bosch Rexroth AG, 70184 Stuttgart (DE)
(72) Erfinder: DANTLGRABER, Jörg, 97816 Lohr am Main (DE)
(86) Internationale Anmeldenummer: PCT/EP2001/004804
(87) Internationale Veröffentlichungsnummer: WO 2001/089801

(56) Entgegenhaltungen:
- EP-A- 0 508 277
- WO-A-92/11993
- PATENT ABSTRACTS OF JAPAN vol. 11, no. 82 (M-571), 12. März 1987 (1987-03-12) -& JP 61 237617 A (MEIKI CO LTD), 22. Oktober 1986 (1986-10-22)

## Beschreibung

Die Erfindung betrifft eine Antriebsvorrichtung, die insbesondere für die Schließeinheit oder die Einspritzeinheit oder die Auswerfer einer Kunststoffspritzgießmaschine verwendet werden soll und die die Merkmale aus dem Oberbegriff des Patentanspruchs 1 aufweist.

Innerhalb der Schließeinheit einer Kunststoffspritzgießmaschine bewegt die Antriebsvorrichtung die bewegliche Formaufspannplatte der Maschine. Eine solche Antriebsvorrichtung hat zwei wichtige unterschiedliche Forderungen zu erfüllen. Zum einen soll sie die Formaufspannplatte zum Schließen und zum Öffnen der Form möglichst schnell verfahren, damit die Zykluszeit für die Herstellung eines Formstücks klein gehalten werden kann. Zum ändern soll sie die Formaufspannplatte und damit die ganze Form gegen den hohen Spritzdruck mit großer Kraft zuhalten können. Zum einen sind also Stellbewegungen mit hoher Geschwindigkeit auszuführen, zum andern sind ohne wesentliche Bewegung hohe Kräfte auszuüben. Derartige Anforderungen können sich außer bei der Schließeinheit auch bei den Auswerfern oder der Einspritzeinheit einer Kunststoffspritzgießmaschine stellen. Zum Beispiel wird beim Einspritzen von Kunststoff in die Form die Plastifizierschnecke mit relativ hoher Geschwindigkeit in Richtung auf die Form zu bewegt, bis die Form vollständig mit Kunststoff gefüllt ist. Wird im Anschluß daran die sich in der Form befindliche Kunststoffschmelze einem sogenannten Nachdruck ausgesetzt, so muß der Antrieb eine hohe Kraft ohne wesentliche Bewegung der Plastifizierschnecke aufbringen.

Aus der US-A 4,030,299 ist ein rein hydraulischer Antrieb für die bewegbare Formaufspannplatte einer Kunststoffspritzgießmaschine bekannt, der auch einen hydraulischen Kraftübersetzer enthält. Dieser weist einen bewegbaren Kolben kleiner Wirkfläche, einen weiteren bewegbaren Kolben großer Wirkfläche und einen Zylinder auf, der zusammen mit den Kolben einen mit einer Druckflüssigkeit gefüllten Druckraum einschließt. Der Zylinder ist ortsfest am Gestell der Spritzgießmaschine angeordnet. Zu dem Antrieb gehören außerdem Hydrozylinder, die zum Schließen und Öffnen der Form die bewegbare Formaufspannplatte verfahren. Im geöffneten Zustand der Form ist das Volumen des Druckraums des hydraulischen Kraftübersetzers minimal. Wird nun die bewegbare Formaufspannplatte von den Hydrozylindern im Sinne eines Schließens der Form verfahren, so wird der große Kolben des hydraulischen Kraftübersetzers mitgenommen, wobei sich das Volumen des Druckraums des hydraulischen Kraftübersetzers vergrößert und Druckmittel aus einem Behälter über ein Nachsaugventil in den Druckraum einströmt. Im Anschluß daran wird der kleine Kolben des hydraulischen Kraftübersetzers in den Druckraum hineingefahren und dadurch ein hoher Druck erzeugt, der über die große Wirkfläche des großen Kolbens eine hohe Schließkraft bewirkt. Der kleine Kolben wird durch Zufuhr von Druckflüssigkeit hydraulisch bewegt. Somit sind bei der Antriebsvorrichtung nach der US-A 4,030,299 für die Stellbewegung der bewegbaren Formaufspannplatte und für die Ausübung einer hohen Kraft verschiedene hydraulische Antriebskomponenten vorhanden. Zwischen dem Druckraum und dem Behälter fließt während der Stellbewegungen der Formaufspannplatte viel Druckflüssigkeit hin und her, was entsprechend große Ventile und Flüssigkeitskanäle bedingt.

Eine Antriebsvorrichtung mit den Merkmalen aus dem Oberbegriff des Patentanspruchs 1 ist aus der DE 41 11 594 A1 bekannt. Bei dieser Antriebsvorrichtung ist mit der beweglichen Formaufspannplatte ein Hydrozylinder mit einer großen Wirkfläche fest verbunden. Die Einheit aus beweglicher Formaufspannplatte und Hydrozylinder kann von einem Elektromotor über ein Getriebe, das eine Hubspindel und eine Spindelmutter umfaßt, verfahren werden, um die Form schnell zu schließen und schnell zu öffnen. Die hohe Schließkraft wird durch Druckbeaufschlagung des mit der Formaufspannplatte verfahrbaren Hydrozylinders aufgebracht. Dabei wird die gesamte Reaktionskraft über die Spindel und die Spindelmutter auf das Maschinengestell abgeleitet. Die Kunststoffspritzgießmaschine nach der DE 41 11 594 A1 ist außer mit den Komponenten des elektrischen Antriebs auch mit einem vollständigen hydraulischen System einschließlich Ölbehälter, Pumpe, Ventilen und Hydrozylinder ausgestattet.

Der Erfindung liegt die Aufgabe zugrunde, eine Antriebsvorrichtung, die die Merkmale aus dem Oberbegriff des Patentanspruchs 1 aufweist, so weiterzuentwickeln, daß mit geringem Aufwand einerseits eine schnelle Stellbewegung möglich ist und andererseits auch eine große Kraftwirkung erzielt werden kann.

Das gesetzte Ziel wird dadurch erreicht, daß die Antriebsvorrichtung mit den Merkmalen aus dem Oberbegriff erfindungsgemäß auch die Merkmale aus dem kennzeichnenden Teil des Patentanspruchs 1 aufweist. Bei einer solchen Antriebsvorrichtung wird somit ein hydraulischer Kraftübersetzer verwendet, in dessen Druckraum zumindest während der Stellbewegung und der anschließenden Ausübung einer hohen Kraft ein bestimmtes Volumen einer Druckflüssigkeit eingeschlossen ist, sieht man einmal von Volumenänderungen aufgrund einer Druckänderung ab. Sonstige hydraulische Komponenten sind vom Prinzip her für eine erfindungsgemäße Antriebsvorrichtung nicht notwendig. Der kleine Kolben des hydraulischen Kraftübersetzers ist erfindungsgemäß mechanisch mit dem durch den Elektromotor axial verfahrenbaren Antriebselement verbunden. Weiterhin ist gemäß der Erfindung für die Stellbewegung eines anzutreibenden Elements die Hydroeinheit als Ganzes verfahrbar, wodurch die Geschwindigkeit des mit dem anzutreibenden Element mechanisch gekoppelten großen Kolbens gleich der hohen Geschwindigkeit des vom Elektromotor axial verfahrenen Antriebselements ist. Um eine hohe Kraft ausüben zu können, wird das Zwischenteil des hydraulischen Kraftübersetzers gegen eine Verschiebung relativ zu einem ortsfesten Gestell blockiert, so daß durch ein weiteres Verfahren des kleinen Kolbens um einen relativ kleinen Weg im Druckraum des Kraftübersetzers ein hoher Druck aufgebaut werden kann, der an der großen Wirkfläche des großen Kolbens eine hohe Kraft erzeugt. Dabei ist über das Antriebselement nur ein der Wirkfläche des kleinen Kolbens entsprechender Anteil der Kraft abzustützen.

Um die Hydroeinheit als Ganzes verfahren zu können, ist gemäß Patentanspruch 2 bevorzugt eine Koppelungseinrichtung vorhanden, durch die Zwischenteil und großer Kolben der Hydroeinheit während der Stellbewegung lagefest miteinander gekoppelt sind.

In besonders vorteilhafter Weise umfaßt gemäß Patentanspruch 3 die Koppelungseinrichtung eine Feder, die zwischen dem großen Kolben und dem Zwischenteil gespannt ist. Diese Feder wird beim Wirksamwerden des hydraulischen Kraftübersetzers eine geringe Wegstrecke weiter zusammengedrückt, so daß kein zusätzlicher Aktuator zum Lösen der Koppelung zwischen dem großen Kolben und dem Zwischenteil des Kraftübersetzers notwendig ist. Die Hydroeinheit folgt bei der Stellbewegung unmittelbar dem kleinen Kolben, weil die Feder nicht erst durch einen Druckaufbau im Druckraum stärker gespannt werden muß, um die für die Stellbewegung notwendige Kraft übertragen zu können. Die Koppelung durch eine Feder stellt eine kraftschlüssige Koppelung zwischen dem Zwischenteil und dem großen Kolben dar, die durch Aufbringen einer über einer Grenzkraft liegenden Kraft gelöst werden kann.

Die Patentansprüche 4 und 5 betreffen konstruktive Ausgestaltungen des hydraulischen Kraftübersetzers, die ebenfalls besonders im Hinblick auf eine kompakte Bauweise vorteilhaft sind.

Um die Hydroeinheit als Ganzes verfahren zu können, kann gemäß Patentanspruch 6 auch zwischen dem vom Elektromotor verfahrbaren Antriebselement bzw. zwischen dem kleinen Kolben und dem Zwischenteil der Hydroeinheit eine Koppelungseinrichtung vorgesehen sein, die gelöst wird, wenn die hohe Kraft ausgeübt werden soll und dazu der kleine Kolben weiter in den Druckraum einzutauchen ist. Die Koppelungseinrichtung ist vorzugsweise eine Schaltkupplung, so daß während der Zuhattebewegung das Antriebsteil durch die für die Überwindung der Reibung einer Reibkupplung notwendige Kraft nicht zusätzlich belastet wird und auch starke Beschleunigungen der Hydroeinheit möglich sind. Bei einer solchen Ausbildung ist für den Bewegungsablauf vom Prinzip her keine zwischen dem großen Kolben und dem Zwischenteil angeordnete und stark vorgespannte Feder notwendig. Es ist jedoch, wie dies im Patentanspruch 7 angegeben ist, eine derart angeordnete und schwach vorgespannte Feder vorteilhaft, da diese in dem Druckraum einen gewissen Vorspanndruck in Höhe von zum Beispiel 5 bar erzeugen kann und sich dadurch der Druckraum gut entlüften läßt.

In besonders bevorzugter Weise ist jedoch zwischen dem Antriebselement bzw. dem kleinen Kolben einerseits und dem großen Kolben der Hydroeinheit andererseits eine Koppelungseinrichtung vorgesehen sein, durch die für eine Stellbewegung großer Kolben und kleiner Kolben unmittelbar lagefest miteinander gekoppelt sind und die gelöst wird, wenn die hohe Kraft ausgeübt werden soll und dazu der kleine Kolben weiter in den Druckraum einzutauchen ist. Das Zwischenteil wird vorteilhafterweiser gemäß Patentanspruch 9 während der Stellbewegung vom großen Kolben über eine Feder mitgenommen. Auch hier ist die Koppelungseinrichtung bevorzugt eine Schaltkupplung, insbesondere eine elektromagnetische Schaltkupplung. Diese wirkt bevorzugt in axialer Richtung, also in Bewegungsrichtung des Kraftübersetzers.

Die Koppelungseinrichtung zwischen dem Antriebselement bzw. dem kleinen Kolben einerseits und dem Zwischenteil oder dem großen Kolben andererseits ist gemäß Patentanspruch 11 vorzugsweise eine hydraulische Kupplung. Dabei ist während der Stellbewegung in einem Raum zwischen den beiden miteinander gekuppelten Teilen Druckflüssigkeit eingeschlossen. Um die beiden Teile gegeneinander bewegen zu können, wird eine Verdrängung von Druckflüssigkeit aus dem Raum zugelassen.

Gemäß Patentanspruch 12 ist die Koppelungseinrichtung zwischen dem Antriebselement bzw. dem kleinen Kolben einerseits und dem Zwischenteil oder dem großen Kolben andererseits eine insbesondere hydraulische Grenzkraftkupplung, also eine Kupplung, bei der bis zu einer Grenzkraft über ein eingeschlossenes Flüssigkeitsvolumen eine Bewegung übertragbar ist. Ein Vorteil einer solchen Kupplung liegt in ihrer selbsttätigen Arbeitsweise.

Eine Koppelungseinrichtung zwischen dem kleinen Kolben und dem großen Kolben befindet sich gemäß Patentanspruch 13 bevorzugt in einem Hohlraum (Kupplungsraum) des großen Kolbens, in den der kleine Kolben hineinreicht. Die Wirkfläche des kleinen Kolbens für die Kraftübersetzung kann gemäß Patentanspruch 14 in einfacher Weise durch eine Stufe des kleinen Kolbens gebildet sein und sich im Druckraum vor dem Hohlraum des großen Kolbens befinden.

Die zum Aufbau einer großen Kraft vorgesehene Blockierung des Zwischenteils des hydraulischen Kraftübersetzers relativ zu einem ortsfesten Gestell geschieht gemäß Patentanspruch 15 bevorzugt durch Reibschluß, da dann das Zwischenteil ohne besondere Vorkehrungen an jeder beliebigen Stelle blockiert werden kann und keine Einstellarbeiten bei einem Wechsel der Form und einer damit einhergehenden Änderung des Schließweges erforderlich sind. Gemäß Patentanspruch 16 wird für die Herstellung des Reibschlusses einer der beiden Reibschlußpartner hydraulisch mit Druck beaufschlagt. Diese kann der im Druckraum zwischen den beiden Kolben herrschende Druck sein, wobei dann eine fluidische Verbindung zwischen dem Druckraum und einem Beaufschlagungsraum am Reibschlußpartner bestehen muß. Dabei wird also die Klemmkraft vom Elektromotor aufgebracht, so daß kein weiterer Aktuator notwendig ist. Allerdings muß das Zwischenteil anfänglich ortsfest gehalten werden, bis sich im Druckraum ein zur Klemmung notwendiger Druck aufgebaut hat. Dies kann die zwischen dem großen Kolben und dem Zwischenteil eingespannte Feder bewerkstelligen, wenn sie entsprechend stark vorgespannt ist.

Der Druck im Druckraum und damit auch ein Reibschluß bauen sich allerdings erst dann auf, wenn die zu bewegende Maschinenkomponente bis auf einen Anschlag verfahren worden ist. Ist gemäß Patentanspruch 18 in dem Beaufschlagungsraum am einen Reibschlußpartner ein Druck durch Zufuhr von Fremddruckmittel, also von Druckmittel aus einem für die Herstellung des Reibschlusses vorgesehenen hydraulischen Kreislauf, aufbaubar, so kann das Zwischenteil unabhängig von der Position der Maschinenkomponente an jedem Punkt blockiert werden. Dies ist besonders günstig für die Herstellung von Formteilen im sogenannten Spritzprägen, bei dem ein Formteil zunächst bei nicht vollständig geschlossen Formhälften gespritzt und im Anschluß daran durch Zufahren der Formhälften geprägt wird. Ist eine Druckbeaufschlagung des einen Reibschlußpartners durch Zufuhr von Fremddruckmittel vorgesehen, so ist dieser Reibschlußpartner bevorzugt axial ortsfest am Maschinengestell angeordnet, so daß dann, wenn die einzelnen Hydraulikbauteile des hydraulischen Kreislaufs am Gestell befestigt sind, Druckmittel nicht zum Beispiel über einen flexiblen Schlauch zwischen der Hydroeinheit und den Hydraulikbauteilen hin und her fließen muß. Die Befestigt der Hydraulikbauteile am Gestell anstelle einer Befestigung an der Hydroeinheit hat den Vorteil, daß die zu beschleunigende und abzubremsende Masse und damit der Energieeinsatz geringer ist.

in besonders vorteilhafter Weise wird der Reibschluß gemäß Patentanspruch 20 dadurch ermöglicht, daß das Zwischenteil der Hydroeinheit einen Rohrabschnitt aufweist, der zur Herstellung eines Reibschlusses zwischen dem Zwischenteil und einer Wand der Bohrung des ortsfesten Maschinengestells durch Innendruck radial nach außen elastisch dehnbar ist. Dieser elastisch dehnbare Rohrabschnitt kann selbst mit geringem Spiel in der Bohrung geführt sein. Bei niedrigem Innendruck läßt er sich leicht in der Bohrung verschieben, bei hohem Druck klemmt er und kann Axialkräfte übertragen. Zur Übertragung einer solchen Axialkraft ist eine relativ große Wandstärke erforderlich, wodurch einerseits hoher Druck zur Verformung nötig ist und andererseits hohe Spannung im Rohrabschnitt auftritt. Es erscheint deshalb besonders günstig, wenn gemäß Patentanspruch 21 um einen dünnen, elastisch dehnbaren Rohrabschnitt herum einzelne, radial bewegliche Bremsstäbe angeordnet sind, die axial mit geringem Spiel zwischen Anschlägen des Zwischenteils liegen. An der Außenfläche können die Bremsstäbe mit einem Bremsbelag beschichtet sein. Wird der Rohrabschnitt nun mit Innendruck beaufschlagt, so verformt er sich und preßt die Bremsstäbe an die Wand der Bohrung. Durch eine hohe axiale Steifigkeit der Bremsstäbe können schon bei niedrigem Verformungsdruck hohe Axialkräfte übertragen werden.

Besonders vorteilhaft erscheint die Ausgestaltung gemäß Patentanspruch 23, wonach das Zwischenteil einen formstabilen inneren Rohrabschnitt, in dem der große Kolben abgedichtet geführt ist, und einen den inneren Rohrabschnitt unter Bildung eines Freiraums umgebenden äußeren Rohrabschnitt aufweist, der Freiraum mit Druck beaufschlagbar ist und der äußere Rohrabschnitt durch einen im Freiraum anstehenden Druck radial nach außen elastisch dehnbar ist. Dadurch wird dreierlei erreicht. Zum einen kann der Klemmradius und damit auch die Klemmkraft unabhängig von dem Durchmesser des großen Kolbens vorgegeben werden. Zum zweiten hängt die Klemmfläche nicht von der relativen Position von Zwischenteil und großem Kolben zueinander ab. Außerdem wird die Abdichtung des Druckraums zwischen großem Kolben und Zwischenteil nicht beeinflußt.

Gemäß den Patentansprüchen 24 bis 25 ist die Blockierung des Zwischenteils auch durch Keile möglich.

Es ists auch möglich, das Zwischenteil gemäß Patentanspruch 26 durch einen Formschluß mit dem ortsfesten Gestell zu blockieren. Wie ein solcher Formschluß vorteilhaft gestaltet werden kann, ist in den Patentansprüchen 27 und 28 angegeben.

Wenn das Zwischenteil durch den radialen Eingriff von Verriegelungselementen blockiert wird, so sind um den Umfang verteilt mehrere Verriegelungselemente von Vorteil, die jeweils radial bewegt werden müssen und für die eine axiale Einstellbarkeit vorteilhaft ist. Insgesamt ist deshalb der mechanische Aufwand relativ hoch. Günstiger erscheint eine Blockierung des Zwischenteils gemäß Patentanspruch 29 durch einen axialen Anschlag, der entsprechend der Stellbewegung des Zwischenteils bewegbar ist. Die Kraftkette zur axialen Abstützung des Zwischenteils umfaßt dabei einen selbsthemmenden Gewindetrieb. Es ist möglich, gemäß Patentanspruch 30 von einem zweiten Elektromotor bewegen zu lassen. Der Anschlag kann gemäß Patentanspruch 31 durch ein drehend antreibbares Teil des Gewindetriebes gebildet sein, das unmittelbar mit einem mit einem Gewinde versehenen Abschnitt des Zwischenteils in Eingriff ist. Hier kann der Gewindetrieb mit einem entsprechenden Spiel versehen sein, damit er während der Stellbewegung sicher gering belastet bleibt.

Eine besonders bevorzugte Ausbildung enthält auch der Patentanspruch 32, wonach der kleine Kolben der Hydroeinheit als Hohlkolben ausgebildet ist und die vom Elektromotor drehend antreibbare und axial ortsfest angeordnete Gewindespindel eines dem Verfahren des kleinen Kolbens dienenden Gewindetriebs von dem hohlen kleinen Kolben aufgenommen ist. Der kleine Kolben umfaßt eine über den gesamten Hub mit der Gewindespindel in Eingriff stehende, gegen Verdrehen gesicherte Spindelmutter. Bei dieser Ausführung ist der Raum, den die Hydroeinheit in Bewegungsrichtung benötigt, auch für die Gewindespindel nutzbar, so daß eine besonders kurz bauende Antriebsvorrichtung realisierbar ist.

Grundsätzlich ist es denkbar, den kleinen Kolben einseitig geschlossen zu halten, wobei dann eine Endfläche an einem eventuell im Querschnitt gegenüber dem übrigen kleinen Kolben abgesetzten Endteil des kleinen Kolbens oder auch eine Ringfläche an einer Außenstufe des kleinen Kolbens die Wirkfläche sein kann. Dabei könnte der kleine Kolben auch in den als Hohlkolben ausgebildeten großen Kolben eintauchen, um ein möglichst langes Stück der Gewindespindel aufnehmen zu können. Bevorzugt ist jedoch gemäß Patentanspruch 33 der große Kolben als Hohlkolben und der kleine Kolben durchgehend hohl und als Stufenkolben mit einem Abschnitt größeren Außendurchmessers, mit dem er abgedichtet in den Druckraum eintritt, und mit einem Abschnitt kleineren Außendurchmessers, mit dem er in den hohlen großen Kolben eintritt, ausgebildet. Die Differenzfläche zwischen den beiden Abschnitten ist die kleinere Wirkfläche. Der kleine Kolben kann nun relativ kurz sein. Soweit die Gewindespindel über den kleinen Kolben hinausragt, wird sie vom großen Kolben aufgenommen.

Bei einer Ausbildung des kleinen Kolbens als die Gewindespindel umgebender Stufenkolben, der mit der Spindelmutter zusammengebaut ist, kann der Aufbau recht kompliziert und die Montage schwierig sein. In der besonders zweckmäßigen Ausgestaltung gemäß Patentanspruch 34 wird demgegenüber der kleine Kolben durch mehrere außerhalb der Achse der Hydroeinheit angeordnete kleine Kölbchen gebildet, die sich axial an der Spindelmutter abstützen und in Bohrungen des Zylinderbodens eintauchen. Die nur axiale Abstützung der Kölbchen an der Spindelmutter erlaubt die klemmfreie Führung der Kölbchen im Zylinderboden. Die Abdichtung des Druckraums kann gemäß Patentanspruch 35 unabhängig von der Spindelmutter geschehen, wenn der große Kolben mit einem ringförmigen Abschnitt zwischen zwei axiale Wände des Zylinders der Hydroeinheit eintaucht. Im Sinne einer kurzen Bauweise, taucht gemäß Patentanspruch 36 die Spindelmutter in den zentralen Durchgang des Zylinderbodens ein.

Die Temperatur der sich in dem Druckraum befindlichen Druckflüssigkeit ist von der Betriebsdauer, den Zykluszeiten und der Umgebungstemperatur abhängig. Um eine mit einer Temperaturänderung einhergehende Volumenänderung auszugleichen, ist gemäß Patentanspruch 37 der Druckraum der Hydroeinheit mit einem Hydrospeicher verbindbar ist. Während des Aufbaus eines hohen Druckes im Druckraum soll keine Druckflüssigkeit in den Hydrospeicher verdrängbar sein, weil sonst ein großer Weg des kleinen Kolbens notwendig wäre. Um das zu vermeiden, kann der Hydrospeicher gemäß Patentanspruch 38 so ausgebildet sein, daß schon bei einem niedrigen Druck im Bereich von zum Beispiel 5 bis 10 bar sein maximales Aufnahmevermögen erreicht ist. Denkbar ist es jedoch auch, gemäß Patentanspruch 39 in der Fluidverbindung zwischen dem Hydrospeicher und dem Druckraum ein Ventil anzuordnen, durch das die Fluidverbindung sperrbar ist. Das Ventil kann in Abhängigkeit vom Druck im Druckraum oder in Abhängigkeit von der Position der Hydroeinheit, eventuell gemeinsam mit einer elektromagnetisch betätigbaren Schaltkupplung, geschaltet wird.

Eine besonders kurze Bauweise einer erfindungsgemäßen Antriebsvorrichtung wird gemäß Patentanspruch 41 dadurch erhalten, daß der große Kolben als Membrankolben mit einer Membrane ausgebildet ist. Die Membran ist vorteilhafterweise gemäß Patentanspruch 42 federelastisch ausgebildet und stellt zugleich die Koppelungseinrichtung dar, durch die Zwischenteil und großer Kolben für die Stellbewegung lagefest miteinander gekoppelt sind.

Manchmal wird zum Öffnen der Form an einer Kunststoffspritzgießmaschine eine ähnlich große Kraft wie zum Zuhalten benötigt. Bei einer solchen Anforderung ist der Kraftübersetzer einer erfindungsgemäßen Antriebsvorrichtung vorteilhafterweise gemäß Patentanspruch 43 doppeltwirkend ausgebildet, wobei zumindest der große Kolben doppeltwirkend ausgebildet ist. Es können zwei verschiedene kleine Kolben verwendet werden. Grundsätzlich genügt jedoch ein kleiner Kolben, wobei dieser, der große Kolben und das Zwischenteil zusammen zwei voneinander getrennte mit einer Druckflüssigkeit gefüllte und sich auf gegenüberliegenden Seiten der Kolben befindliche geschlossene Druckräume einschließen. Ganz allgemein kann mit einer solchen Antriebsvorrichtung in entgegengesetzte Richtungen nicht nur schnell gefahren, sondern auch eine große Kraft ausgeübt werden. Ein Zyklus kann zum Beispiel folgendermaßen aussehen: Schnell in die eine Richtung fahren, in dieselbe Richtung zuhalten, schnell in die entgegengesetzte Richtung fahren, in die entgegengesetzte Richtung zuhalten.

Vorteilhafte Ausgestaltungen einer doppeltwirkenden erfindungsgemäßen Antriebsvorrichtung finden sich in den Patentansprüchen 44 bis 46.

Damit die Gewindespindel, wenn sie drehend angetrieben wird, mit ihrem einen Ende keine Taumelbewegung vollführt, ist sie zweckmäßigerweise an dem Ende drehbar gelagert. Ist allerdings die Gewindespindel axial ortsfest das Lagerteil der große Kolben, der sich relativ zur Gewindespindel bewegt, so kann sich der Achsversatz zwischen Gewindespindel und Lagerteil während eines Arbeitszyklus ändern, so daß bei einem radial festen Lager die Gewindespindel starken wechselnden Biegekräften ausgesetzt wäre und schwergängig werden könnte. Deshalb ist gemäß Patentanspruch 47 vorgesehen daß das eine Ende der Gewindespindel in einem Radiallager gelagert ist, das, wenn eine Radialkraft eine Grenzkraft überschreitet, gegenüber einer der Längsführung der Gewindespindel dienenden Führungsbuchse radial verstellbar ist.

Wenn die Kupplungseinrichtung zwischen dem kleinen Kolben und dem einen anderen Teil des Kraftübersetzers hydraulisch funktioniert, ist es günstig, wenn gemäß Patentanspruch 48 für die Stellbewegung der Kupplungsraum mit einem aufgeladenen Hochdruckspeicher verbindbar ist. Die Druckflüssigkeit im Kupplungsraum kann dann ohne Bewegung des kleinen Kolbens schon auf einen solchen Druck vorgespannt werden, daß das andere Teil der Bewegung des kleinen Kolbens unmittelbar folgt. Gemäß Patentanspruch 49 wird nach dem Ende einer Stellbewegung der Kupplungsraum vorteilhafterweise mit einem Niederdruckspeicher, also einem Hydrospeicher mit niedrigem Druck, verbunden, damit während der Wirksamkeit der Kraftübersetzung keine zusätzliche Arbeit für das Verdrängen von Druckflüssigkeit in den Hochdruckspeicher geleistet werden muß. Wenn der Kupplungsraum während eines Arbeitszyklus abwechselnd mit dem Hochdruckspeicher und mit dem Niederdruckspeicher oder einem während eines Zeitabschnitts eines Arbeitszyklus zum Niederdruckspeicher entlasteten Raum verbunden wird, so gelangt aufgrund der Kompressibilität der Druckflüssigkeit jeweils eine geringe Menge Druckflüssigkeit vom Hochdruckspeicher in den Niederdruckspeicher.

Ist der Kraftübersetzer doppeltwirkend ausgebildet, so erscheint die Ausgestaltung gemäß Patentanspruch 50 besonders vorteilhaft. Es wird beim Druckaufbau in die eine Richtung der erste Kolbenabschnitt nicht mitgenommen, so daß sich die erste kleine Druckkammer in ihrem Volumen nicht weiter vergrößert und auch ohne besondere Maßnahmen darin kein Unterdruck entsteht.

Mehrere Ausführungsbeispiele einer erfindungsgemäßen Antriebsvorrichtung sind in den Zeichnungen dargestellt. An Hand dieser Zeichnungen wird die Erfindung nun näher erläutert.

Es zeigen
- Figur 1: ein erstes Ausführungsbeispiel, bei dem das Antriebselement von einem Rotationselektromotor über eine Hubspindel angetrieben wird und das Zwischenteil des Kraftübersetzers durch radiale Aufweitung durch Reibschluß blockierbar ist,
- Figur 1a: eine Variante des ersten Ausführungsbeispiels, wobei eine Rückholplatte am großen Kolben und nicht am Zwischenteil des Kraftübersetzers angreift,
- Figur 2: ein zweites Ausführungsbeispiel, bei dem das Zwischenteil des Kraftübersetzers durch verschwenkbare Riegel durch Formschluß blockierbar ist,
- Figur 3: ein drittes Ausführungsbeispiel, bei dem das Zwischenteil des Kraftübersetzers durch eine Art Lamellenbremse wiederum durch Reibschluß blockierbar ist,
- Figur 4: ein viertes Ausführungsbeispiel, bei dem die Druckflüssigkeit durch einen Kühlkanal gekühlt wird,
- Figur 5: ein fünftes Ausführungsbeispiel, das weitgehend gleich dem ersten Ausführungsbeispiel ist, bei sich jedoch zwischen dem Antriebselement und dem Zwischenteil des Kraftübersetzers eine Schaltkupplung befindet,
- Figur 6: ein sechstes Ausführungsbeispiel, bei dem das Zwischenteil außer einem Führungsrohr für den großen Kolben auf einem größeren Durchmesser ein radial aufweitbares Klemmrohr besitzt.
- Figur 7: ein siebtes Ausführungsbeispiel wiederum mit einem vom Führungsrohr getrennten Klemmrohr, das gegenüber dem Klemmrohr des sechsten Ausführungsbeispiels sehr dünn ist und im entspannten Zustand auf dem Führungsrohr aufliegt,
- Figur 8: ein achtes Ausführungsbeispiel, bei dem das Zwischenteil des Kraftübersetzers durch Keile in einer Bohrung eines Maschinenteils verklemmbar ist,
- Figur 9: ein neuntes Ausführungsbeispiel, bei dem das Zwischenteil des Kraftübersetzers durch Keile an Holmen einer Maschine verklemmbar ist, wobei die Keile mit dem Druck im Druckraum beaufschlagbar sind,
- Figur 10: ein zehntes Ausführungsbeispiel, bei dem das Zwischenteil des Kraftübersetzers wie beim neunten Ausführungsbeispiel durch Keile an Holmen einer Maschine verklemmbar ist, bei dem die Keile jedoch durch Fremddruck beaufschlagbar sind,
- Figur 11: ein elftes Ausführungsbeispiel, bei dem das Zwischenteil des Kraftübersetzers durch ein eingeschlossenes die Druckflüssigkeitsvolumen unmittelbar hydraulisch blockierbar ist,
- Figur 11a: eine Variante des elften Ausführungsbeispiel hinsichtlich des Druckmittelvorratsbehälters,
- Figur 12: ein zwölftes Ausführungsbeispiel, bei dem das Zwischenteil des Kraftübersetzers durch einen nachgefahrenen axialen Anschlag blockierbar ist,
- Figur 13: ein dreizehntes Ausführungsbeispiel, bei dem wie beim zwölften Ausführungsbeispiel das Zwischenteil des Kraftübersetzers durch einen nach gefahrenen axialen Anschlag blockierbar, wobei der Anschlag durch einen zweiten Elektromotor bewegbar ist,
- Figur 14: ein vierzehntes Ausführungsbeispiel, bei dem das Zwischenteil durch ein von einem zweiten Elektromotor drehbares Gewindeteil blockierbar ist,
- Figur 15: ein fünfzehntes Ausführungsbeispiel, bei dem Führungsrohr und Klemmrohr wiederum getrennt sind und bei dem zum Steuern des Kraftübersetzers der kleine Kolben und der große Kolben über eine hydraulische Grenzlastkupplung miteinander gekoppelt sind,
- Figur 16: ein sechszehntes Ausführungsbeispiel, bei dem das Klemmrohr von einzelnen Bremsstäben umgeben ist und bei dem zum Steuern des Kraftübersetzers der kleine Kolben und der große Kolben über eine elektromagnetische Schaltkupplung miteinander koppelbar sind,

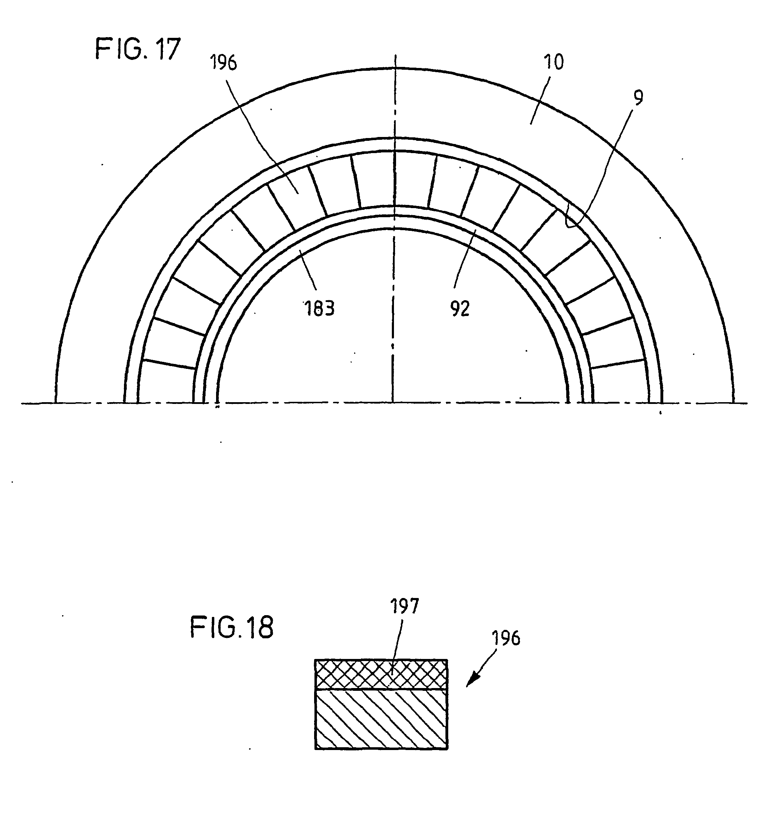

- Figur 17: eine Ansicht in axialer Richtung auf das Klemmrohr und die es umgebenden Bremsstäbe aus Figur 16,
- Figur 18: einen Querschnitt durch einen einzelnen Bremsstab,
- Figur 19: ein siebzehntes Ausführungsbeispiel, bei dem das Zwischenteil des Kraftübersetzers über am Gestell gehaltene und mit Fremddruckmittel beaufschlagbare Bremsbacken blockierbar ist,
- Figur 20: ein achtzehntes Ausführungsbeispiel, das ähnlich dem sechszehnten Ausführungsbeispiel aufgebaut ist, bei dem jedoch das Klemmrohr innen mit einem Fremddruckmittel beaufschlagbar ist, und
- Figur 21: ein neunzehntes Ausführungsbeispiel, bei dem sowohl der kleine Kolben als auch der große Kolben der Hydroeinheit als Hohlkolben ausgebildet sind und die vom Elektromotor drehend angetriebene Gewindespindel eines Gewindetriebes zum Verfahren des kleinen Kolbens aufnehmen.
- Figur 22: ein zwanzigstes Ausführungsbeispiel, das ähnlich wie das neunzehnte Ausführungsbeispiel aufgebaut ist, bei dem jedoch der kleine Kolben durch mehrere kleine Kölbchen gebildet ist und bei dem der Druckraum an einen Kolbenspeicher angeschlossen ist, dessen Aufnahmekapazität bei geringem Druck erschöpft ist,
- Figur 23: eine besondere Lagerung des einen Endes der Gewindespindel aus Figur 22,
- Figur 24: ein einundzwanzigstes Ausführungsbeispiel, das ähnlich wie das sechszehnte Ausführungsbeispiel aufgebaut ist, bei dem jedoch eine Fluidverbindung zwischen dem Druckraum und einem Hydrospeicher über ein Wegeventil steuerbar ist,
- Figur 25: ein zweiundzwanzigstes Ausführungsbeispiel, bei dem der kleine Kolben durch mehrere kleine Kölbchen und der große Kolben durch einen Membrankolben gebildet ist,
- Figur 26: ein dreiundzwanzigstes Ausführungsbeispiel, das einen doppeltwirkend den hydraulischen Kraftübersetzer aufweist,
- Figur 27: eine Variante des zwanzigsten Ausführungsbeispiels, die zusätzlich mit einer Antriebsvorrichtung für einen Auswerfer ausgestattet ist.
- Figur 28: eine weitere Variante des zwanzigsten Ausführungsbeispiel mit einer Antriebsvorrichtung für mehrere Auswerfer,
- Figur 29: eine Ansicht der Antriebsvorrichtung für den Auswerfer nach Figur 28 in Achsrichtung,
- Figur 30: eine weitere Variante des zwanzigsten Ausführungsbeispiels mit einer anderen Antriebsvorrichtung für mehrere Auswerfer und
- Figur 31: einen Schnitt entlang der Linie D-D aus Figur 30.
- Figur 32: das vierundzwanzigste Ausführungsbeispiel, bei dem wie beim Ausführungsbeispiel nach Figur 15 der kleine Kolben und der große Kolben hydraulisch miteinander koppelbar sind und der kleine Kolben wie beim Ausführungsbeispiel nach Figur 16 eine Ringfläche als Wirkfläche für die Kraftübersetzung aufweist,
- Figur 33: das fünfundzwanzigste Ausführungsbeispiel , bei dem der kleine Kolben mit dem Zwischenteil der Hydroeinheit hydraulisch koppelbar ist,
- Figur 34: das sechsundzwanzigste Ausführungsbeispiel, bei dem der kleine Kolben ebenfalls mit dem Zwischenteil des Kraftübersetzers koppelbar ist und der Kraftübersetzer doppeltwirkend ausgebildet ist,
- Figur 35: das siebenundzwanzigste Ausführungsbeispiel, das ähnlich wie dasjenige nach Figur 34 aufgebaut ist, bei dem jedoch der Kupplungsraum zwischen dem kleinen Kolben und dem Zwischenteil zugleich auch Teilraum eines Druckraums des Kraftübersetzers ist.

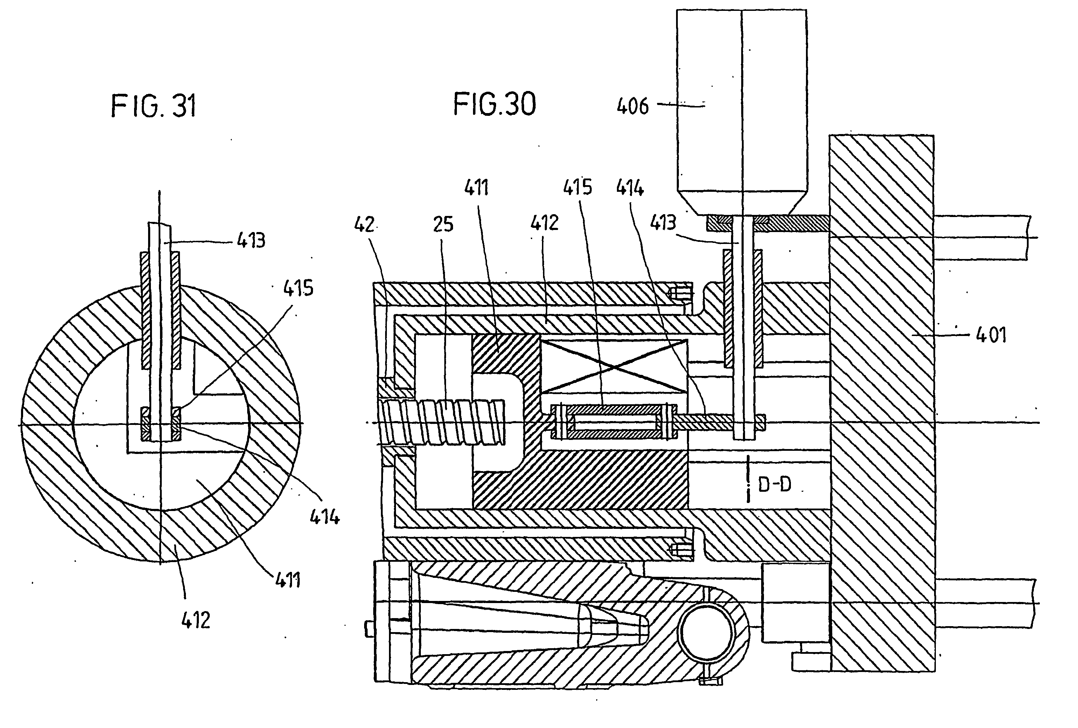

Figur 31 einen Schnitt entlang der Linie D-D aus Figur 30.

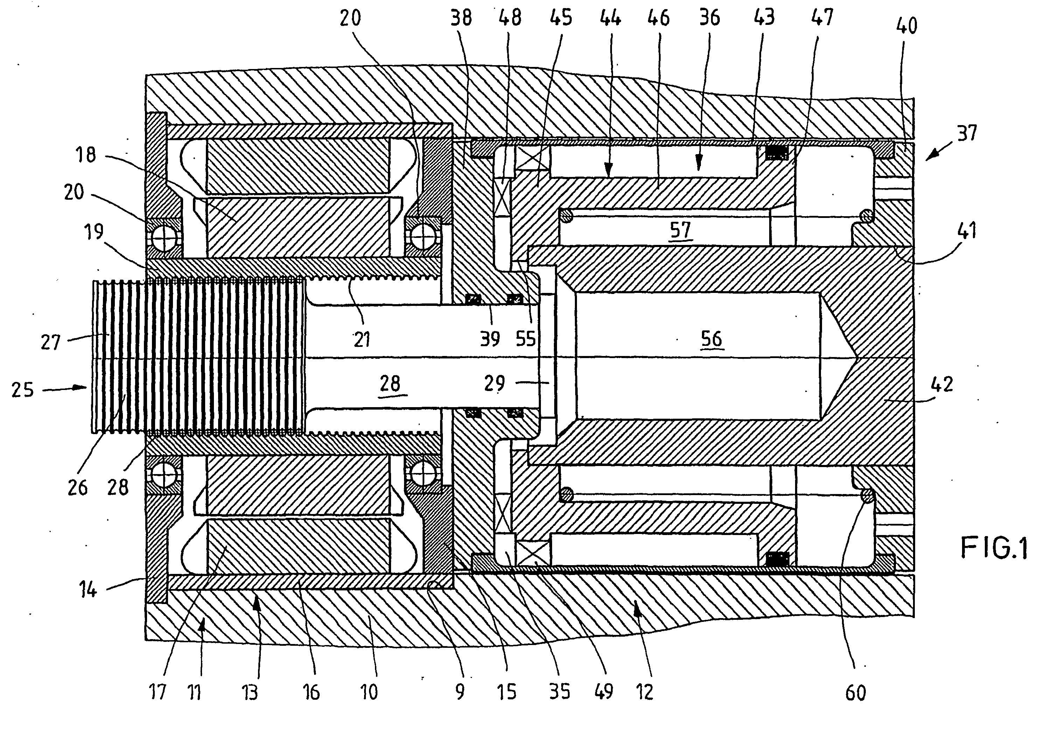

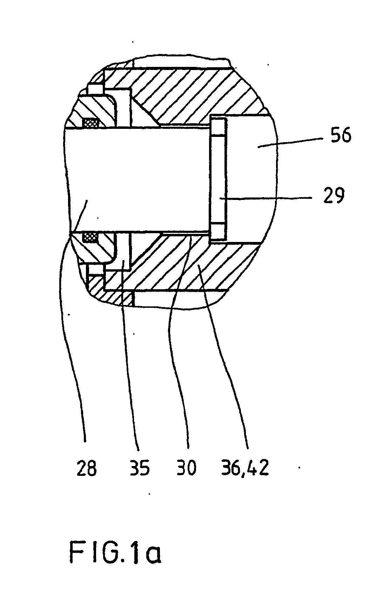

Gemäß Figur 1 sind von einer gestuften Bohrung 9 eines Maschinengestells 10 ein Elektromotor 11 und ein im Querschnitt außen kreiszylindrischer hydraulischer Kraftübersetzer 12 aufgenommen. Ein Gehäuse 13 des Elektromotors 11 setzt sich im wesentlichen aus zwei Lagerschilden 14 und 15 und einem Gehäusemantel 16 zusammen. An diesem sitzt innen der Stator 17 des Elektromotors. Der Rotor 18 des Elektromotors sitzt auf einer hohlen Antriebswelle 19, die in zwei in den Lagerschilden 14 und 15 gehaltenen Wälzlagern 20 drehbar gelagert ist und in die innen ein Kugelgewinde 21 eingeformt ist.

Innerhalb der hohlen Antriebswelle 19 befindet sich eine gegen Verdrehen gesicherte Hubspindel 25, die einen ersten Abschnitt 26 aufweist, der die eigentliche Hubspindel darstellt, der einen Durchmesser hat, der in etwa gleich dem Innendurchmesser der Antriebswelle 19 ist und der außen mit einem Kugelgewinde 27 versehen ist. Zwischen diesem und dem Kugelgewinde 21 der Antriebswelle 19 befinden sich Kugeln 28, über die Antriebswelle 19 und Hubspindel 25 miteinander gekoppelt sind. Die Hubspindel 25 weist einen zweiten Abschnitt 28 auf, der kreiszylindrische Form hat und im Durchmesser kleiner als der erste Abschnitt 26 ist. Am freien Ende des Abschnitts 28 ist eine Rückholscheibe 29 befestigt.

Der zweite Abschnitt 28 der Hubspindel 25 stellt ein Teil des hydraulischen Kraftübersetzers 12 dar. Und zwar ist er der kleine Kolben mit der kleineren Wirkfläche und taucht plungerartig in einen mit einer Hydraulikflüssigkeit gefüllten Druckraum 35 des hydraulischen Kraftübersetzers 12 ein. Dieser weist außerdem noch einen großen Kolben 36 mit einer großen Wirkfläche sowie ein Zwischenteil 37 auf, das bei Ausnutzung der Kraftübersetzung in Ruhe ist und bei allen gezeigten Ausführungsbeispielen ein den großen Kolben 36 aufnehmender Zylinder ist. Dieser setzt sich bei dem Ausführungsbeispiel nach Figur 1 zusammen aus einem ersten stirnseitigen Flansch 38 mit einer zentralen Öffnung 39, deren Durchmesser dem Durchmesser des kleinen Kolbens 28 entspricht und durch die hindurch der Kolben 28 abgedichtet in den Druckraum 35 eintritt. Die Rückholscheibe 29 ist innerhalb des Druckraums 35 an der Stimseite des Kolbens 28 befestigt. Ein zweiter stimseitiger Flansch 40 des Zylinders 37 hat ebenfalls eine zentrale Öffnung 41. Deren Durchmesser ist größer als der Durchmesser der Öffnung 39 im Flansch 38. In der Öffnung 41 befindet sich eine Kolbenstange 42 des großen Kolbens 36. Zwischen den beiden Flanschen 38 und 40 und dicht mit diesen verbunden, erstreckt sich der rohrförmige Zylindermantel 43, der bis auf zwei der Befestigung an den Flanschen dienenden ringförmigen nach innen gerichteten Verdickungen an seinen Enden so dünnwandig ausgebildet ist, daß er durch einen Innendruck elastisch nach außen gedehnt werden kann. Zwischen dem Mantel und der Bohrung 9, die im Bereich des Elektromotors einen etwas größeren Durchmesser als im Bereich des Kraftübersetzers 12 hat, besteht, wenn der Zylindermantel 43 nicht gedehnt ist, ein geringfügiges Spiel.

Der große Kolben 36 ist im wesentlich zweistückig ausgebildet und besitzt ein topfförmiges Außenteil 44 mit einem Boden 45 und mit einem Mantel 46, der sich vom Boden 45 aus in einem radialen Abstand zu dem Zylindermantel 43 in Richtung auf den Flansch 40 des Zylinders 37 zu erstreckt und an seinem freien Ende einen Außenflansch 47 besitzt, an dem großer Kolben 36 und Zylinder 37 an einer Stelle 50 aneinander geführt und gegeneinander abgedichtet sind. Eine weitere Führung 49 zwischen dem Kolben 36 und dem Zylinder 37 befindet sich im Bereich des Bodens 45. Diese Führung 49 ist abschnittsweise unterbrochen, so daß der Raum außerhalb des Mantels 46 des Topfes 44 frei mit dem Raum zwischen dem Boden 45 des Topfes 44 und dem Flansch 38 verbunden ist. Darüber hinaus sind Abstandshalter 48 zwischen dem Boden 45 und dem Flansch 38 des Zylinders 37 vorhanden, so daß der Boden 45 nicht platt am Flansch 38 anliegen kann und eine freie Verbindung aller Freiräume zwischen dem Flansch 38 und dem großen Kolben 36 gegeben ist, die den Druckraum 35 bilden.

Im Boden 45 des Außenteils 44 des großen Kolbens 36 befindet sich eine zentrale Öffnung 55, in der die Kolbenstange 42 befestigt ist. Der kleine Kolben 28 kann mitsamt der Rückholscheibe 29 in eine zu ihm hin offene Sackbohrung 56 der Kolbenstange 42 eintauchen.

Der Außendurchmesser der Kolbenstange 42 ist kleiner als der Innendurchmesser des Mantels 46 des Außenteils 44, so daß eine Ringnut 57 im Kolben 36 entstanden ist, die zum Flansch 40 des Zylinders 37 hin offen ist und die eine Schraubendruckfeder 60 aufnimmt, die zwischen dem Boden 45 des Kolbens 36 und dem Flansch 40 des Zylinders 37 eingespannt ist, die also diese beiden Teile in einem solchen Sinne belastet, daß der Kolben 36 über die Abstandshalter 48 am Flansch 38 des Zylinders 37 anliegt. Bei Anlage ist die Schraubendruckfeder 60 derart gespannt, daß sie die für die Stellbewegung der Formaufspannplatte einer Kunststoffspritzgießmaschine notwendige Kraft ohne Erhöhung der Vorspannung übertragen kann.

Der Druckraum 35 einschließlich der Sackbohrung 56 ist mit einer Druckflüssigkeit, und zwar mit einem Silikonöl gefüllt, das eine gute Wärmebeständigkeit hat und wesentlich langsamer altert als ein Mineralöl. Der Raum zwischen dem Flansch 40 und dem Kolben 36 ist über Bohrungen im Flansch 40 zur Atmosphäre offen.

In der Figur 1 ist die Antriebsvorrichtung in einem Zustand gezeigt, in dem die Form einer Kunststoffspritzgießmaschine ganz geöffnet ist. Die Rückholplatte 29 des kleinen Kolbens 28 und der große Kolben 36 liegen am Flansch 38 des Zylinders 37 an. Der Druck im Druckraum 35 ist also kleiner als das Druckäquivalent zu der Schraubendruckfeder 60. Er ist jedoch größer als der Druck, der notwendig ist, um die für die Stellbewegung der Formaufspannplatte notwendige Kraft zu übertragen.

Soll nun die Form geschlossen werden, so wird der Elektromotor so angesteuert, daß sich sein Rotor in eine Richtung dreht, durch die eine Axialbewegung der Hubspindel 25, nach Figur 1 betrachtet, nach rechts bewirkt wird. Da der Druck im Druckraum 35 genügend hoch ist, folgt der große Kolben 36 unmittelbar der Bewegung des kleinen Kolbens 28 und nimmt über die Schraubendruckfeder 60 auch den Zylinder 37 mit. Schließlich ist die Form geschlossen, so daß der weiteren Bewegung des großen Kolbens 36 ein hoher Widerstand entgegensteht. Die Hubspindel wird weiter bewegt, so daß der kleine Kolben 28 tiefer in den Druckraum 35 eintaucht. Dadurch steigt der Druck im Druckraum 35 an, wobei zunächst noch die entsprechend stark vorgespannte Schraubendruckfeder 60 verhindert, daß der Zylinder 37 nach links ausweicht. Durch weiteren Druckanstieg wird schließlich der Zylindermantel 43 so geweitet, daß er sich innen an die Wand der Bohrung 9 anlegt. Dadurch wird der Zylinder 37 durch Klemmung, also durch Reibschluß, in seiner Position gehalten, auch wenn dies die Schraubendruckfeder 60 allein nicht mehr bewirken kann. Die Form wird nun mit einer hohen Schließkraft zugehalten, die sich aus dem Produkt des Drucks im Druckraum 35 und der Wirkfläche des großen Kolbens 36 abzüglich der Kraft der Schraubendruckfeder 60 ergibt. Die Reaktionskraft auf die Hubspindel 25 dagegen ist durch das Produkt aus dem Druck im Druckraum 35 und der wesentlich kleineren Wirkfläche des kleinen Kolbens 28 bestimmt. Die Belastung des Kugelgewindetriebes ist deshalb gering.

Zum Öffnen der Form wird der Elektromotor 11 in entgegengesetzte Richtung angetrieben. Die Hubspindel 25 wandert nach links und nimmt schließlich über die Rückholplatte 29, den Zylinder 37, die Schraubendruckfeder 60 und den großen Kolben 36 die Formaufspannplatte mit der daran befestigten Formhälfte mit.

Bei der in Figur 1 gezeigten Ausführung greift die Rückholplatte 29 am Flansch 38 des Zylinders 37 an. Denkbar ist es auch, daß gemäß einer in Figur 1a gezeigten Variante der Ausführung nach Figur 1 die Rückholplatte 29 eine Schulter 30 am Kolben 36 hintergreift und der Rückzug der Formaufspannplatte von der Hubspindel 25 aus direkt über den großen Kolben 36 geschieht. Von Vorteil ist dabei, daß die Formaufspannplatte beim Schließen der Form direkt über die Hubspindel 25 und den großen Kolben 36 und nicht über die Schraubendruckfeder 60 abgebremst werden kann. Gemäß Figur 1a ist die Rückholplatte 29 gegenüberliegend abgeflacht. Die Schulter 30 besteht nur aus zwei gegenüberliegenden einzelnen Vorsprüngen, zwischen denen der Innenradius der Kolbenstange 42 gleich dem Radius der Sackbohrung 56 ist. Die Lücken zwischen den beiden Vorsprüngen sind so groß, daß der große Kolben 36 und der kleine Kolben 28 bajonettartig ineinandergesteckt und voneinander gelöst werden können. Da die beiden Kolben 28 und 36 im betriebsbereiten Zustand gegen Verdrehen gesichert sind, können sie sich nicht voneinander lösen. Über die Abflachungen an der Rückholscheibe 29 und die Lücken zwischen den Vorsprüngen 30 besteht eine freie fluidische Verbindung zwischen der Sackbohrung 56 und den übrigen Teilen des Druckraums 35.

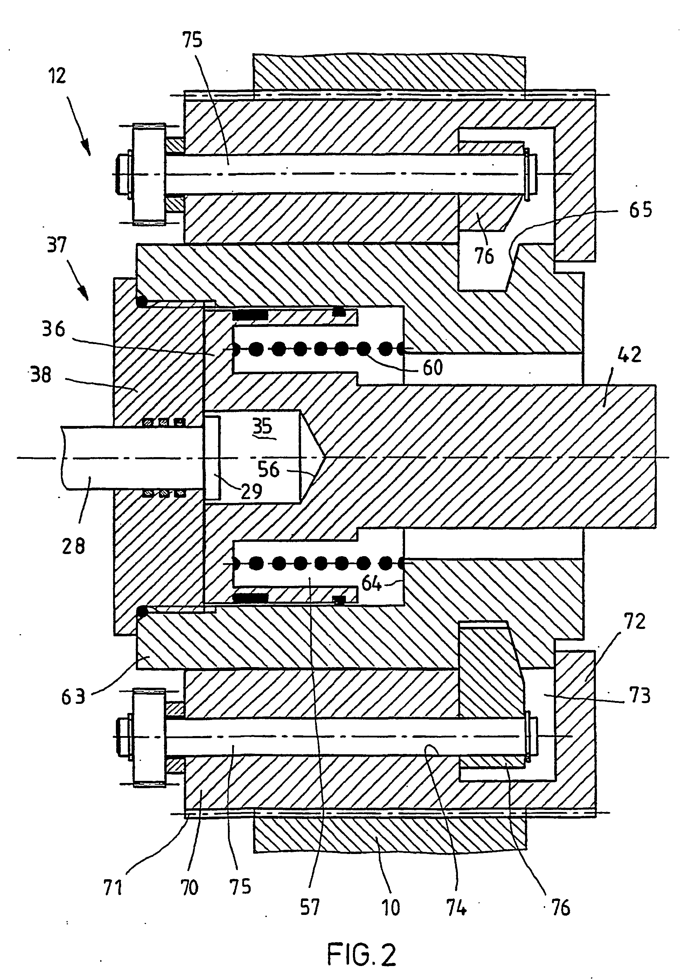

Vom in Figur 2 dargestellten Ausführungsbeispiel ist im wesentlichen nur die Hydroeinheit 12 gezeigt. Diese hat wiederum einen Zylinder 37, einen großen Kolben 36 und einen kleinen Kolben 28 mit einer Rückholplatte 29, die einen stirnseitigen Flansch 38 des Zylinders 37 hintergreift. Dieser ist bei dem Ausführungsbeispiel nach Figur 2 nur zweiteilig ausgebildet und besitzt außer dem Flansch 38 einen formstabilen Mantel 63, mit dem der Flansch 38 verschraubt ist und der im Abstand zu dem Flansch 38 eine Innenschulter 64 aufweist, an der sich die auch beim zweiten Ausführungsbeispiel vorhandene Schraubendruckfeder 60 abstützt und die als Wegbegrenzung für den großen Kolben 36 dient. Hinter der Innenschulter 64 läuft außen um den Mantel 63 eine Ringnut 65 herum. Der große Kolben 36 ist ähnlich wie derselbe Kolben der ersten Ausführung aufgebaut und besitzt eine Sackbohrung 56, die Teil des Druckraums 35 ist, eine Ringnut 57, die die Schraubendruckfeder 60 aufnimmt und eine Kolbenstange 42, die innerhalb der Schulter 64 frei nach außen tritt. Der Raum, in dem sich die Schraubendruckfeder 60 befindet, ist genauso wie bei der Ausführung nach Figur 1 mit Atmosphäre verbunden.

Der Zylinder 37 ist axial in einem Ring 70 geführt, der mit einem Außengewinde 71 mit einem Innengewinde des Maschinengestells 10 zusammenwirkt. Am einen Ende greift der Ring 70 mit einem Anschlag 72 über den Außendurchmesser des Zylinders 37 nach innen und begrenzt damit den Weg des Zylinders 37 in die eine Richtung. Vor dem Anschlag 72 ist in den Ring 70 eine nach innen offene Ringnut 73 eingebracht. Zwischen dem anderen Ende des Rings 70 und der Ringnut 73 verlaufen in gleichen Winkelabständen zueinander mehrere Axialbohrungen 74, durch die Bolzen 75 gesteckt sind, von denen jeder am einen Ende in der Ringnut 73 ein Verriegelungselement 76 trägt. Durch Angriff am anderen Ende können die Bolzen 75 verdreht werden. Die Bolzen 75 können eine Drehlage einnehmen, in der die Verriegelungselemente 76 nicht in die Nut 65 des Zylinders 37 eingreifen. Dies ist in Figur 2 oben gezeigt. Der Zylinder 37 ist dann innerhalb seines Hubbereichs frei bewegbar. Wenn der Zylinder 37 an dem Anschlag 72 des Rings 70 anliegt, können die Verriegelungselemente 76 durch Drehen der Bolzen 75 in die Ringnut 65 eingeschwenkt werden. Der Zylinder 37 des hydraulischen Kraftübersetzers 12 ist dann gegen eine Bewegung formschlüssig blockiert. Die Funktion des Ausführungsbeispiels nach Figur 2 ist gleich derjenigen des Ausführungsbeispiels nach Figur 1. Allerdings ist nun nicht in jeder Lage eine Blockierung des Zylinders 37 möglich. Um die Blockierposition des Zylinders 37 mit einer bestimmten Schließposition der Formaufspannplatte in Übereinstimmung zu bringen, wird der Ring 70 im Maschinengestell 10 verdreht und dadurch der Anschlag 72 und die Verriegelungselemente 76 axial verstellt.

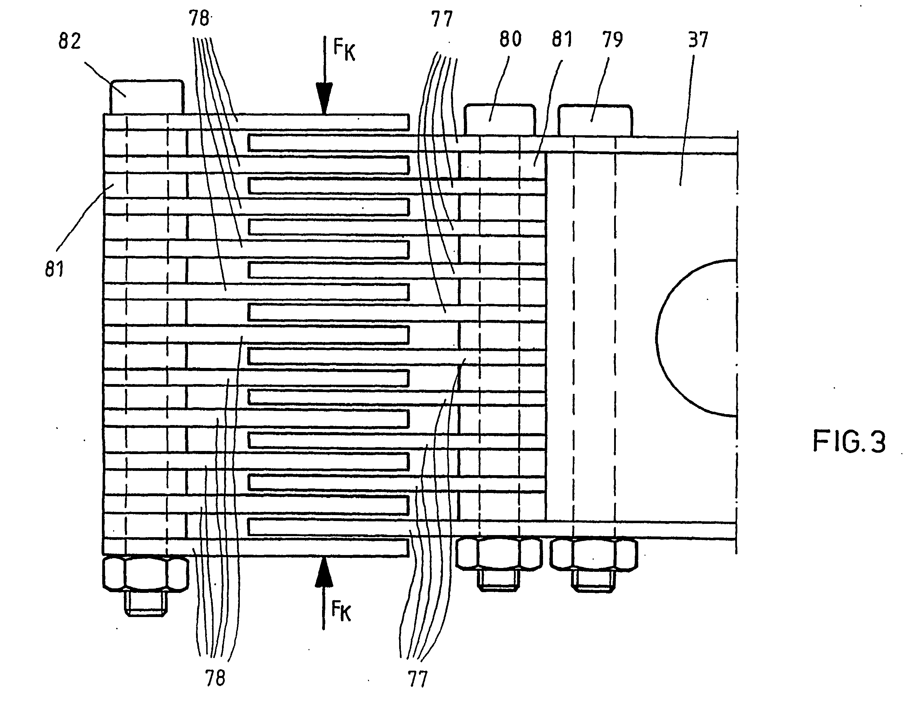

Bei dem Ausführungsbeispiel nach Figur 3 ist der Zylinder 37 wiederum durch Reibschluß und damit in jeder beliebigen Lage blockierbar. Die Blockiervorrichtung ist dabei jedoch gegenüber der Ausführung nach Figur 1 so ausgebildet, daß sehr hohen Reaktionskräften standgehalten werden kann. Die Blockiervorrichtung besteht dabei aus zwei Stapeln von Blechen 77 und 78 und einem oder mehreren nicht näher dargestellten Aktuatoren. Die zwei äußersten Bleche 77 sind über Schrauben 79, von denen in Figur 3 nur eine gezeigt ist, an Außenflächen des Zylinders 37 befestigt. Die anderen Bleche 77 sind durch außerhalb des Zylinders 37 verlaufende und auch durch die beiden äußersten Bleche hindurchgehende Schrauben 80 am Zylinder gehalten, wobei zwischen zwei Blechen jeweils ein Abstandhalter 81 angeordnet ist. Der Stapel der Bleche 78 ist fest mit dem nicht näher dargestellten Maschinengestell verbunden und über Schrauben 82 zusammengehalten, wobei auch hier zwischen zwei Blechen jeweils ein Abstandshalter 81 angeordnet ist. Die zwei Blechstapel greifen ineinander und können durch die Aktuatoren wie die Lamellen einer Lamellenbremse aneinander gedrückt werden. Auf diese Weise ist eine reibschlüssige Blockierung des Zylinders 37 auch gegen hohe angreifende Kräfte möglich.

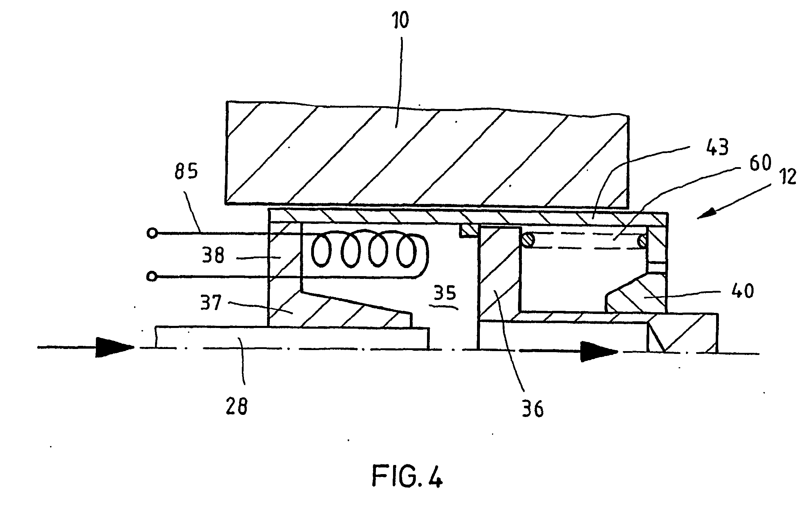

Die Ausführung nach Figur 4, in der nur eine Hälfte des hydraulischen Kraftübersetzers dieser Ausführung gezeigt ist, entspricht weitgehend derjenigen nach Figur 1. Der hydraulische Kraftübersetzer 12 besitzt wiederum einen kleinen Kolben 28, der von einem Elektromotor über einen Spindelantrieb axial verfahrbar ist, einen großen Kolben 36 und einen Zylinder 37. Der Zylinder weist einen Flansch 38, einen Flansch 40 und einen Zylindermantel 43 auf, der durch einen Innendruck aufgeweitet und an eine Wand des Maschinengestells 10 gedrückt werden kann. Zwischen Kolben 36 und Zylinder 37 ist wiederum eine Schraubendruckfeder 60 eingespannt, wobei sich nun die Abdichtung zwischen dem Zylindermantel 43 und dem Kolben 36 vor dem kolbenseitigen Ende der Druckfeder 60 befindet und der Kraftübersetzer dementsprechend länger als bei der Ausführung nach Figur 1 baut. Der Raum, in dem sich die Druckfeder 60 befindet, ist wiederum mit Atmosphäre verbunden. Der Druckraum 35 ist mit einer Druckflüssigkeit gefüllt. Damit aus dieser Wärme abgeführt werden kann, führt durch den Druckraum 35 eine Kühlschlange 85, durch die kaltes Wasser hindurchgeleitet werden kann.

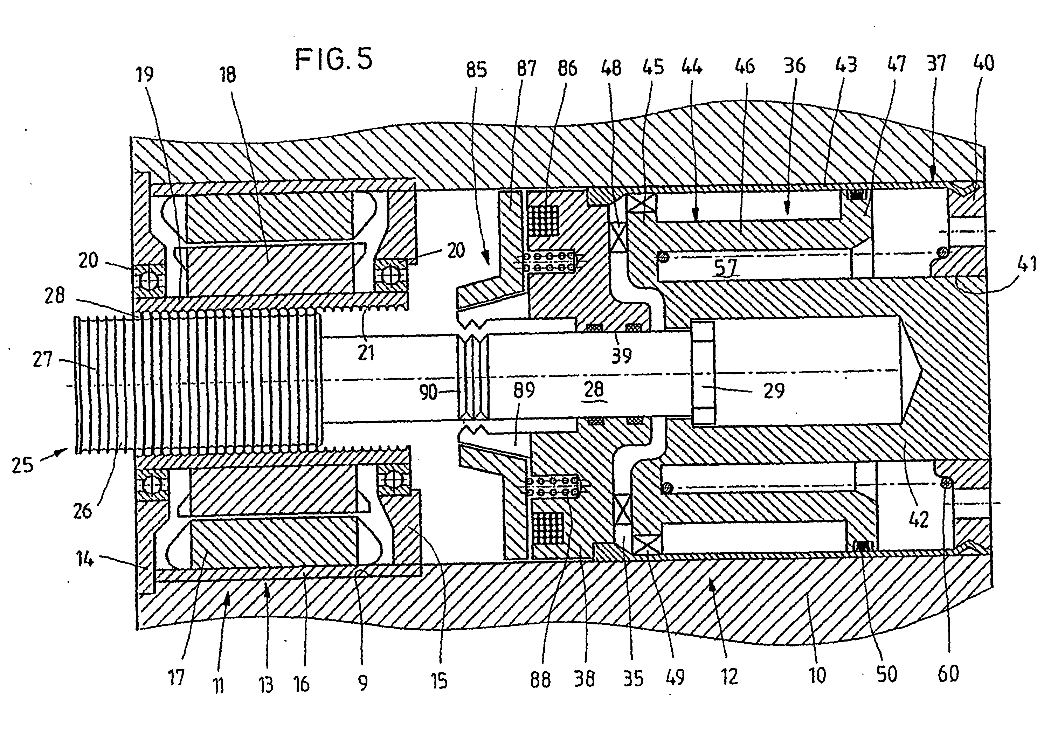

Das Ausführungsbeispiel nach Figur 5 ist weitgehend wie das Ausführungsbeispiel nach Figur 1 in seiner Variante nach Figur 1a aufgebaut. Gleiche Teile sind deshalb mit den gleichen Bezugszahlen wie in Figur 1 versehen, ohne daß hier näher darauf eingegangen sei. Im folgenden seien nur die Unterschiede betrachtet.

Nach Figur 5 ist der große Kolben des fünften Ausführungsbeispiels aus einem einzigen Stück gefertigt.

Der Abstand zwischen dem Elektromotor 11 und dem Boden 38 des Zylinders 37 ist gegenüber dem Ausführungsbeispiel nach Figur 1 vergrößert. Dementsprechend ist der zweite Abschnitt 28 der Hubspindel 25 verlängert. In dem zwischen dem Elektromotor 11 und dem Zylinder 37 geschaffenen Raum ist eine Schaltkupplung 85 angeordnet, über die die Hubspindel 25 unmittelbar mit dem Zylinder 37 gekoppelt werden kann. Die Kupplung wird elektromagnetisch betätigt, wobei eine elektrische Wicklung 86 in einer axial offenen Nut des Bodens 38 des Zylinders 37 aufgenommen ist. Wenn die Wicklung nicht bestromt ist, wird ein Flachanker 87 durch Federn 88 in einem Abstand zum Boden 38 gehalten. Am Boden 38 sind um den Abschnitt 28 der Hubspindel 25 herum mehrere elastisch verformbare Haken 89 befestigt, die durch eine Bewegung des Flachankers 87 auf den Boden 38 zu nach innen gebogen werden und in Ringnuten 90 der Hubspindel 25 eingreifen. Durch Bestromung der Wicklung 86 wird also die Kupplung wirksam.

Bei dem Ausführungsbeispiel nach Figur 5 bietet die Schaltkupplung 85 die Möglichkeit, die Hydroeinheit 12 und die am Kolben 36 befestigte bewegliche Formaufspannplatte einer Kunststoffspritzgießmaschine durch eine sehr hohe Kraft, die über die durch die Feder 60 übertragbare Kraft hinausgeht, sehr stark zu beschleunigen. Wenn die Form geschlossen ist, wird die Kupplung 85 gelöst. Die Hubspindel 25 wird weiter bewegt, so daß der kleine Kolben 28 tiefer in den Druckraum 35 eintaucht. Dadurch steigt der Druck im Druckraum 35 an, wobei zunächst noch die gleich stark wie beim ersten Ausführungsbeispiel vorgespannte Schraubendruckfeder 60 verhindert, daß der Zylinder 37 nach links ausweicht. Durch weiteren Druckanstieg wird schließlich der Zylindermantel 43 so geweitet, daß er sich innen an die Wand der Bohrung 9 anlegt.

Zum Öffnen der Form wird der Elektromotor 11 in entgegengesetzter Richtung angetrieben und nimmt über die Rückholplatte 29 und den großen Kolben 36 ohne Zwischenschaltung einer Feder die Formaufspannplatte unmittelbar mit.

Wird in einer nichtgezeigten Variante zum fünften Ausführungsbeispiel der Zylinder 37 nicht durch Beaufschlagung mit dem im Druckraum 35 herrschenden Druck, sondern unabhängig davon, mechanisch oder hydraulisch blockiert, so ist die Schraubenfeder nicht notwendig. Es ist jedoch vorteilhaft, zwischen dem großen Kolben 36 und dem Zylinder 37 eine Feder, wie z.B. die Feder 60, einzuspannen, wobei jedoch die Vorspannung der Feder einem wesentlich kleineren Druckäquivalent im Druckraum 35 entspricht Zum Beispiel könnte die Feder auf einen Druck von 5 bar ausgelegt sein. Beim Befüllen des Druckraums 35 wird dieser dann sehr gut entlüftet.

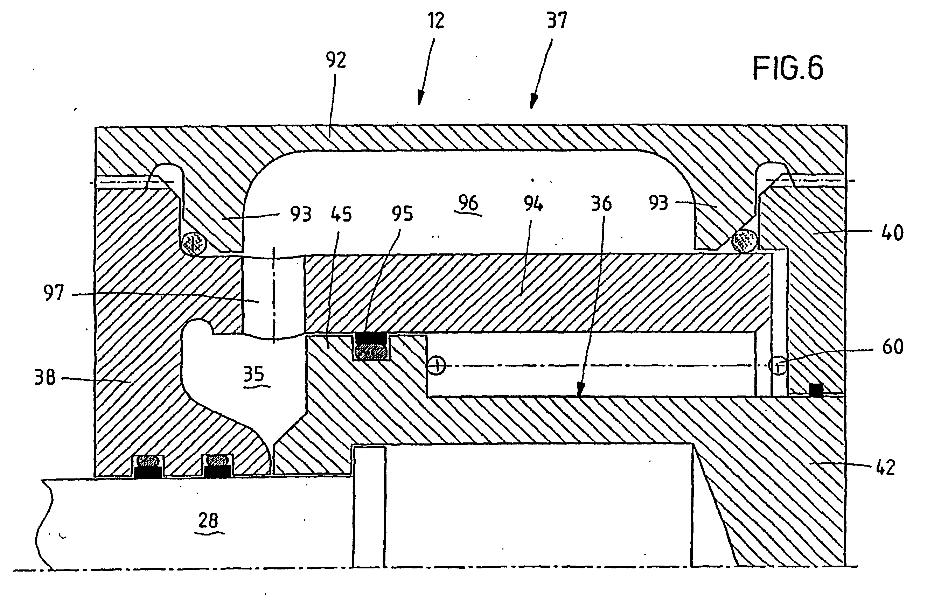

Von dem Ausführungsbeispiel nach Figur 6 ist nur die eine Hälfte des hydraulischen Kraftübersetzers 12 gezeigt. Dessen Zylinder 37 weist zwei Endflansche 38 und 40 auf, die von entgegengesetzten Seiten aus in ein äußeres Rohr 92 bis zur Anlage an zwei Innenbunden 93 dieses Rohres eingeschraubt sind. Der Flansch 38 ist einstückig mit einem inneren Rohr 94 ausgebildet, an dessen Innenseite der große Kolben 36 dicht gleitend geführt ist. Zwischen dem Rohr 94 und dem Kolben 36 ist anders als bei den Ausführungen nach den Figuren 1 und 5 nur eine Führungs- und Dichtstelle 95 vorhanden, die sich in einem Außenbund 45 am dem Boden 38 nahen Ende des Kolbens 36 befindet. Ein zweites Mal ist der Kolben 36 mit seiner Kolbenstange 42 in dem Flansch 40 geführt.

Zwischen der Außenseite des Rohres 94 und dem äußeren Rohr 92 ist zwischen den beiden Bunden 93 durch Zurücknahme der Innenseite des Rohres 92 ein ringförmiger Freiraum 96 ausgebildet, der über eine oder mehrere Radialbohrungen 97, die durch das innere Rohr 94 nahe am Boden 38 und an einer nicht von der Dichtung am Kolbenbund 45 überfahrenen Stelle hindurchgehen, fluidisch mit dem Druckraum 35 verbunden. In dem Freiraum 96 und somit an der Innenseite des äußeren Rohres 92 herrscht also derselbe Druck wie im Druckraum 35. Wenn somit durch Eintauchen des kleinen Kolbens 28 in den Druckraum 35 darin ein Druck aufgebaut wird, wird auch das äußere Rohr 92 nach außen mit Druck beaufschlagt und klemmt den Zylinder 37 in der in Figur 6 weggelassenen Bohrung 9 fest. Die Größe der Klemmfläche ist also nun unabhängig von der Größe des großen Kolbens 36 wählbar. Außerdem wird die Führung und Abdichtung des großen Kolbens 36 am Zylinder 37 durch die Klemmung nicht beeinflußt. Das Rohr 94 ist nämlich so stabil, daß es durch den von außen auf es wirkenden Druck kaum nach innen verformt wird.

Auch bei der Ausführung nach Figur 6 ist eine Schraubendruckfeder 60 vorhanden, über die der Zylinder 37 vom großen Kolben 36 mitnehmbar ist und nach dem Schließen der Form der Zylinder 37 solange gehalten werden kann, bis sich durch das weitere Eintauchen des Kolbens 28 in den Druckraum 35 ein Druck aufgebaut hat, durch den der Zylinder 37 geklemmt wird.

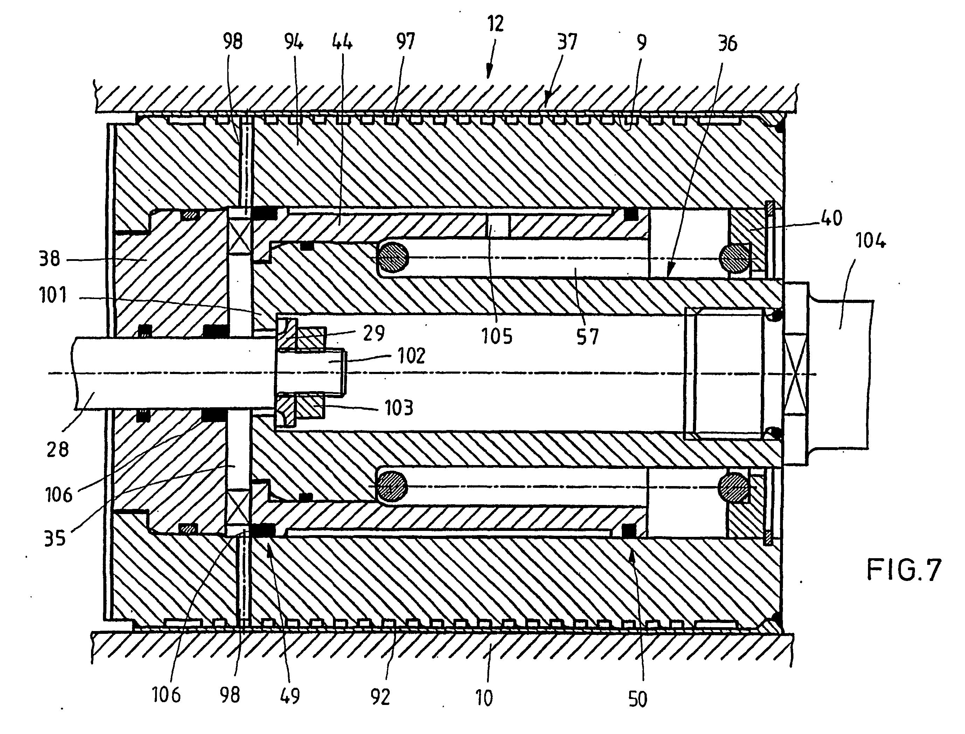

Auch bei dem Ausführungsbeispiel nach Figur 7 ist der Klemmdurchmesser für den Zylinder 37 der Hydroeinheit 12 unterschiedlich vom Führungs- und Dichtdurchmesser des Kolbens 36. Dieser ist nun wiederum ähnlich wie bei den Ausführungsbeispielen nach den Figuren 1 und 5 zweiteilig mit einem äußeren Teil 44 und einem inneren Teil mit Kolbenstange 42 ausgebildet. Das innere Teil besitzt an seinem dem Boden 38 des Zylinders 37 zugekehrten Ende eine Innenschulter 101, die von einer Rückholscheibe 29 am kleinen Kolben 28 hintergriffen wird. Der Kolben 36 ist nun zentral durchgehend hohl, so daß die Rückholscheibe 29 vom freien Ende der Kolbenstange 42 aus am kleinen Kolben 28 befestigt werden kann. Vorliegend ist sie über einen Gewindezapfen 102 des Kolbens 28 bis zu einer Außenschulter geschoben und durch eine Mutter 103 gesichert. Vom freien Ende her besitzt die Kolbenstange 42 ein Innengewinde, in das abgedichtet ein Verbindungsstück 104 zur beweglichen Formaufspannplatte eingeschraubt ist.

Der Zylinder 37 besitzt ähnlich wie bei den Ausführungen nach den Figuren 1 und 5 einen Boden 38, einen Flansch 40 und ein zwischen diesen beiden Teilen verlaufendes inneres Rohr 94, das eine große Wandstärke besitzt und entsprechend formstabil ist. Der große Kolben 36 ist mit dem Außenteil 44 an zwei weit voneinander entfernten Stellen, die den Stellen 49 und 50 der Ausführungsbeispiele nach den Figuren 1 und 5 entsprechen, im Rohr 94 axial geführt. Der Freiraum axial zwischen diesen beiden Stellen 49 und 50 und radial zwischen dem Kolben 36 und dem Zylinder 37 ist nun anders als bei den Ausführungsbeispielen nach den Figuren 1 und 5 nicht mit Druckflüssigkeit gefüllt, sondern über Radialbohrungen 105 im Außenteil 44 des Kolbens 36 mit der die Schraubendruckfeder 60 aufnehmenden Ringnut 57 und damit mit Atmosphäre verbunden. Entsprechend muß die Führung des Kolbens 36 an der Stelle 50 nicht dicht sein. Eine gute Abdichtung dagegen muß an der Stelle 49 und am Durchgang des Kolbens 28 durch den Boden 38 des Zylinders 37 vorhanden sein. Bei dem Ausführungsbeispiel nach Figur 7 sind deshalb an der Stelle 49 und zwischen dem Kolben 28 und dem Boden 38 des Zylinders 37 Dichtringe 106 verwendet, die Permanentmagnete sind. Im Druckraum 35 befindet sich eine Druckflüssigkeit, die magnetorheologisch ist. Eine solche Flüssigkeit hat eine von der Stärke eines sie durchdringenden magnetischen Feldes abhängige Viskosität. Je stärker das Magnetfeld ist, desto höher ist die Viskosität. Somit ist die bei dem Ausführungsbeispiel nach Figur 7 verwendete Druckflüssigkeit im Bereich der Dichtringe 106 hochviskos, so daß eine äußerst wirksame Abdichtung gelingt.

In die Außenseite des Rohres 94 des Zylinders 37 ist eine Spiralnut 97 eingearbeitet, die über mehrere durch das Rohr 94 hindurchgehende Radialbohrungen 98 mit dem Druckraum 35 fluidisch verbunden ist. Das Rohr 94 ist umgeben von einem im Vergleich zum Ausführungsbeispiel nach Figur 6 sehr dünnwandigen äußeren Rohr 92, das bei Kräftefreiheit zwischen den einzelnen Gängen der Spiralnut 97 an dem inneren Rohr 94 anliegt. Das äußere Rohr 92 gibt deshalb bei der Endbearbeitung seiner Außenseite z.B. durch Schleifen nicht nach innen nach, so daß die Hydroeinheit 12 mit genauem Außenmaß hergestellt werden kann und eine geringe Gefahr des Klemmens in der Bohrung 9 während der Stellbewegung besteht. Das Rohr 92 liegt mit einer gewissen Vorspannung am Rohr 94 an, so daß der während der Stellbewegung im Druckraum 35 auftretende und damit auch in der Spiralnut 97 anstehende Druck das Rohr 92 noch nicht nach außen aufweiten kann.

In Figur 7 ist die Hydroeinheit in einem Zustand gezeigt, in dem die Form einer Kunststoffspritzgießmaschine ganz geöffnet ist. Die Rückholplatte 29 des kleinen Kolbens 28 liegt am großen Kolben 36 und dieser wiederum am Zylinder 37 an. Soll nun die Form geschlossen werden, so wird der kleine Kolben 28 in der Ansicht nach Figur 7 nach rechts bewegt. War der Druck im Druckraum 35 schon zu Anfang genügend hoch, so folgt der große Kolben 36 unmittelbar der Bewegung des kleinen Kolbens 28 und nimmt über die Schraubendruckfeder 60 auch den Zylinder 37 mit. Der Druck im Druckraum 35, der auch in der Spiralnut 97 ansteht, hat dabei noch nicht genügt, um das äußere Rohr 92 aufzuweiten. Ist schließlich die Form geschlossen, so steht der weiteren Bewegung des großen Kolbens 36 ein hoher Widerstand entgegen und der Druck im Druckraum 35 steigt beim tieferen Eintauchen des kleinen Kolbens 28 in den Druckraum 35, von dem der Hohlraum im Kolben 36 ein Teil ist, an. Zunächst verhindert noch die entsprechend stark vorgespannte Schraubendruckfeder 60, daß der Zylinder 37 nach links ausweicht. Durch weiteren Druckanstieg wird schließlich das äußere Rohr 92 aufgeweitet, so daß es sich innen an die Wand der Bohrung 9 anlegt. Der Zylinder 37 wird dann durch Klemmung in der Bohrung 9 gehalten und durch weitere Bewegung des kleinen Kolbens 28 kann der Druck im Druckraum 35 weiter erhöht werden, um eine hohe Zuhaltekraft für die Form auszuüben.

Die Ausführungsbeispiele 8, 9 und 10 sind nur sehr schematisch dargestellt und werden deshalb im folgenden auch beschrieben, ohne daß auf jede Einzelheit eingegangen wird.

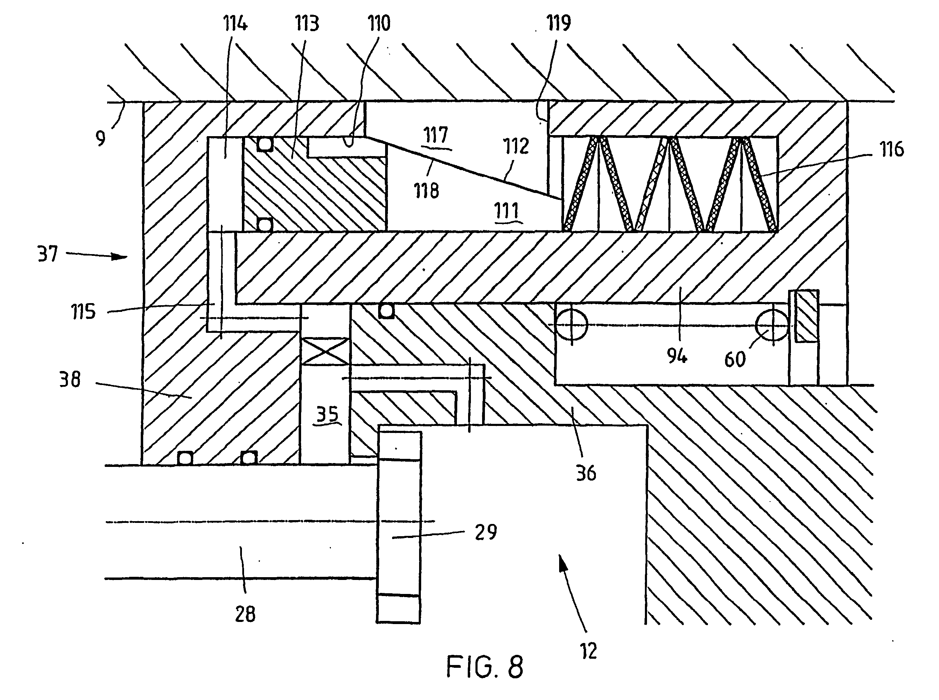

Gemäß Figur 8 hat auch das achte Ausführungsbeispiel einen Zylinder 37 mit einem Boden 38, einen kleinen Kolben 28 mit einer Rückholplatte 29 und einen großen Kolben 36, der von einer Schraubendruckfeder 60 in Richtung auf den Boden 38 des Zylinders 37 hin belastet ist. Wie bei den Ausführungsbeispielen nach den Figuren 6 und 7 werden auch bei demjenigen nach Figur 8 die Funktion der Führung für den großen Kolben 36 und die Funktion der Verklemmung des Zylinders 37 in der Bohrung 9 von verschiedenen Bauteilen erfüllt. Der Zylinder 37 weist außerhalb der Führungswand 94 für den Kolben 36 einen Ringkanal 110 auf, in dem sich etwa mittig ein ringförmiger Keil 111 befindet, der außen an der Führungswand 94 anliegt und von seiner einen Stirnseite zur anderen Stirnseite außen in einer Kegel- oder Keilfläche 112 konisch zuläuft. Auf der einen Seite des Ringkeils 111 befindet sich ein Ringkolben 113, der auf seiner den Ringkeil 111 abgewandten Seite, einen Ringraum 114 begrenzt, der über Kanäle 115 mit dem Druckraum 35 fluidisch verbunden ist. An seiner dem Kolben 113 zugewandten axialen Stimfläche hat der Ringkeil 111 den größten Außendurchmesser. Zwischen der Stirnseite des Keils 111 mit dem kleineren Außendurchmesser und dem einen Ende des Ringkanals 110 ist ein Federpaket aus mehreren Tellerfedern 116 eingespannt. Auf dem Ringkeil 111 liegt ein äußerer Ringkeil 117 mit einer Kegel- oder Keilfläche 118 auf. Dieser Ringkeil ist axial lagesicher in einem vom Ringkanal 110 nach außen gehenden Durchbruch 119 des Zylinders 37 gehalten und vermag an der Wand der Bohrung 9 anzuliegen. Er hat einen Schlitz, damit er sich radial aufdehnen kann. Er kann jedoch auch durch einzelne separate äußere Keile ersetzt sein.

In Figur 8 ist die Hydroeinheit 12 in einem Zustand gezeigt, wie er während der Stellbewegung einer beweglichen Formaufspannplatte einer Kunststoffspritzgießmaschine eingenommen wird. Die Rückholplatte 29 des kleinen Kolbens 28 liegt am großen Kolben 36 und dieser am Boden 38 des Zylinders 37 an. Der im Druckraum 35 und damit auch in dem Ringraum 114 herrschende Druck vermag es nicht, den Kolben 113 und den Keil 111 gegen die Tellerfedern 116 zu verschieben. Der Keil 117 hat einen geringen Abstand von der Wand der Bohrung 9 oder gleitet praktisch ohne jede Andrückkraft an der Wand entlang. Erst wenn die Form geschlossen ist und der Druck im Druckraum 35 und im Ringraum 114 über einen bestimmten Wert ansteigt, verschiebt der Kolben 113 den Keil 111 gegen die Kraft der Tellerfedem 116, wodurch der Keil 117 nach außen an die Wand der Bohrung 9 angedrückt wird. Da axial keine Bewegung zwischen dem Keil 117 und dem Zylinder 37 stattfinden kann, ist der Zylinder durch das Klemmen des Keiles 117 in seiner Position blockiert. Beim Öffnen der Form baut sich der Druck im Druckraum 35 und im Ringraum 114 ab und die Tellerfedem 116 vermögen die Verklemmung zwischen den Keilen 111 und 117 und damit zwischen dem Keil 117 und dem Maschinengestell zu lösen. Die gesamte Hydroeinheit 12 kann zurück in ihre Ausgangsposition gefahren werden.

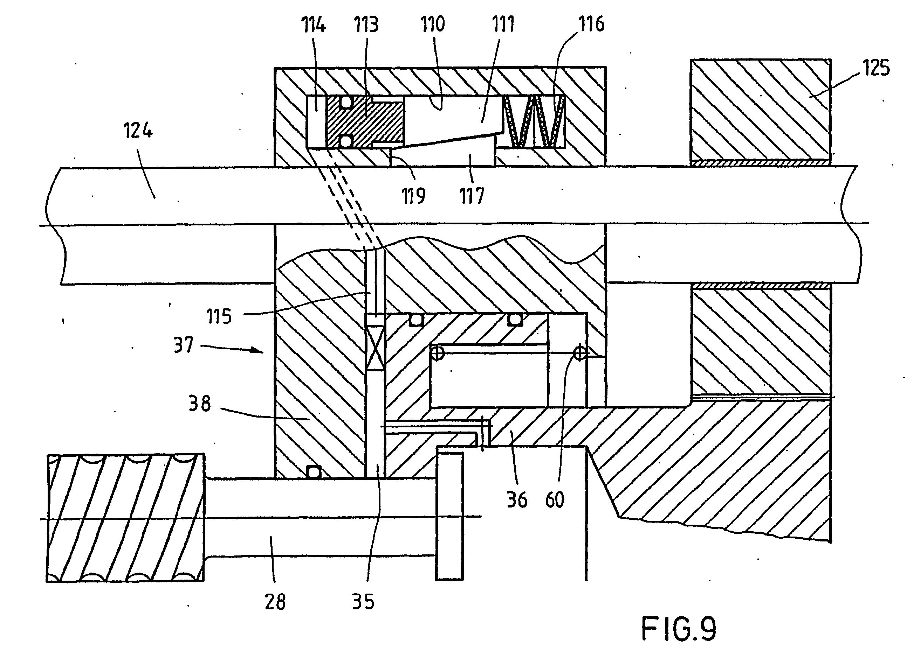

Wie vom achten Ausführungsbeispiel in Figur 8 sind auch vom neunten Ausführungsbeispiel nach Figur 9 der kleine Kolben 28, der große Kolben 36, der Zylinder 37 und die den großen Kolben in Richtung auf den Boden 38 des Zylinders 37 beaufschlagte Druckfeder 60 gezeigt. Darüber hinaus erkennt man die am losen Kolben 36 befestigte und an Längsholmen 124 beweglich geführte Formaufspannplatte 125 einer Kunststoffspritzgießmaschine. Die Holme 124 gehen auch durch den Zylinder 37 hindurch. Außerhalb der Holme 124 weist der Zylinder 37 ähnlich wie bei dem Ausführungsbeispiel nach Figur 8 einen Ringkanal 110 auf, in dem wiederum ein von einem Kolben 113 in die eine Richtung und von einem Federpaket aus Tellerfedern 116 in die Gegenrichtung beaufschlagbarer Ringkeil 111 untergebracht sind. Dieser Keil 111 ist nun jedoch der äußere von zwei Keilen und wirkt mit einem inneren oder mehreren, der Anzahl der Holme entsprechenden Keilen 117 zusammen. Diese sind wiederum in nun jedoch den Ringkanal 110 zu den Holmen 124 öffnenden Durchbrüchen 119 des Zylinders 37 axial lagesicher aufgenommen. Ein Ringraum 114 hinter dem Ringkolben 113 ist wiederum durch eine oder mehrere Verbindungskanäle 115 mit dem Druckraum 35 fluidisch verbunden. Wie bei dem Ausführungsbeispiel nach Figur 8 wird auch bei demjenigen nach Figur 9 der Zylinder 37 bei einem Druckanstieg im Druckraum 35 über einen bestimmten Wert durch die Wirkung der Keile 111 und 117 festgeklemmt. Die Festklemmung erfolgt nun nicht nach außen hin in einer Bohrung eines Maschinenteils, sondern gegenüber den die Formaufspannplatte 125 führenden Holmen 124.

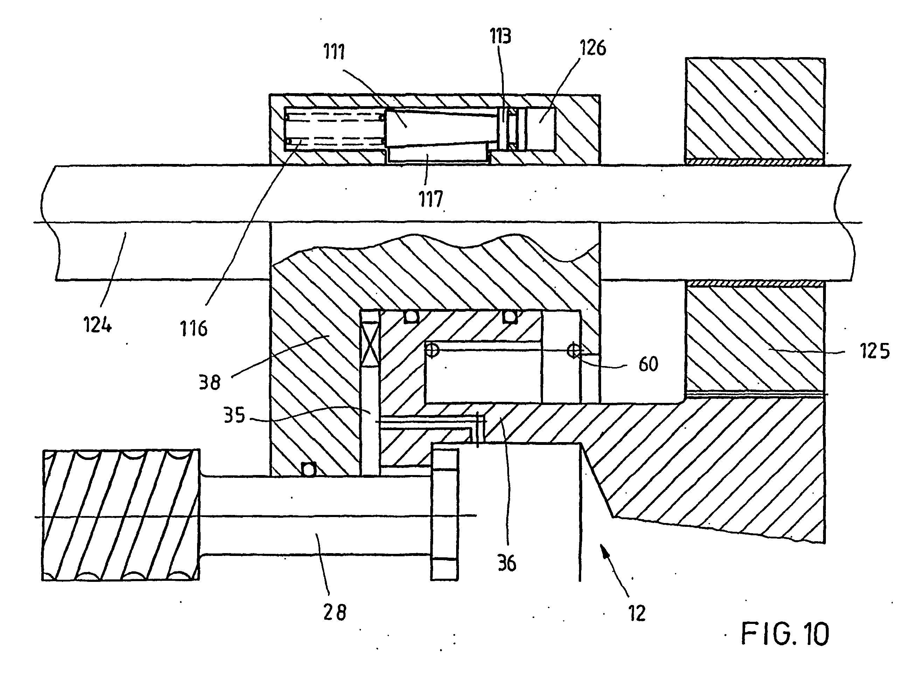

Auch bei dem Ausführungsbeispiel nach Figur 10 wird der Zylinder 37 der Hydroeinheit 12 mit den Holmen 124 einer Kunststoffspritzgießmaschine verklemmt. Das Ausführungsbeispiel nach Figur 10 weist in gleicher Weise wie dasjenige nach Figur 9 einen kleinen Kolben 28 und einen großen Kolben 36, an dem die bewegliche Formaufspannplatte 125 befestigt ist und der von der Schraubendruckfeder 60 in Richtung auf den Boden 38 des Zylinders 37 belastet ist, auf. Auch die Anordnung der beiden Keile 111 und 117 ist die gleiche wie bei dem Ausführungsbeispiel nach Figur 9. Es sind nun jedoch das Paket der Tellerfedern 116 und der Ringkolben 113 miteinander vertauscht. Die Tellerfedern 116 wirken auf den äußeren Keil 111 im Sinne eines Verklemmens des Zylinders 37 mit den Holmen 124. Der Ringkolben 113 grenzt an einen Ringraum 126 an, der in nicht näher dargestellter Weise über ein Ventil mit einer Druckmittelquelle verbunden oder zu einem Druckmittelvorratsbehälter entlastet werden kann.

Ist der Ringraum 126 mit dem Druckmittelvorratsbehälter verbunden, so wirkt den Tellerfedern 116 keine äußere Kraft entgegen. Die Tellerfedern 116 vermögen deshalb, den Keil 111, in der Ansicht nach Figur 10, nach rechts zu verschieben, wodurch der bzw. die Keile 117 gegen die Holme 124 gedrückt werden und der Zylinder 37 mit den Holmen 124 verklemmt wird. Durch Zufuhr von Druckmittel in den Ringraum 126 wird die Verklemmung durch den Keil 113 gegen die Kraft der Tellerfedern 116 gelöst.

Bei dem Ausführungsbeispiel nach Figur 10 ist es möglich, den Zylinder 37 unabhängig vom Aufbau eines Drucks im Druckraum 35 an jeder beliebigen Stelle des Verfahrweges, z.B. einem kurzen Abstand zur Schließstellung der Formaufspannplatte 125, festzuklemmen. Dabei ist die Verklemmung mit hoher Sicherheit gewährleistet, da dies über die Tellerfedem 116 und nicht durch einen separaten äußeren Antrieb erfolgt. Bei Ausfall dieses Antriebes wird der Zylinder 37 sofort geklemmt.

Natürlich können auch bei dem Ausführungsbeispiel nach Figur 8 die Tellerfedern 116 und der Kolben 113 gegenüber den Keilen 111 und 117 vertauscht werden. Ebenso ist es möglich, die Neigung der Keilflächen 112 und 118 umzukehren, wobei dann für das Erzielen derselben Funktionsweise wie in Figur 8 natürlich auch das Paket der Tellerfedern 116 und der Ringkolben 113 vertauscht werden müssen.

Bei einem Ausführungsbeispiel, bei dem der Zylinder 37 nicht durch den Druck im Druckraum 35, sondem sozusagen fremd verklemmt wird, wie dies bei dem Ausführungsbeispiel nach Figur 10 der Fall ist, muß die Schraubendruckfeder 60 nur so stark vorgespannt sein, daß sie die zum Beschleunigen und zum Bewegen der Formaufspannplatte 125 und des Zylinders 37 notwendige Kraft übertragen kann. Der Druck im Druckraum 35 baut sich unabhängig von der Schraubendruckfeder 60 auf.

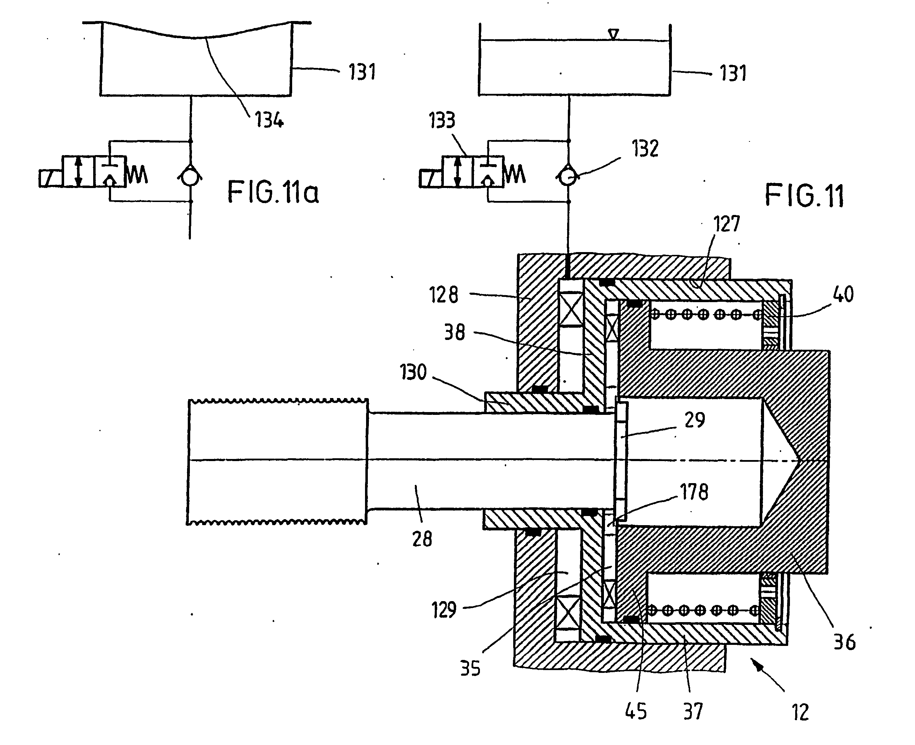

Auch bei dem Ausführungsbeispiel nach Figur 11 erkennt man wiederum den kleinen Kolben 28 mit der Rückholplatte 29, den großen Kolben 36, den Zylinder 37 und die Schraubendruckfeder 60 der Hydroeinheit 12. Der große Kolben 36 ist an einem Außenflansch 45 an seinem dem Boden 38 des Zylinders 37 nahen Ende am Mantel dieses Zylinders dicht gleitend geführt. Eine zweite Führungsstelle mit kleinem Durchmesser befindet sich am Flansch 40 des Zylinders 37.

Der Zylinder 37 befindet sich nun nicht in einer Bohrung 9 des Maschinengestells, die durchgehend im wesentlichen denselben Durchmesser hat, sondern in einer Sackbohrung 127 mit einem Boden 128. Zwischen diesem und dem Boden 38 des Zylinders 37 ist ein zweiter Druckraum 129 gebildet, dessen Außendurchmesser dem Außendurchmesser des Zylinders 37 und dessen Innendurchmesser dem Außendurchmesser einer Buchse 130 entspricht, in der der kleine Kolben 28 der Hydroeinheit 12 dicht geführt ist. Die Buchse 130 geht auch durch den Boden 128 hindurch und ist gegen diesen abgedichtet. Auf diese Weise ist sichergestellt, daß sich die unter Umständen verschiedenen Druckmittel aus den Druckräumen 35 und 129 nicht vermischen.

Dem Druckraum 129 kann Druckmittel aus einem Druckmittelvorratsbehälter 131 zufließen. Ebenso kann Druckmittel aus dem Druckraum 129 in den Druckmittelvorratsbehälter 131 verdrängt werden. Die fluidische Verbindung zwischen Druckraum 129 und Druckmittelvorratsbehälter 131 wird mithilfe eines Rückschlagventils 132, das vom Druckraum 129 zum Druckmittelvorratsbehälter 131 hin sperrt, und eines im Bypass zu dem Rückschlagventil 132 angeordneten 2/2-Wege-Sitzventil 133 gesteuert, das in einer Ruhestellung sperrt und durch einen Elektromagneten in eine Durchgangsstellung gebracht werden kann. Der Druckmittelvorratsbehälter 131 kann zur Atmosphäre offen sein. Er kann jedoch wie dies in Figur 11a angedeutet ist, auch durch eine Membran 134 zur Atmosphäre abgeschlossen sein. Die Membran kann unter einer gewissen Vorspannung stehen, so daß das Druckmittel immer mit einem Druck beaufschlagt ist, der über dem Atmosphärendruck liegt.

In Figur 11 ist die Hydroeinheit 12 in einem Zustand gezeigt, in der die bewegliche Formaufspannplatte einer Kunststoffspritzgießmaschine die der offenen Form zugeordnete Endstellung einnimmt. Soll nun die Form geschlossen werden, so wird, wie bei allen anderen Ausführungsbeispielen auch der Kolben 28, in der Ansicht nach Figur 11, nach rechts bewegt und verfährt dabei auch den großen Kolben 36 und den Zylinder 37 in diese Richtung. Der Druckraum 129 vergrößert sich und es strömt Druckmittel aus dem Vorratsbehälter 131 über das Rückschlagventil 132 in ihn ein. Ist die Form geschlossen, so steigt der Druck im Druckraum 35 an, so daß der Zylinder 37 mit einer nach links gerichteten Kraft beaufschlagt wird. Gegen diese Kraft wird der Zylinder 37 durch das im Druckraum 129 eingeschlossene Druckmittel in seiner Position gehalten, wobei sich im Druckraum 129 ein Druck aufbaut, der am Boden 38 des Zylinders 37 eine Kraft erzeugt, die der vom Druck im Druckraum 35 am Boden 38 erzeugten Kraft zusammen mit der Kraft der Schraubendruckfeder 60 das Gleichgewicht hält.

Soll die Form geöffnet werden, so wird zunächst durch Zurückfahren des kleinen Kolbens 28 der Druck im Druckraum 35 abgebaut, wodurch sich der große Kolben 36 an den Boden 38 des Zylinders 37 heranbewegt. Dann wird das Ventil 133 in seine Durchgangsstellung gebracht, so daß beim anschließenden Rückzug der Hydroeinheit 12 und der am großen Kolben befestigten beweglichen Formaufspannplatte Druckmittel aus dem Druckraum 129 in den Druckmittelvorratsbehälter 131 verdrängt werden kann.

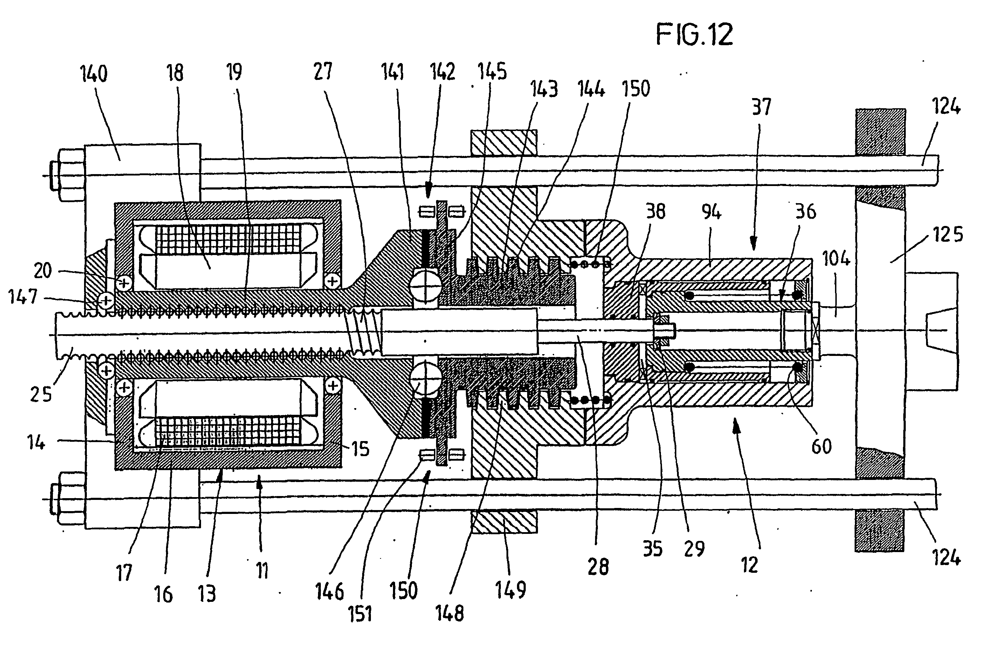

Bei dem Ausführungsbeispiel nach Figur 12 ist die bewegliche Formaufspannplatte 125 an zwei Holmen 124 beweglich geführt und wie bei dem Ausführungsbeispiel nach Figur 7 über ein Verbindungsstück 104 mit dem großen Kolben 36 der Hydroeinheit 12 verbunden. Diese ist im wesentlichen gleich wie bei dem Ausführungsbeispiel nach Figur 7 ausgebildet. Ein Unterschied besteht im wesentlichen nur darin, daß der Zylinder 37 nicht doppelwandig ausgebildet ist, sondern nur einen formstabilen Mantel 94 hat. Im übrigen befindet sich die Hydroeinheit 12 nicht in einer Bohrung des Maschinengestells, sondem zwischen den Holmen 124.

Die Holme 124 sind in einem Abstand zu der beweglichen Formaufspannplatte 125 durch eine ortsfeste Abstützplatte 140 gesteckt und fest mit dieser verbunden. An der Abstützplatte 140 ist auch der Elektromotor 11 befestigt, der im wesentlichen dem Elektromotor 11 aus Figur 1 oder aus Figur 5 entspricht und dessen Teile deshalb die gleichen Bezugszahlen wie in den Figuren 1 und 5 versehen sind.

Der wesentliche Unterschied zu den Motoren nach den Figuren 1 und 5 besteht darin, daß die hohle Antriebswelle 19 vor dem Gehäuseflansch 15 zu einem Flansch 141 erweitert ist, der das Eingangsteil einer Rutschkupplung 142 bildet. Über diese ist von dem Elektromotor 11 eine Hohlspindel 143 antreibbar, durch die zentrisch die Hubspindel 25 hindurchgeht, die mit einem Außengewinde 144 versehen ist, das dieselbe Steigung wie das Außengewinde 27 der Hubspindel 25 hat und die einen dem Flansch 141 axial gegenüberliegenden Flansch 145 aufweist. Die Hohlspindel 143 ist über ein Wälzlager 146 an der Hohlwelle 19 des Elektromotors axial abgestützt. Die Hohlwelle 19 wiederum ist über ein Wälzlager 147 an der Abstützplatte 140 abgestützt. Das Wälzlager 146 und die Rutschkupplung 142 sind derart aufeinander abgestimmt, daß die Reibbeläge der Rutschkupplung nur bis zu einer gewissen Kraft aneinander gedrückt werden können. Darüber hinausgehende Kräfte werden direkt über das Wälzlager 146 auf die Hohlwelle 19 übertragen. Das Außengewinde 144 der Hohlspindel 143 steht im Eingriff mit dem Innengewinde 148 einer Spindelmutter 149, die an den Holmen 124 geführt ist und die als axialer Anschlag für den Zylinder 37 wirkt. Zwischen diesem und der Spindelmutter 149 ist eine Schraubendruckfeder 150 eingespannt, die die beiden Teile axial auseinander zu drücken sucht, wobei der Abstand zwischen den beiden Teilen einige Zehntel mm betragen kann. Die Position der Rückholplatte 29 am kleinen Kolben 28 ist natürlich auf einen solchen Abstand ausgelegt. Bei den Gewinden 144 und 148 handelt es sich um Trapezgewinde, die selbsthemmend ineinandergreifen.

Zum Schließen der Form treibt der Elektromotor 11 über die Hohlwelle 19 die Hubspindel 25 und gleichzeitig über die Rutschkupplung 142 die Hohlspindel 143 an. Da die ineinandergreifenden Gewinde zwischen Hohlwelle 19 und Hubspindel 25 dieselbe Steigung haben wie die ineinandergreifenden Gewinde 144 und 148 von Hohlspindel 143 und Spindelmutter 149, bewegt sich die Spindelmutter 149 mit derselben Geschwindigkeit wie die Hubspindel 25. Sie läuft also mit dem durch die Feder 150 sichergestellten Abstand hinter dem Zylinder 37 des Kraftübersetzers 12 her.

Sobald die Form geschlossen ist, erhöht sich der Druck im Druckraum 35, so daß der Zylinder 37 nach rückwärts ausweicht, bis das Spiel zwischen ihm und der Spindelmutter 149 aufgebraucht ist. Eine weitere Drehung der Hohlwelle 19 führt zu einer Erhöhung des Moments in den Trapezgewinden 144 und 148. Die Rutschkupplung 142 rutscht durch, so daß im folgenden nur noch der kleine Kolben 28 der Hydroeinheit 12 weiter bewegt wird und, da der Zylinder 37 über die Spindelmutter 149 axial abgestützt ist, durch Aufbau von Druck im Druckraum 35 über den großen Kolben 36 der Hydroeinheit 12 die Schließkraft erzeugt wird.

Beim Öffnen der Form dreht die Hohlwelle 19 in Gegenrichtung, so daß sich der kleine Kolben 28 zurückbewegt und der Druck im Druckraum 35 abgebaut wird. Die Druckfeder 150 schiebt den Zylinder 37 an den Kolben 36 und diesen an die Rückholscheibe 29 heran und stellt wieder den Abstand zwischen dem Zylinder 37 und der Spindelmutter 149 ein. Das Moment im Gewindetrieb 144, 149 fällt, die Rutschkupplung 142 greift und die Spindelmutter 149 wird über die Hohlspindel 143 mit zurückbewegt.

Wenn die Möglichkeit bestehen soll, die Spindelmutter 149 unabhängig vom Anstieg des Reibmoments zwischen ihr und der Hohlspindel 143 anhalten zu können, so kann man für die Hohlspindel 143 eine Bremse 150 vorsehen, wie dies in Figur 12 angedeutet ist. Dort ist der Flansch 145 der Hohlspindel 143 nach außen zu einer Art Bremsscheibe vergrößert, an die Bremsbacken 151 angedrückt werden können. Der Zylinder 37 der Hydroeinheit 12 kann dann in einer Position abgestützt werden, die nicht der Schließposition der Formaufspannplatte 125 entspricht.

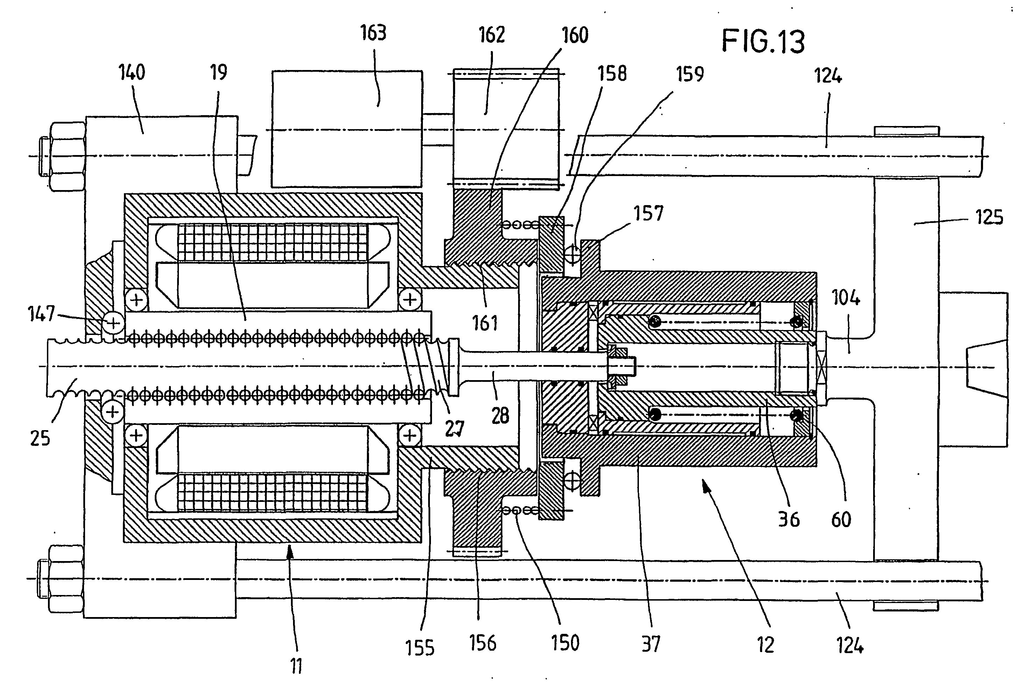

Das Ausführungsbeispiel nach Figur 13 ist hinsichtlich der ortsfesten Abstützplatte 140, der Holme 124, der beweglichen Formaufspannplatte 125 identisch zu dem Ausführungsbeispiel nach Figur 12. Der Elektromotor 11 ist weitgehend gleich dem Elektromotor 11 aus Figur 12, besitzt nun jedoch wiederum eine einfache Antriebshohlwelle 19. Anders als bei den bisher gezeigten Elektromotoren 11 aus den Figuren 1, 5 und 12 ist sein Gehäuse 13 mit einem zur Hydroeinheit 12 weisenden Fortsatz 155 versehen, der ein Außengewinde 156 hat. Der Aufbau der Hydroeinheit 12 nach Figur 13 ist prinzipiell gleich dem Aufbau der Hydroeinheit nach Figur 12. Es ist lediglich ein Außenflansch 157 des Zylinders 37 gegenüber einer Stirnseite des Zylinders etwas zurückgesetzt.

Zwischen dem Flansch 157 und einer zum Elektromotor 11 hin vor diesem Flansch befindlichen und relativ zum Zylinder 37 drehbaren Platte 158 ist ein Axialwälzlager 159 angeordnet, über das die Platte und der Zylinder axial gegeneinander abstützbar sind. Die Platte 158 ist in Drehrichtung mit einer Schraubenmutter 160 gekoppelt, die mit einem Innengewinde 161 in das Außengewinde 156 des Gehäusefortsatzes 155 eingreift. Die beiden Gewinde 156 und 161 sind wiederum selbsthemmend ausgebildet. Axial ist zwischen der Schraubenmutter 160 und der Platte 158 eine Druckfeder eingespannt, die dieselbe Funktion wie die Druckfeder 150 aus Figur 12 hat und deshalb ebenfalls mit der Bezugszahl 150 versehen ist. Diese Druckfeder sucht die Platte 158 in einem kleinen axialen Abstand von wenigen Zehntel mm von der Schraubenmutter 160 zu halten. Zur Drehmitnahme greift die Schraubenmutter 160 mit einzelnen Klauen in die Platte 158 ein, wobei auch zwischen den Klauen und der Platte 158 der axiale Abstand besteht. Die Schraubenmutter 160 ist außen mit einer Verzahnung versehen, mit der sie mit einem Zahnrad 162 kämmt, das von einem zweiten, kleineren Elektromotor 163 antreibbar ist. Der Elektromotor 163 ist ortsfest angeordnet. Das Zahnrad 162 hat die entsprechende axiale Länge, damit es innerhalb des gesamten Bewegungsbereichs der Schraubenmutter 160 mit dieser in Eingriff bleibt.

Beim Schließen der Form werden der Elektromotor 11 und der Elektromotor 163 mit solchen Drehzahlen angetrieben, daß sich die Spindel 25 und die Schraubenmutter 160 mit der gleichen axialen Geschwindigkeit vorwärts bewegen. Durch den kleinen Abstand zwischen der Schraubenmutter 160 und der Platte 158 ist sichergestellt, daß die Hydroeinheit 12 nicht über die Schraubenmutter 160 beaufschlagt wird und es eventuell zu einem Klemmen der Antriebe kommt. Da die Drehzahlen der Elektromotoren 11 und 163 wählbar sind, müssen die Gewinde 156 und 161 nicht dieselbe Steigung wie das Außengewinde an der Hubspindel 25 und das Innengewinde an der Hohlwelle 19 des Elektromotors 11 haben. Im übrigen ist der Bewegungsablauf bei dem Ausführungsbeispiel nach Figur 13 derselbe wie bei demjenigen nach Figur 12, so daß hier nur auf die entsprechenden Beschreibungsteile verwiesen sei.

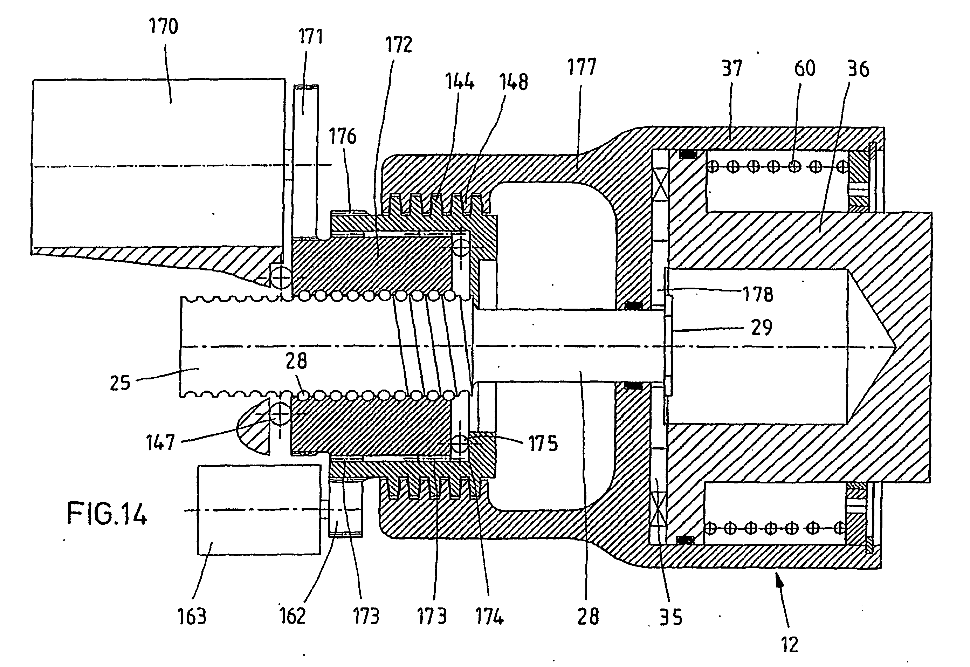

Auch bei dem Ausführungsbeispiel nach Figur 14 sind zwei Elektromotoren vorhanden, um einerseits eine Hubspindel 25, die einen den kleinen Kolben 28 der Hydroeinheit 12 darstellenden Abschnitt hat, und einen axialen Anschlag für den Zylinder 37 der Hydroeinheit 12 anzutreiben. Anders als bisher gezeigt, ist der Elektromotor 170 für den Antrieb der Kugelrollspindel 25 nun exzentrisch zu dieser ortsfest angeordnet und treibt über ein Ritzel 171 eine Spindelmutter 172 mit einem Innengewinde an, das über Kugeln 28 mit dem Gewinde der Gewindespindel 25 in Eingriff ist. Insofern erfüllt die Spindelmutter 172 die Funktion der Hohlwelle 19 von schon beschriebenen Ausführungsbeispielen und ist auch wie diese über ein Wälzlager 147 axial abgestützt.

An der Spindelmutter 172 ist über Radiallager 173 eine Hohlspindel 174 drehbar gelagert. Diese Hohlspindel ist über ein Axialwälzlager 175 axial an der Spindelmutter 172 abgestützt und behält während des Betriebs ihre axiale Lage bei. Sie ist außen abschnittsweise mit einer Verzahnung 176 versehen, mit der sie mit einem von dem Elektromotor 163 antreibbaren Ritzel 162 kämmt. Außerdem ist die Hohlspindel 174 außen abschnittsweise mit einem Trapezgewinde 144 versehen, mit dem sie in ein Trapezgewinde 148 innen an einem einstückig mit dem Zylinder 37 der Hydroeinheit ausgebildeten Hohlkörper 177 eingreift. Der Eingriff der Gewinde 144 und 148 ist wiederum selbsthemmend.

Hinsichtlich des großen Kolbens 36, der Schraubendruckfeder 60 und des Angriffs einer Rückholplatte 29 des kleinen Kolbens 28 an einzelnen nach innen ragenden Klauen 178 des großen Kolbens 36 ist das Ausführungsbeispiel nach Figur 14 gleich demjenigen nach Figur 11.

Bei dem Ausführungsbeispiel nach Figur 14 werden zum Schließen der Form die beiden Elektromotoren 163 und 170 mit solchen Drehzahlen betrieben, daß die über die Hubspindel 25 dem Zylinder 37 aufgezwungene Bewegungsgeschwindigkeit gleich derjenigen ist, die sich aus der Drehung der Hohlspindel 174 gegenüber dem Hohlkörper 177, der mit dem Zylinder 37 verdrehsicher längsgeführt ist, ergibt. In den Gewinden 144 und 148 besteht dabei ein gewisses Spiel, das die Funktion des axialen Abstandes zwischen der Spindelmutter 149 und dem Zylinder 37 bei dem Ausführungsbeispiel nach Figur 12 sowie zwischen der Schraubenmutter 160 und der Platte 158 bei dem Ausführungsbeispiel nach Figur 13 hat. Die Hohlspindel 174 wird also von dem Elektromotor 163 nur frei gedreht.

Zum Schließen der Form treibt der Elektromotor 170 die Spindelmutter 172 an, so daß die Spindel 25 und mit ihr der große Kolben 36 und, über die Schraubendruckfeder 60 mitgenommen, der Zylinder 37 in Schließrichtung wandern. Der Elektromotor 163 wird derart angetrieben, daß durch das Drehen der Hohlspindel 174 die Bewegung des Zylinders 37 nicht behindert wird. Ist die Form geschlossen, so wird der Elektromotor 163 stillgesetzt und der Zylinder 37 stützt sich über die noch in Eingriff befindlichen Gewindegänge an der Hohlspindel 174 und über diese, über das Wälzlager 175, die Spindelmutter 172 und das Wälzlager 147 am Gestell der Maschine ab, wenn durch weiteres Eintauchen des kleinen Kolbens 28 in den Druckraum 35 der hohe Zuhaltedruck aufgebaut wird.

Beim Öffnen der Form wird zunächst durch Zurückfahren des kleinen Kolbens 28 der Druck im Druckraum 35 abgebaut, so daß sich der Kolben 36 wieder an den Zylinder 37 heranbewegt und diesen rückwärts mitnimmt. Der Elektromotor 163 wird im Vergleich zum Schließen der Form in Gegenrichtung angetrieben und dreht die Hohlspindel 174 frei mit.

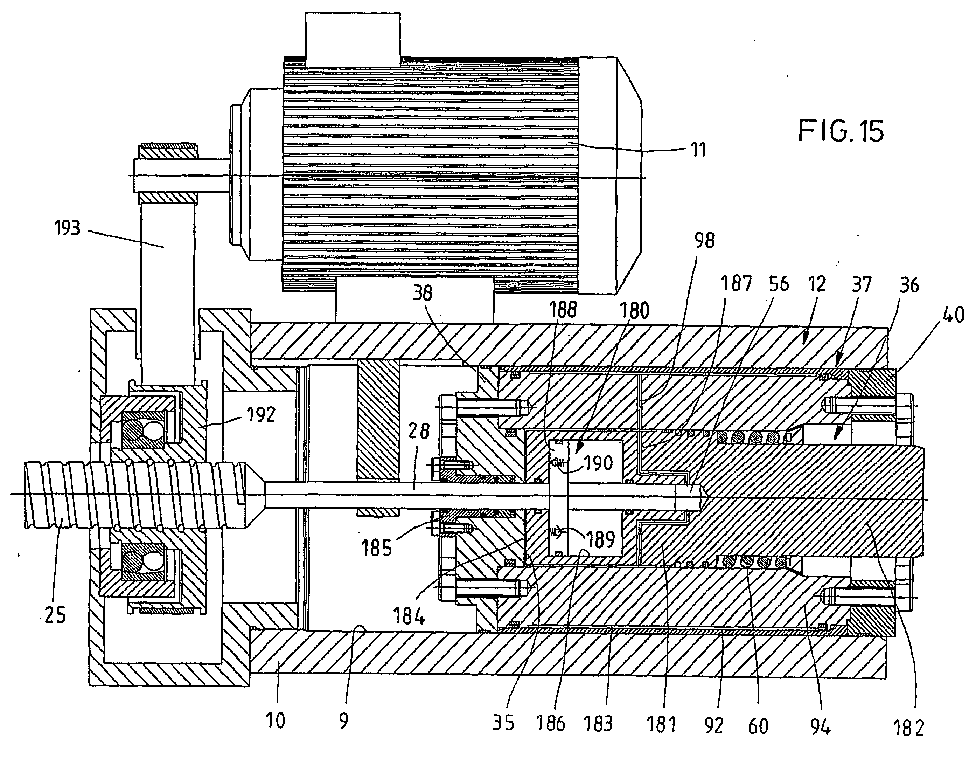

Das Ausführungsbeispiel nach Figur 15 ähnelt im Aufbau des Zylinders 37 der Hydroeinheit 12 dem Ausführungsbeispiel nach Figur 7. Der Zylinder 37 besitzt einen Boden 38, einen Flansch 40 und ein zwischen diesen beiden Teilen verlaufendes inneres Rohr 94, das eine große Wandstärke besitzt und entsprechend formstabil ist, und ein das Rohr 94 umgebendes dünnwandiges äußeres Rohr 92. Boden 38 und Flansch 40 überdecken stirnseitig sowohl das Rohr 94, an dem sie mit Maschinenschrauben festgeschraubt sind, als auch das Rohr 92, das axial spielfrei zwischen Boden und Flansch gehalten ist. Axial innerhalb zweier Radialdichtungen, die nahe an Boden und Flansch zwischen den beiden Rohren 92 und 94 angeordnet sind, besteht zwischen den beiden Rohren ein geringer Abstand, durch den ein ringförmiger Beaufschlagungsraum 183 entstanden ist.

Der große Kolben 36 ist nach Figur 15 als Stufenkolben ausgebildet und etwa in der Mitte seiner Längserstreckung an dem Abschnitt 181 mit dem großen Durchmesser im Rohr 94 axial geführt. Mit dem Abschnitt 182 kleineren Durchmessers ragt der Kolben 36 durch den Flansch 40 hindurch aus dem Zylinder 37 heraus. Auch an dem Abschnitt 182 kann der Kolben 36 zum Beispiel am Flansch 40 axial geführt sein. An der Stufe zwischen den beiden Abschnitten 181 und 182 des Kolbens 36 einerseits und an einem Innenbund des Rohres 94 des Zylinders 37 anderseits ist eine Schraubendruckfeder 60 eingespannt, die den Kolben 36 und den Zylinder 37 im Sinne eines Einfahrens des Kolbens 36 in den Zylinder 37 belastet. Der Raum, in dem sich die Feder 60 befindet, ist zur Atmosphäre offen. Nahe an der Stufe befindet sich außer der Führungsstelle auch eine Dichtstelle zwischen dem Abschnitt 181 des Kolbens 36 und dem Rohr 94 des Zylinders 37. Von der Führungs- und Dichtstelle aus ist der Abschnitt 181 des Kolbens 36 bis zur dem Boden 38 des Zylinders 37 zugewandten Stirnseite 184 außen leicht abgedreht. Der dadurch entstandene Ringraum ist Teil des Druckraums 35. Durch das Rohr 94 führen Radialbohrungen 98 hindurch, über die der Beaufschlagungsraum 183 mit dem genannten Ringraum und damit mit dem Druckraum 35 fluidisch verbunden ist.

Der kleine Kolben 28 des Kraftübersetzers 12 tritt durch eine in den Boden 38 des Zylinders 37 eingesetzten Führungs- und Abdichtbuchse 185 hindurch in den Druckraum 35 ein und ragt in den Kolben 36 hinein. In diesem quert der kleine Kolben 28 zunächst einen im Querschnitt kreiszylindrischen Hohlraum (Kupplungsraum) 186, ehe er in eine von dem Hohlraum ausgehende Sackbohrung 56 eintaucht. Diese ist über Kanäle 187 im Kolben 36, die unabhängig von der relativen Position der beiden Kolben zueinander frei in sie münden, mit dem äußeren Ringraum am Abschnitt 181 verbunden und damit Teil des Druckraums 35. Innerhalb des Kupplungsraums 186, dessen Querschnittsfläche wesentlich größer als die Querschnittsfläche des Kolbens 28 ist und der durch jeweils eine Dichtung zwischen den Kolben 28 und 36 sowohl zu dem Raum vor der Stirnseite 184 des Kolbens 36 als auch zur Sackbohrung 56 hin abgedichtet ist, trägt der Kolben 28 eine Trennscheibe 188, die den Kupplungsraum 186 in zwei gegeneinander abgedichtete Teilräume aufteilt. In die Trennscheibe sind antiparallel zueinander angeordnet zwei als Spannventile genutzte Rückschlagventile 189 und 190 eingesetzt, deren Schließfedern auf einen Druck von zum Beispiel bis zu 20 bar vorgespannt sind. Die Vorspannung der beiden Schließfedern ist unterschiedlich. Der kleine Kolben 28 hat beidseits der Trennscheibe 188 den gleichen Durchmesser, so daß er unter Einschluß der Trennscheibe 188 mit dem großen Kolben eine Art Gleichgangzylinder bildet. Die eben beschriebenen Teile bilden eine hydraulische Grenzkraftkupplung 180, die die beiden Kolben bis zu einer bestimmten zu übertragenden Kraft, die in die entgegengesetzten Richtungen unterschiedlich ist, fest miteinander koppelt.

Der kleine Kolben 28 ist auch bei dem Ausführungsbeispiel nach Figur 15 ein Abschnitt einer Hubspindel 25, die gegen Verdrehen gesichert ist. Die Hubspindel wirkt mit einer unabhängig vom Elektromotor 11 am Maschinengestell 10 gelagerten Spindelmutter 192 zusammen. Der Elektromotor 11 ist ein üblicher drehzahlgeregelter Motor, ist außerhalb der Achse der Hubspindel 25 am Maschinengestell befestigt und treibt die Spindelmutter 192 über einen Riemen 193 an.

In Figur 15 ist die Hydroeinheit in einem Zustand gezeigt, in dem die Form einer Kunststoffspritzgießmaschine ganz geöffnet ist. Der große Kolben 36 befindet sich mit seiner Stirnseite 184 vorzugsweise über niedrige Abstandshalter am Boden 38 des Zylinders 37. Der kleine Kolben 28 nimmt eine Position ein, in der sich die Trennscheibe 188 am einen Ende des Kupplungsraums 186 befindet. Soll nun die Form geschlossen werden, so wird der kleine Kolben 28 und mit ihm die Trennscheibe 188 durch entsprechende Ansteuerung des Elektromotors 11 in der Ansicht nach Figur 15 nach rechts bewegt. Die Bewegung der Trennscheibe wird über die auf einen gewissen Druck vorgespannte Druckflüssigkeit in dem Kupplungsraum 186 unmittelbar auf den großen Kolben 36 und damit auf die bewegliche Formaufspannplatte übertragen. Der große Kolben 36 nimmt über die Schraubendruckfeder 60 auch den Zylinder 37 mit. Der Druck im Druckraum 35 ändert sich nicht.

Ist schließlich die Form geschlossen, so steht der weiteren Bewegung des großen Kolbens 36 ein hoher Widerstand entgegen. Der Kolben 28 dagegen bewegt sich weiter und taucht tiefer in die Sackbohrung 56 ein, aus der über die Kanäle 187 Druckflüssigkeit verdrängt wird. Dadurch steigt der Druck im Druckraum 35 an. Zunächst verhindert noch die entsprechend stark vorgespannte Schraubendruckfeder 60, daß der Zylinder 37 nach links ausweicht. Durch weiteren Druckanstieg im Druckraum 35 wird schließlich das äußere Rohr 92 aufgeweitet, so daß es sich innen an die Wand der Bohrung 9 anlegt. Der Zylinder 37 wird dann durch Klemmung in der Bohrung 9 gehalten, so daß durch weitere Bewegung des kleinen Kolbens 28 der Druck im Druckraum 35 weiter erhöht werden kann, um eine hohe Zuhaltekraft für die Form auszuüben. Während der Bewegung des Kolbens 28 relativ zum Kolben 36 strömt über das eine Rückschlagventil 189 Druckflüssigkeit vom einen (ersten) Teilraum in den anderen (zweiten) Teilraum des Kupplungsraums 186 über.

Zum Öffnen der Form wird der Elektromotor 11 in die entgegengesetzte Drehrichtung angetrieben, so daß sich der Kolben 28, nach Figur 15 betrachtet, nach links bewegt. Das Rückschlagventil 190 ist nur schwach vorgespannt und öffnet, so daß innerhalb des Kupplungsraums 186 Druckflüssigkeit vom zweiten Teilraum in den ersten Teilraum zurückströmen kann. Der Druck im Druckraum 35 wird abgebaut. Schließlich nimmt der Kolben 28 den Kolben 36 und dieser den Zylinder 37 in Öffnungsrichtung der Form mit

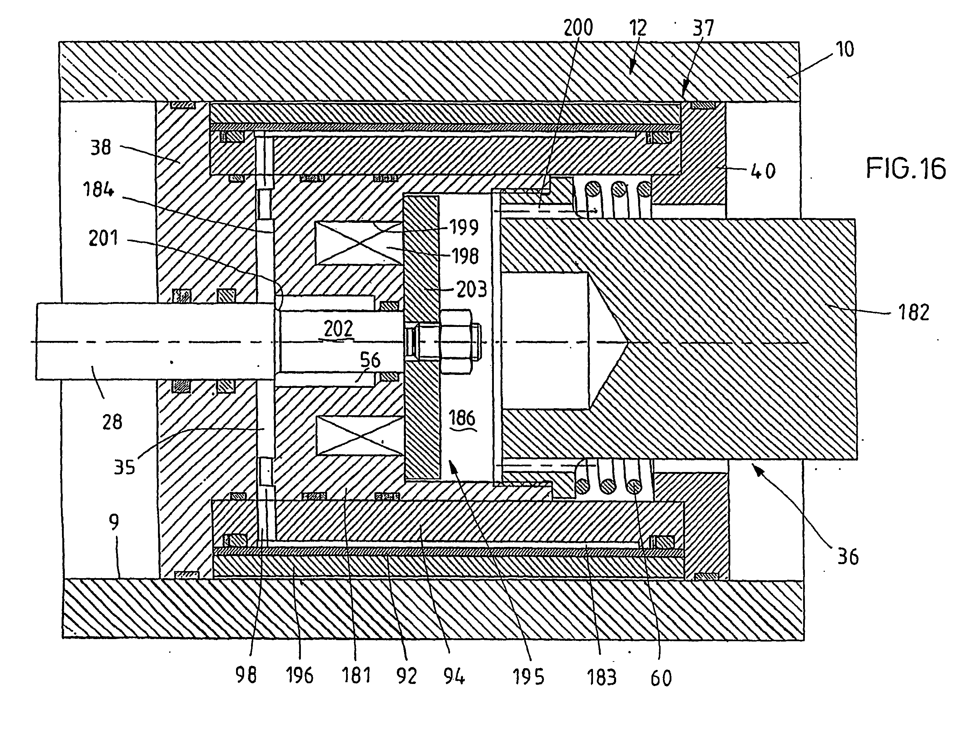

Auch bei dem Ausführungsbeispiel nach Figur 16 besitzt der Zylinder 37 des Kraftübersetzers 12 einen Boden 38, einen Flansch 40 und ein zwischen diesen beiden Teilen verlaufendes inneres formstabiles Rohr 94 und ein das Rohr 94 umgebendes dünnwandiges äußeres Rohr 92. Anders als bei dem Ausführungsbeispiel nach Figur 15 liegt das Rohr 92 jedoch nicht selbst unmittelbar an der Wand des Maschinengestells 10 an. Vielmehr ist das Rohr 92 außen von einer Mehrzahl einzelner Bremsstäbe 196 umgeben, die sich bei Auflage auf dem entspannten Rohr 92 zu einem geschlossenen Ring ergänzen, die radial vom Boden 38 und vom Flansch 40 überdeckt und axial mit einem geringen Spiel, das ihre freie Beweglichkeit in radialer Richtung gewährleistet, zwischen Boden und Flansch gehalten werden. Jeder Bremsstab 196 ist außen mit einem Reibbelag 197 versehen. Im entspannten Zustand des Rohrs 92 haben die Bremsstäbe einen Abstand von der Wand des Maschinengestells 10. Zwischen den Rohren 92 und 94 befindet sich wieder der ringförmige Beaufschlagungsraum 183, der über durch das Rohr 94 verlaufende Radialbohrungen 98 mit dem Druckraum 35 fluidisch verbunden ist.

Gegenüber der Darstellung nach Figur 15 ist in Figur 16 der große Kolben 36 in konstruktiver Hinsicht etwas detailierter gezeichnet. Man erkennt in Figur 16 einen zweiteiligen Aufbau des Kolbens 36, wobei der eine Teil 182 im wesentlichen einen kleinen Durchmesser hat und durch den Flansch 40 nach außen tritt und der andere Teil 181 mit dem größeren Durchmesser der Führung des Kolbens und der Abdichtung des Druckraums 35 dient. Zwischen den Kolben 36 und den Zylinder 37 ist wiederum eine Schraubendruckfeder 60 eingespannt.

Wie der Kolben 36 aus Figur 15 besitzt auch der Kolben 36 des Ausführungsbeispiels nach Figur 16 im Innem einen Hohlraum (Kupplungsraum) 186, der eine Koppelungseinrichtung 195 für die Koppelung der beiden Kolben 36 und 28 aufnimmt. Diese Koppelungseinrichtung ist eine elektromagnetisch betätigte Schaltkupplung, deren elektrische Spule 198 von einer in die den Kupplungsraum 186 zum Boden 38 des Zylinders 37 hin abschließende Wand des Kolbens 36 eingelassenen und zum Raum 186 hin offenen Ringnut 199 aufgenommen ist. Der Kupplungsraum 186 ist über Bohrungen 200 und den die Feder 60 aufnehmenden Raum mit Atmosphäre verbunden.

Der kleine Kolben 28 tritt mit einem bestimmten Durchmesser durch den Boden 38 des Zylinders 37 abgedichtet in den Druckraum 35 ein. Darin verkleinert sich sein Querschnitt in einer Stufe 201, der ein Kolbenfortsatz 202 kleineren Durchmessers folgt. Nach Durchqueren einer zum Boden 38 des Zylinders 37 hin offenen Sackbohrung 56 des Kolbens 36, deren Durchmesser so groß ist, daß der Kolben 28 mit seinem größeren Durchmesser in sie eintauchen kann, tritt der Kolbenfortsatz 202 abgedichtet in den Kupplungsraum 186 ein. innerhalb dieses Raumes ist an dem Kolbenfortsatz eine Ankerplatte 203 der Schaltkupplung 195 befestigt. Das Joch der elektromagnetischen Schaltkupplung 195 wird durch den einen Teil des Kolbens 36 gebildet.

In Figur 16 ist die Hydroeinheit in einem Zustand gezeigt, in dem die Form einer Kunststoffspritzgießmaschine ganz geöffnet ist. Der große Kolben 36 befindet sich mit seiner Stirnseite 184 über niedrige Abstandshalter am Boden 38 des Zylinders 37. Der kleine Kolben 28 nimmt eine Position ein, in der sich die Ankerplatte 203 am Joch befindet. Soll nun die Form geschlossen werden, so wird die Spule 198 bestromt, also die Kupplung 195 wirksam geschaltet und der kleine Kolben 28 durch entsprechende Ansteuerung des Elektromotors 11 in der Ansicht nach Figur 15 nach rechts bewegt. Über die Ankerplatte 203 wird der große Kolben 36 synchron mitgenommen und damit die bewegliche Formaufspannplatte verfahren. Der große Kolben 36 nimmt über die Schraubendruckfeder 60 auch den Zylinder 37 mit. Der Druck im Druckraum 35 ändert sich nicht.

Ist schließlich die Form geschlossen, steht der weiteren Bewegung des großen Kolbens 36 ein hoher Widerstand entgegen. Die Spule 198 wird stromlos geschaltet. Der Kolben 28 bewegt sich weiter und taucht tiefer in die Sackbohrung 56 ein und verdrängt mit seiner Ringfläche 201 Druckflüssigkeit. Dadurch steigt der Druck im Druckraum 35 an. Zunächst verhindert noch die entsprechend stark vorgespannte Schraubendruckfeder 60, daß der Zylinder 37 nach links ausweicht. Durch weiteren Druckanstieg im Druckraum 35 wird schließlich das äußere Rohr 92 aufgeweitet, so daß sich die Bremsstäbe 196 innen an die Wand der Bohrung 9 anlegen. Der Zylinder 37 wird dann durch Klemmung in der Bohrung 9 gehalten und durch weitere Bewegung des kleinen Kolbens 28 kann der Druck im Druckraum 35 weiter erhöht werden, so daß die Vorspannkraft der Feder 60 überwunden wird und die hohe Zuhaltekraft für die Form aufgebaut wird.

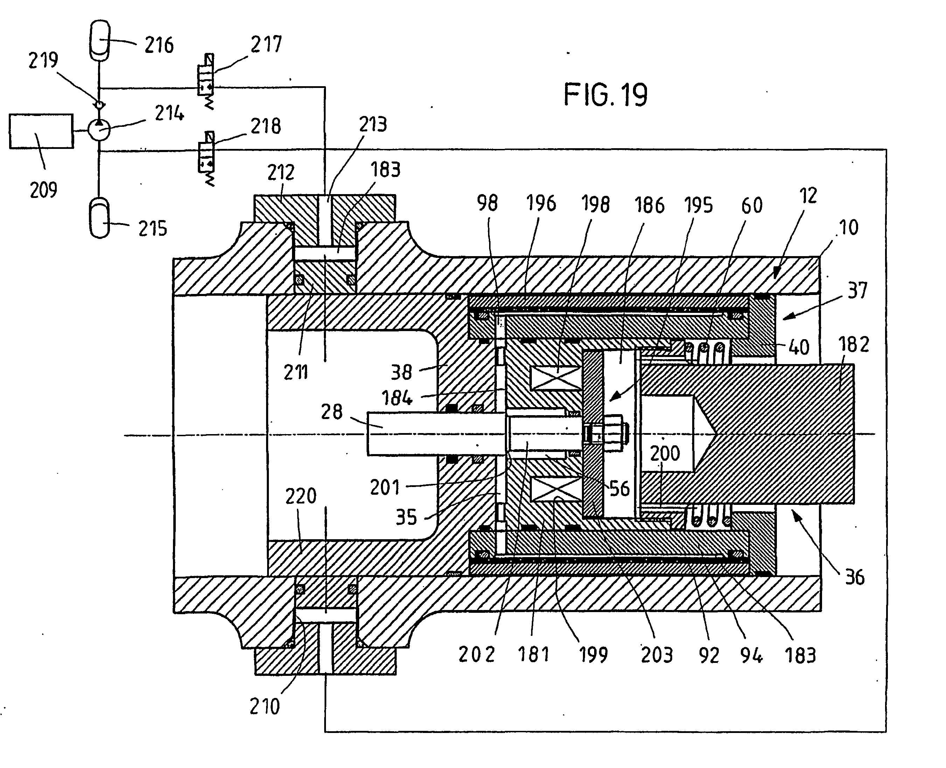

Zum Öffnen der Form wird der Elektromotor 11 in die entgegengesetzte Drehrichtung angetrieben, so daß sich der Kolben 28, nach Figur 16 betrachtet, nach links bewegt. Dabei wird der Kolben 36 auch ohne geschaltete Kupplung 195 mitgenommen Das Ausführungsbeispiel nach Figur 19 ist völlig identisch mit dem Ausführungsbeispiel nach Figur 16, soweit dies soeben beschrieben worden ist. Es sind deshalb soweit dieselben Bezugszahlen eingetragen, ohne daß die Beschreibung hier wiederholt würde.

Anders als bei dem Ausführungsbeispiel nach Figur 16 ist bei demjenigen nach Figur 19 der Zylinder 37 der Hydroeinheit 12 auch ohne einen der Bewegung des großen Kolbens 36 entgegenwirkenden Widerstand blockierbar. Dazu besitzt das Maschinengestell einzelne auf dem Umfang der Bohrung 9 verteilte und in diese mündende Radialöffnungen 210, in die hydraulisch nach innen beaufschlagbare Bremsbacken 211 eingesetzt sind. Außen ist jede Öffnung 210 durch einen Deckel 212 mit einer zentralen Anschlußbohrung 213 verschlossen. Über diese kann Fremddruckflüssigkeit, also Druckflüssigkeit, die nicht mit dem Druckraum 35 ausgetauscht wird, in die Beaufschlagungsräume 183 zwischen den Bremsbacken und den Deckeln gelangen und von dort abfließen. Der hydraulische Kreislauf für die Druckmittelversorgung der Bremsbacken 211 ist ein geschlossener Kreislauf und umfaßt eine von einem kleinen Elektromotor 209 antreibbare Hydropumpe 214 konstanten Hubvolumens, einen Niederdruckhydrospeicher 215 in einem Niederdruckzweig und einen Hochdruckhydrospeicher 216 in einem Hochdruckzweig des Kreislaufs. Der Hochdruckzweig ist über ein 2/2 Wege-Sitzventil 217 und der Niederdruckzweig über ein 2/2 Wege-Sitzventil 218 mit den Beaufschlagungsräumen 183 verbindbar oder gegen diese absperrbar. Die beiden Ventile 217 und 218 werden jeweils durch einen Elektromagneten betätigt. Zwischen dem Hydrospeicher 216 und der Hydropumpe 214 ist ein zu dieser hin sperrendes Rückschlagventil 219 angeordnet, so daß sich der Hydrospeicher 216 bei still stehender Hydropumpe nicht über diese entlädt. Die hydraulischen Bauteile 214, 215, 216, 217, 218 und 219 befinden sich ortsfest am Maschinengestell 10.

Der Zylinder 37 besitzt einen topfartig vergrößerten Boden 38 mit einem Mantel 220, der so lang ist, daß an ihn die Bremsbacken 211 innerhalb des vorgesehenen Bewegungsbereichs in jeder Position des Zylinders angedrückt werden können.

Das Ausführungsbeispiel nach Figur 19 funktioniert genauso wie dasjenige nach Figur 16. Es kann jedoch der Zylinder 37 an jeder beliebigen Stelle auch ohne einen Bewegungswiderstand für den großen Kolben 36 blockiert werden. Weil für das Blockieren des Zylinders 37 kein Druck im Druckraum 35 notwendig ist, kann die Feder allein nach dem Gesichtspunkt vorgespannt werden, daß sie die zur Mitnahme des Zylinders 37 durch den Kolben 36 notwendige Kraft möglichst, ohne daß sie weiter zusammengedrückt wird, übertragen kann. Dann folgt der Zylinder 37 unmittelbar dem Kolben 36. Denkbar ist es dann auch, den Zylinder anfänglich mithilfe der Bremsbacken 211 und eines relativ niedrigen Fremddruckes und nach einem Druckanstieg im Druckraum 35 in erster Linie durch Druckbeaufschlagung des Rohres 92 zu blockieren.

Im übrigen ist, wenn die Bremsbacken 211 unwirksam sein sollen, das Ventil 218 geschaltet, wie dies in Figur 19 dargestellt ist. Der Druck im Niederdruckspeicher liegt geringfügig über Atmosphärendruck, so daß die Bremsbacken mit ganz geringer Kraft an dem Mantel 220 anliegen. Um die Bremsbacken 211 an den Zylinder 37 anzudrücken, wird das Ventil 218 in Sperrstellung gebracht und das Ventil 217 geöffnet. Aus dem Hydrospeicher 216 kann nun die zur Druckerhöhung notwendige Kompressionsmenge den Beaufschlagungsräumen 183 hinter den Bremsbacken 211 zufließen. Die Bremse wirkt sehr schnell.

Die Antriebsvorrichtung nach Figur 19 eignet sich in besonderer Weise für das sogenannte Spritzprägen. Dabei wird eine bewegliche Formaufspannplatte bis nahe an eine ortsfeste Formaufspannplatte herangefahren, indem der Kolben 28 bei wirksamer Schaltkupplung 195 verfahren wird. Dann wird der Zylinder 37 durch Druckbeaufschlagung der Bremsbacken 211 blockiert. Dann wird eine Formmasse zwischen die zwei Formhälften gespritzt, wobei der Kolben 36 durch Anlage am Boden 38 des Zylinders 37 und dessen Blockierung direkt am Maschinengestell 10 abgestützt ist. Zum Prägen der eingespritzten Formmasse wird der kleine Kolben 28 bei gelöster Kupplung 195 weiter bewegt und dadurch der große Kolben 36 mit der beweglichen Formaufspannplatte bis zur Anlage an der ortsfesten Formaufspannplatte verfahren, wobei der Druck im Druckraum 35 bis zu einem gewünschten Wert aufgebaut werden kann.

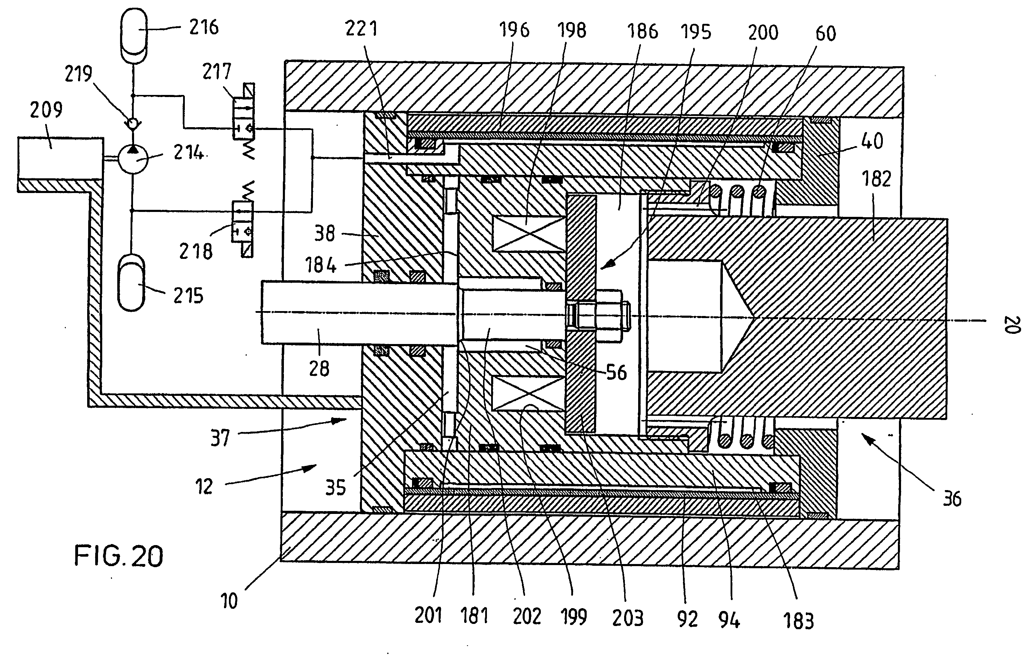

Das Ausführungsbeispiel nach Figur 20 ist in konstruktiver Hinsicht weitgehend identisch mit dem Ausführungsbeispiel nach Figur 16, soweit dies weiter oben beschrieben worden ist. Es sind deshalb soweit dieselben Bezugszahlen eingetragen, ohne daß die Beschreibung hier wiederholt würde.

Der Unterschied besteht darin, daß bei dem Ausführungsbeispiel nach Figur 20 die durch das Rohr 94 hindurchgehenden Radialbohrungen 98 fehlen und dem ringförmige Beaufschlagungsraum 183 zwischen den beiden Rohren 92 und 94 über einen durch das Rohr 94 und den Boden 38 nach außen führenden Anschlußkanal 221 Fremddruckmittel zuführbar ist. Der hydraulische Kreislauf zur Drückbe- und Druckentlastung des Beaufschlagungsraums 183 ist genauso wie bei dem Ausführungsbeispiel nach Figur 19 aufgebaut und umfaßt die von dem Elektromotor 209 antreibbare Hydropumpe 214, die Hydrospeicher 215 und 216 sowie die Ventile 217, 218 und 219. Diese Bauteile sind nun nicht am Maschinengestell 10, sondern am Zylinder 37 befestigt, so daß die Flüssigkeitspfade des Kreislaufs fest verbohrt oder fest verrohrt sein können.

Die Funktionsweise des Ausführungsbeispiels nach Figur 20 entspricht der des Ausführungsbeispiels nach Figur 19, wobei wiederum eine relativ schwach vorgespannte Feder 60 verwendet werden kann, weil der Druck im Beaufschlagungsraum 183 unabhängig von der Federkraft aufgebaut wird.

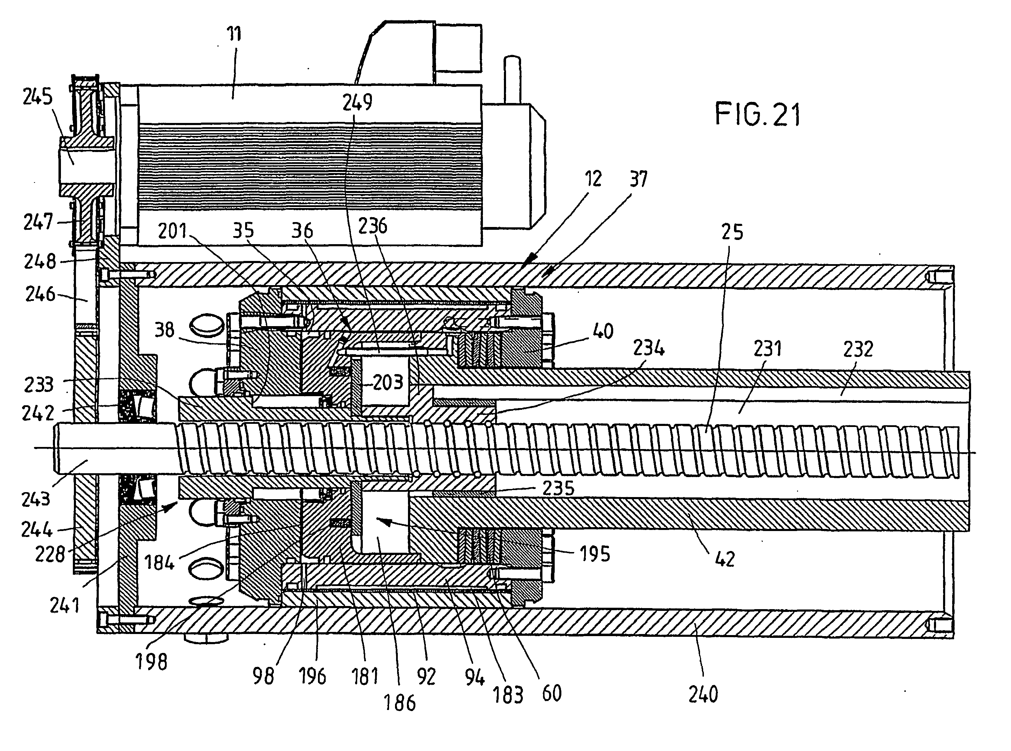

Der Aufbau des Ausführungsbeispiels nach Figur 21 ist im Hinblick auf die Klemmung des Zylinders 37 identisch mit dem Ausführungsbeispiel nach Figur 16, so daß hier auf eine diesbezügliche Beschreibung verzichtet werden kann. Es sind jedoch in Figur 21 die entsprechenden Bezugszahlen eingetragen.

Auch sind bei dem Ausführungsbeispiel nach Figur 21 wie bei demjenigen nach Figur 16 ein kleiner Kolben, der wegen der zum Ausführungsbeispiel nach Figur 16 völlig anderen Gestaltung mit 228 bezeichnet ist, und der große Kolben 36 über eine elektromagnetisch betätigbare Schaltkupplung 195, die sich in einem Hohlraum (Kupplungsraum )186 des großen Kolbens befindet, unmittelbar miteinander kuppelbar. Die elektrische Spule 198 ist wiederum von einer in die den Kupplungsraum 186 zum Boden 38 des Zylinders 37 hin abschließende Stirnwand des Kolbens 36 eingelassenen und zum Raum 186 hin offenen Ringnut aufgenommen. Der große Kolben 36 tritt mit einer gegenüber dem wirksamen Kolbendurchmesser kleineren Kolbenstange 42, deren Länge auf den zum Schließen der Form notwendigen Hub der Hydroeinheit 12 abgestimmt ist und die an der nicht gezeigten beweglichen Formaufspannplatte befestigt ist, durch den Flansch 40 des Zylinders 37 aus diesem heraus. Die Kolbenstange ist durchgehend von ihrem äußeren Ende aus bis in den Kupplungsraum 186 hinein hohl, wobei der Hohlraum mit 231 bezeichnet und im Querschnitt im wesentlichen kreisrund ist. Es läuft lediglich in der Wand des Hohlraums eine schmale Nut 232 axial entlang. Der Kupplungsraum 186 ist über den Hohlraum 131 mit Atmosphäre verbunden.

Der kleine Kolben 228 ist im wesentlichen aus drei hohlen scheiben- oder büchsenförmigen Teilen aufgebaut und insgesamt sehr kurz. Eine erste Büchse 233 ist mit einem bestimmten Durchmesser nach außen abgedichtet in dem Boden 38 des Zylinders 37 geführt. In einer Stufe oder Ringfläche 201, die sich in dem in Figur 21 gezeigten, einer offenen Spritzgießform entsprechenden Zustand innerhalb des Bodens 38 befindet und je nach dem Weg des kleinen Kolbens relativ zum großen Kolben beim Aufbau der Zuhaltekraft im Boden verbleibt oder mehr oder weniger weit aus dem Boden austritt, verkleinert sich der Querschnitt der Büchse 233. Der jeweils freie Ringraum vor der Ringfläche 201 ist Teil des durch die beiden Kolben und den Zylinder begrenzten Druckraums 35. Mit dem kleineren Querschnitt tritt die Büchse 233 durch die schon erwähnte Stimwand des großen Kolbens 36 hindurch abgedichtet in den Kupplungsraum 186 ein und trägt anschließend an einem noch einmal abgestuften Fortsatz ein Außengewinde.

Eine zweite Büchse 234 des Kolbens 228 ist als Spindelmutter ausgebildet und ist in dem Hohlraum 231 des großen Kolbens 36 über ein Gleitlager 235 axial verschieblich geführt. In dem Zustand der Hydroeinheit 12 nach Figur 21 befindet sich die Spindelmutter 234 am in den Kupplungsraum 186 mündenden Ende des Hohlraums 231. Zum Teil 233 hin besitzt die Spindelmutter 234 einen mit einem Innengewinde versehenen Fortsatz, mit dem sie mit der Büchse 233 verschraubt ist. Axial zwischen dem Fortsatz der Spindelmutter 234 und der Büchse 233 ist als drittes Teil des Kolbens 228 eine Scheibe 203 eingeklemmt, die radial bis über die Spule 198 hinausreicht und den Anker der Schaltkupplung 195 bildet. Die Spindelmutter 234 greift mit einer radial vorspringenden Nase 236 in die Nut 232 des Kolbens 36 ein, so daß der kleine Kolben 228 gegenüber dem großen Kolben 36 nicht verdrehbar ist. Da andererseits der große Kolben durch die Verbindung mit der beweglichen Formaufspannplatte gegen Verdrehen gesichert ist, kann sich auch der kleine Kolben 228 nicht verdrehen. Die Anbindung des Kupplungsraumes 186 an Atmosphäre kann zum Beispiel durch eine Bohrung in der Nase 236 erfolgen.

Die Hydroeinheit 12 befindet sich in einem Rohr 240, das beidseitig durch jeweils einen Flansch 241 verschlossen ist. In Figur 21 gezeigt ist nur der Flansch 241, dem der Boden 38 des Zylinders 37 zugewandt ist. Durch den anderen Flansch kann die Kolbenstange 42 aus dem Rohr 240 austreten. In einen zentralen Durchgang des Flansches 241 ist ein Wälzlager 242 eingesetzt.

Völlig anders als bei den bisher beschriebenen Ausführungsbeispielen ist nun die Hubspindel 25 nicht axial neben der Hydroeinheit 12 und vor dem kleinen Kolben angeordnet, sondem erstreckt sich von einem außen kreiszylindrischen Antriebsstummel 243 aus, der mit Preßsitz durch das Wälzlager 242 hindurchgeht und nach außen über den Flansch 241 vorsteht, durch den hohlen kleinen Kolben 228 und den hohlen großen Kolben 36 hindurch bis zum anderen Ende des Rohres 240. Nahe vom Flansch 241 aus bis zum anderen Ende ist die Hubspindel 25 mit einem Kugelrollgewinde versehen, in dem Kugeln entlanglaufen, die andererseits auch in das Gewinde der als Kugelumlaufbüchse ausgebildeten Spindelmutter 234 eingreifen. Die Hubspindel 25 ist axial nicht beweglich, sondern nur drehend antreibbar. Dazu ist auf dem Antriebsstummel 243 eine Zahnscheibe 244 befestigt, die über einen Zahnriemen 246 mit einer zweiten, auf der Antriebswelle 245 eines Elektromotors 11 befestigten Zahnscheibe 247 gekoppelt ist. Der Elektromotor 11 befindet sich außerhalb des Rohres 240 auf derselben Seite der Zahnscheiben 244 und 247 wie das Rohr und ist mit diesem durch einen auf den Flansch 241 aufgesetzten und gemeinsam mit dem Flansch 241 mit dem Rohr 240 verschraubten Befestigungsflansch 248 zu einer Baueinheit verbunden.

Es sei noch erwähnt, daß bei dem Ausführungsbeispiel nach Figur 21 die Schraubendruckfeder 60 aus den vorhergehenden Ausführungsbeispielen durch ein Tellerfedernpaket 60 ersetzt ist.

Außerdem ist in Figur 21 noch angedeutet, daß die Stromversorgung der Spule 198 über eine Verbohrung im Boden des Kolbens 36, ein den Kupplungsraum 186 außerhalb des Ankers 203 überbrückendes Röhrchen 249, eine weitere Verbohrung im Kolben 36, einen Ringraum zwischen dem Kolben 36 und dem Zylinder 37, eine Verbohrung im Zylinder 37 und eine Axialbohrung durch den Flansch 40 hindurch erfolgt.

in Figur 21 ist die Hydroeinheit in einem Zustand gezeigt, in dem die Form einer Kunststoffspritzgießmaschine ganz geöffnet ist. Der große Kolben 36 befindet sich mit seiner Stirnseite 184 über niedrige Abstandshalter am Boden 38 des Zylinders 37. Der kleine Kolben 228 nimmt eine Position ein, in der sich die Ankerplatte 203 am Joch befindet. Soll nun die Form geschlossen werden, so wird die Spule 198 bestromt, also die Kupplung 195 wirksam geschaltet. Der Elektromotor 11 dreht die Hubspindel 25 in eine Richtung, daß sich die Kugelrollbüchse 234 und damit der gesamte kleine Kolben 228 in der Ansicht nach Figur 21 nach rechts bewegt. Über die Ankerplatte 203 wird der große Kolben 36 synchron mitgenommen und damit die bewegliche Formaufspannplatte verfahren. Der große Kolben 36 nimmt über das Tellerfedernpaket 60 auch den Zylinder 37 mit. Der Druck im Druckraum 35 ändert sich nicht.

Ist schließlich die Form geschlossen, steht der weiteren Bewegung des großen Kolbens 36 ein hoher Widerstand entgegen. Die Spule 198 wird stromlos geschaltet. Der Kolben 228 bewegt sich weiter und verdrängt mit seiner Ringfläche 201 Druckflüssigkeit. Dadurch steigt der Druck im Druckraum 35 an. Zunächst verhindert noch das entsprechend stark vorgespannte Tellerfedempaket 60, daß der Zylinder 37 nach links ausweicht. Durch weiteren Druckanstieg im Druckraum 35 wird schließlich das äußere Rohr 92 aufgeweitet, so daß sich die Bremsstäbe 196 innen an das Rohr 240 anlegen. Der Zylinder 37 wird dann durch Klemmung im Rohr 240 gehalten und durch weitere Bewegung des kleinen Kolbens 228 kann der Druck im Druckraum 35 weiter erhöht werden, so daß die Vorspannkraft des Tellerfedernpakets 60 überwunden und die hohe Zuhaltekraft für die Form aufgebaut wird.

Zum Öffnen der Form wird der Elektromotor 11 in die entgegengesetzte Drehrichtung angetrieben, so daß sich der Kolben 228, nach Figur 21 betrachtet, nach links bewegt. Dabei wird der Kolben 36 auch ohne geschaltete Kupplung 195 mitgenommen.

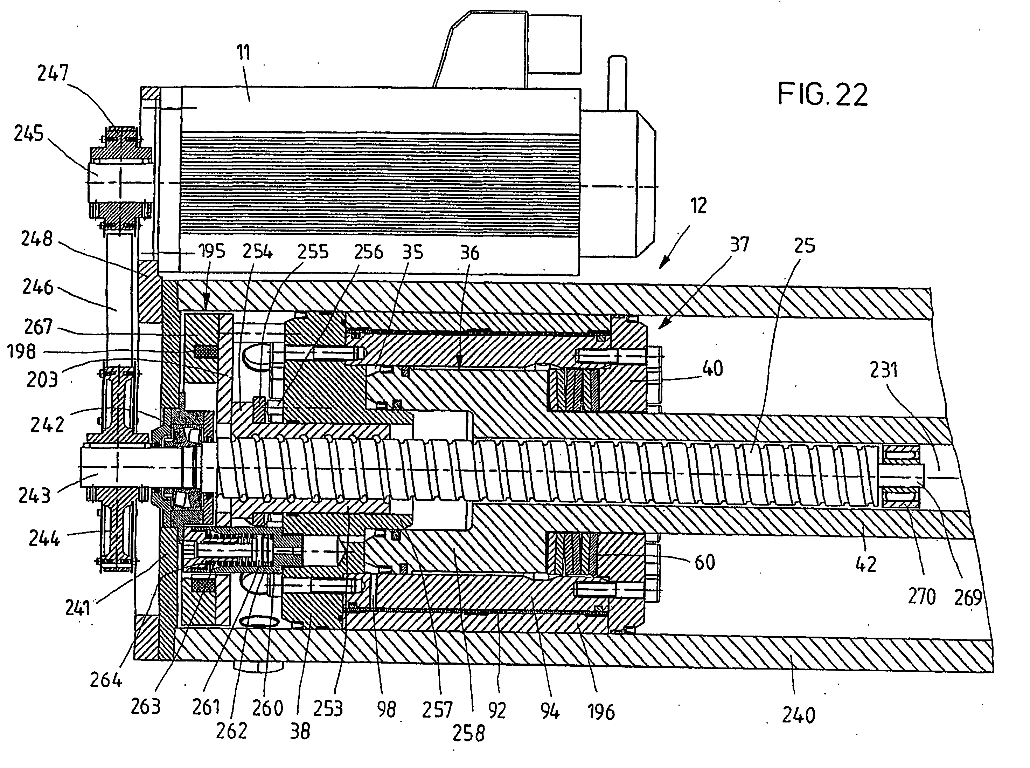

Der Aufbau des Ausführungsbeispiels nach Figur 22 ist im Hinblick auf die Klemmung des Zylinders 37 und die Anordnung der Gewindespindel 25, der Hydroeinheit 12 und des Elektromotors 11 identisch mit dem Aufbau des Ausführungsbeispiels nach Figur 21, so daß hier auf eine diesbezügliche Beschreibung verzichtet werden kann. Es sind jedoch in Figur 22 die entsprechenden Bezugszahlen eingetragen. Im folgenden wird das Ausführungsbeispiel nach Figur 22 im wesentlichen nur hinsichtlich der Unterschiede zum Ausführungsbeispiel nach Figur 21 beschrieben.

E ist in Form einer Kugelrollbüchse 253 eine Spindelmutter vorhanden, die sich in einem zentralen Durchgang des Zylinderflansches 38 befindet und die vor diesem Flansch 38 mit einer Außenschulter 254 versehen ist. Flanschseitig liegt auf der Außenschulter 254 eine gehärtete Abstützscheibe 255 auf, an der in gleichen Winkelabständen zueinander mehrere kleine Kölbchen 256 abgestützt sind, die axial in zu dem Druckraum 35 hin offenen Bohrungen des Flansches 38 geführt sind, die von in Figur 22 nicht näher gezeigten Federn gegen die Scheibe 255 gedrückt werden und die in ihrer Gesamtheit den kleinen Kolben der Hydroeinheit 12 bilden. Der Druckraum 35 umfaßt bei dem Ausführungsbeispiel nach Figur 22 einen ringförmigen Teilraum, der radial außen durch das Zylinderrohr 94, radial innen durch einen an den Flansch 38 angeformten Kragen 257 und axial einerseits durch den Flansch 38 und andererseits durch einen zwischen die Zylinderwand 94 und den Kragen 257 abgedichtet eintauchenden ringförmigen Abschnitt 258 des großen Kolbens 36 begrenzt ist.

In den Zylinderflansch 38 ist von außen ein kleiner Kolbenspeicher 260 eingeschraubt, der einen Kolben 261 aufweist, der einen durch den Flansch 38 hindurch mit dem Druckraum 35 fluidisch verbundenen Druckflüssigkeitsraum 262 von einem mit Atmosphäre verbundenen Luftraum 263 trennt. In letzterem ist eine Schraubendruckfeder 264 untergebracht, die den Kolben 261 im Sinne einer Verkleinerung des Druckflüssigkeitsraums 262 beaufschlagt. Der Weg des Kolbens 261 im Sinne einer Vergrößerung des Druckflüssigkeitsraums 262 und einer stärkeren Spannung der Feder 264 ist derart durch einen Anschlag begrenzt, daß der Federkraft ein Druck im Bereich von 5 bis 10 bar im Druckraum 35 entspricht, wenn der Kolben 261 am Anschlag anliegt. Dieser Druck ist kleiner als das Druckäquivalent zur Kraft des Tellerfederpakets 60. Mithilfe des Kolbenspeichers 260 können mit Temperaturänderungen einhergehende Volumenänderungen der sich in dem Druckraum 35 befindlichen Druckflüssigkeit ohne wesentliche Druckänderung ausgeglichen werden. Andererseits kann, wenn in dem Druckraum 35 durch das Einfahren der kleinen Kölbchen 256 ein Druck aufgebaut werden soll, keine Druckflüssigkeit mehr in den Kolbenspeicher 260 verdrängt werden, sobald der Kolben 261 an den Anschlag gelangt ist. Der durch den Kolbenspeicher 260 bedingte Leerhub der Kölbchen 256 ist deshalb nur klein.

Während die elektromagnetische Schaltkupplung 195 bei dem Ausführungsbeispiel nach Figur 21 zwischen der Spindelmutter und dem kleinen Kolben einerseits und dem großen Kolben andererseits angeordnet ist, befindet sich eine solche Kupplung bei dem Ausführungsbeispiel nach Figur 22 zwischen der Spindelmutter 253 und dem kleinen Kolben 256 einerseits und dem Zylinder 37 der Hydroeinheit 12. Dazu ist eine auf der Außenseite des Zylinderflansches 38 befindliche Jochscheibe 267 mit einer Spule 198 im Abstand zu dem Flansch über Stäbe 268 fest am Zylinder 37 gehalten. Eine Ankerplatte 203, die an der Spindelmutter 253 befestigt ist, befindet sich zwischen der Jochscheibe 267 und dem Flansch 38 und wird fest an der Jochscheibe gehalten, wenn die Spule 198 bestromt ist, so daß dann die Spindelmutter 253 mit dem Zylinder 37 der Hydroeinheit 12 gekoppelt ist.

Bei dem Ausführungsbeispiel nach Figur 22 ist das zweite Ende der Gewindespindel 25 mit einem Lagerzapfen 269 versehen, auf den der Innenring eines Wälzlagers 270 aufgepreßt ist. Der Außenring des Wälzlagers ist in dem Hohlraum 231 des großen Kolbens 36 längsgeführt und gegen Verdrehen gesichert. Mit dem Lager 270 werden Taumelbewegungen der Gewindespindel 25 und damit einhergehende wechselnde Belastungen des Gewindetriebs vermieden.

In Figur 22 ist die Hydroeinheit 12 in einem Zustand gezeigt, in dem die Form einer Kunststoffspritzgießmaschine ganz geöffnet ist. Der große Kolben 36 befindet sich Flansch 38 des Zylinders 37. Die kleinen Kölbchen 256 nehmen eine Position ein, in der sich die Ankerplatte 203 an der Jochscheibe 267 befindet. Soll nun die Form geschlossen werden, so wird die Spule 198 bestromt, also die Kupplung 195 wirksam geschaltet. Der Elektromotor 11 dreht die Hubspindel 25 in eine Richtung, daß sich die Kugelrollbüchse 253 und damit die kleinen Kölbchen 256 in der Ansicht nach Figur 22 nach rechts bewegen. Über die Ankerplatte 203 wird der Zylinder 37 und über diesen der große Kolben 36 synchron mitgenommen und damit die bewegliche Formaufspannplatte verfahren. Der Druck im Druckraum 35 ändert sich währenddessen nicht.

Ist schließlich die Form geschlossen, steht der weiteren Bewegung des großen Kolbens 36 ein hoher Widerstand entgegen. Die Spule 198 wird stromlos geschaltet. Die Spindelmutter 253 und die kleinen Kölbchen 256 bewegen sich weiter und verdrängen Druckflüssigkeit. Dadurch steigt der Druck im Druckraum 35 an. Der Kolben 261 des Kolbenspeichers 260 gelangt an seinen Anschlag. Zunächst verhindert noch das entsprechend stark vorgespannte Tellerfedernpaket 60, daß der Zylinder 37 nach links ausweicht. Durch weiteren Druckanstieg im Druckraum 35 wird schließlich das äußere Rohr 92 aufgeweitet, so daß sich die Bremsstäbe 196 innen an das Rohr 240 anlegen. Der Zylinder 37 wird dann durch Klemmung im Rohr 240 gehalten und durch weitere Bewegung der kleinen Kölbchen 256 kann der Druck im Druckraum 35 weiter erhöht werden, so daß die Vorspannkraft des Tellerfedempakets 60 überwunden und die hohe Zuhaltekraft für die Form aufgebaut wird.

Zum Öffnen der Form wird der Elektromotor 11 in die entgegengesetzte Drehrichtung angetrieben, so daß sich die Spindelmutter 253, nach Figur 22 betrachtet, nach links bewegt. Dabei wird der Zylinder 37 und von diesem über das Tellerfedempaket 60 der große Kolben 36 auch ohne geschaltete Kupplung 195 mitgenommen. Die kleinen Kölbchen 256 folgen der Abstützplatte 253 aufgrund der sie belastenden Federn.

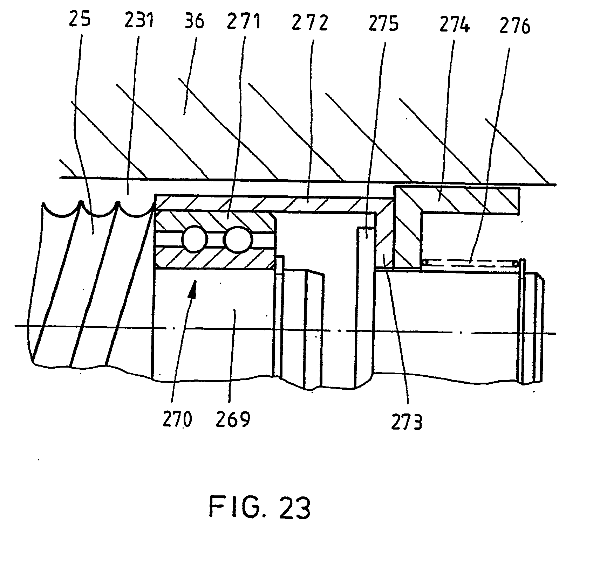

Ist das eine Ende der Gewindespindel 25 wie aus Figur 22 ersichtlich über ein Wälzlager unmittelbar in dem großen Kolben 36 gelagert, so müssen dieser und die Gewindespindel sehr genau miteinander fluchten, was eine hochpräzise und damit teure Fertigung voraussetzt. Eine Art der Lagerung nach Figur 23 dagegen erlaubt Fluchtungsfehler zwischen Kolben 36 und Gewindespindel 25, verhindert aber gleichzeitig eine Taumelbewegung der Gewindespindel. Dazu wird eine Radialbewegung des Wälzlagers 270 und des Spindelendes zugelassen, wenn die einwirkende Querkraft ein bestimmtes Maß überschreitet.

Nach Figur 23 ist der Außenring 271 des Wälzlagers 270 in eine Buchse 272 eingepreßt, deren Außendurchmesser kleiner als der Durchmesser des Hohlraums 231 ist und die sich mit einem Innenbund 273 axial zwischen zwei Reibscheiben 274 und 275 befindet. Diese sind ineinander geführt und werden durch eine zwischen ihnen eingespannte Feder 276 in Richtung aufeinander zu belastet, so daß der Innenbund 273 der Buchse 272 mit einer gewissen Kraft zwischen den beiden Reibscheiben eingeklemmt ist. Die Reibscheibe 274 ist in dem Kolben 36 mit engem radialen Spiel längsgeführt und dabei verdrehgesichert.

Kleine Kräfte, die, während die Gewindespindel gedreht wird, Ursache für eine Taumelbewegung sein könnten, können die zwischen der Buchse 272 und den Reibscheiben 274 und 275 wirkenden Reibkräfte nicht überwinden, so daß insofern das Ende der Gewindespindel 25 ruhig gehalten wird und die Art der Lagerung die eines Festlagers ist. Ein Fluchtungsfehler zwischen der Gewindespindel 25 und dem großen Kolben 36 jedoch, der sich mit der Änderung der relativen Position des großen Kolbens zur Gewindespindel während eines Arbeitszyklus auch noch ändern wird, verursacht Querkräfte zwischen den Reibpartnem 272, 274 und 275, die die Reibkräfte übersteigen und zu einer Lageänderung zwischen der Buchse 272 einerseits und den Reibscheiben 274 und 275 andererseits führen, so daß die durch den Fluchtungsfehler bedinge Biegebeanspruchung der Gewindespindel 25 und die Beanspruchung von deren Lagern begrenzt bleibt.

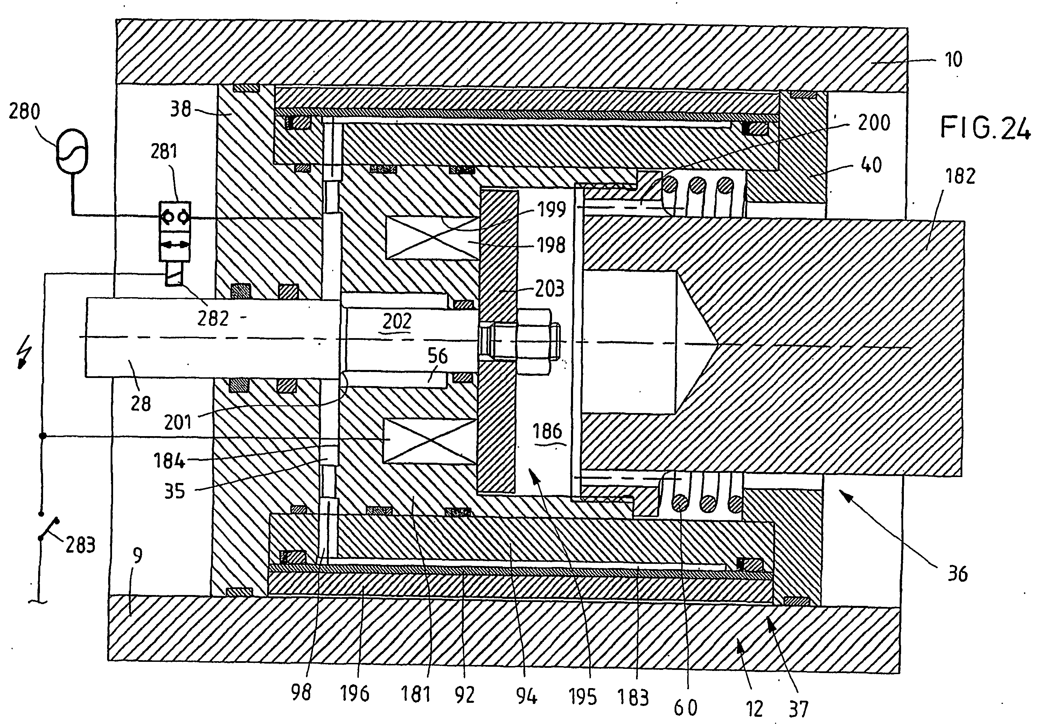

Das Ausführungsbeispiel nach Figur 24 stimmt hinsichtlich seines mechanischen Aufbaus vollkommen mit dem Ausführungsbeispiel nach Figur 16 überein. In Figur 24 finden sich deshalb alle Bezugszahlen aus Figur 16. Im übrigen wird auf die entsprechenden Teile der Beschreibung verwiesen.

Als zusätzliche Komponenten finden sich bei dem Ausführungsbeispiel nach Figur 24 ein Hydrospeicher 280, der zum Beispiel ein Kolbenspeicher oder ein Blasenspeicher sein kann und auf einen niedrigen Druck im Bereich zwischen 5 und 10 bar ausgelegt ist, und ein 2/2 Wege-Sitzventil 281, mit dem eine Fluidverbindung zwischen dem Hydrospeicher 280 und dem Druckraum 35 gesteuert werden kann. In einer Ruhestellung des Ventils 281 ist die Fluidverbindung abgesperrt. Durch Bestromung eines Elektromagneten 282 wird das Ventil 281 in eine Durchgangsstellung gebracht, so daß ein Fluidaustausch zwischen dem Hydrospeicher 280 und dem Druckraum 35 stattfinden kann. Der Elektromagnet wird jeweils parallel zu der elektromagnetischen Kupplung 195 angesteuert, wie dies durch den gemeinsamen elektrischen Schalter 283 angedeutet ist. Die Kupplung 195 ist während der Stellbewegung betätigt, so daß jeweils während dieser Bewegung eine temperaturbedingte Volumenänderung der Druckflüssigkeit ausgeglichen werden kann. Zum Aufbau der hohen Zuhaltekraft wird die Kupplung 195 unwirksam geschaltet und das Ventil 281 in die Sperrstellung gebracht. Nun kann keine Druckflüssigkeit aus dem Druckraum 35 in den Hydrospeicher 280 verdrängt werden. Der gesamte Weg des kleinen Kolbens 28 wird zum Komprimieren der sich im Druckraum 35 befindlichen Druckflüssigkeit ausgenutzt.

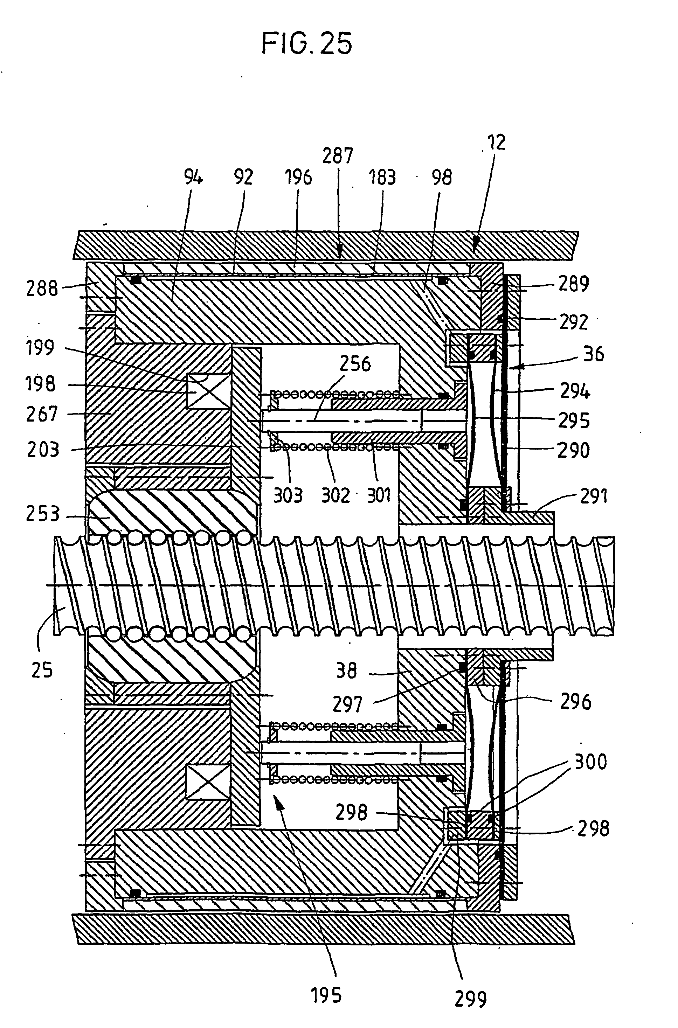

Auch bei dem Ausführungsbeispiel nach Figur 25 geht die Gewindespindel 25 durch die Hydroeinheit 12 hindurch. Die Gewindespindel steht in Eingriff mit einer als Kugelrollbüchse ausgebildeten Spindelmutter 253, die, wie angedeutet eine sphärische Außenfläche hat und auf dieser die radial innen zu einer mehrteiligen Kalotte ergänzte Ankerplatte 203 einer elektromagnetischen Schaltkupplung 195 trägt. Die Spindelmutter und die Kalotte befinden sich im wesentlichen in einem zentralen Durchgang einer Jochscheibe 267, vor deren einen Stirnseite die Ankerplatte 203 liegt und die in einer zu der Ankerplatte axial offenen Ringnut 199 die Spule 198 aufnimmt.

Die Jochscheibe 267 gehört zu einem Zwischenteil 287 der Hydroeinheit 12, das gleich wie die Ausführungsbeispiele nach den Figuren 16,19,20, 21, 22 und 24 ein inneres formstabiles Rohr 94 und ein das Rohr 94 umgebendes dünnwandiges äußeres Rohr 92 aufweist. Das Rohr 92 ist außen von einer Mehrzahl einzelner Bremsstäbe 196 umgeben, die sich bei Auflage auf dem entspannten Rohr 92 zu einem geschlossenen Ring ergänzen, die radial von zwei auf die Stirnseiten des Rohres 94 aufgeschraubten Ringscheiben 288 und 289 überdeckt und axial mit einem geringen Spiel, das ihre freie Beweglichkeit in radialer Richtung gewährleistet, zwischen den beiden Ringscheiben gehalten werden. Zwischen den Rohren 92 und 94 befindet sich wieder der ringförmige Beaufschlagungsraum 183, der über durch das Rohr 94 verlaufende Bohrungen 98 mit einem Druckraum 35 fluidisch verbunden ist.

Die Jochscheibe 267 ist in das Rohr 94 an dessen einer Stirnseite eingesetzt und mit diesem Rohr verschraubt. In einem axialen Abstand zu der Jochscheibe 267 liegt einstückig mit dem Rohr 94 ausgebildet ein Innenflansch, der von seiner Funktion her dem Zylinderboden 38 des Ausführungsbeispiels nach Figur 22 entspricht und deshalb mit derselben Bezugszahl versehen ist Der Innenflansch 38 ist gegenüber der einen Stirnseite des Rohres 94 etwas zurückgesetzt. Auf der auf die genannte Stimseite aufgeschraubten Ringscheibe 289 ist mit ihrem äußeren Rand eine Ringmembran 290 befestigt, die an ihrem inneren Rand axial am Außenbund einer Bundbuchse 291 befestigt ist. Die Ringmembran ist aus einem hochwertigen Stahl gefertigt. Sie bildet den großen Kolben der Hydroeinheit 12 und schließt mit deren Zwischenteil 287 sowie dem kleinen Kolben den im wesentlichen ringförmigen Druckraum 35 ein.

Zur Abdichtung des Druckraums 35 nach außen ist als erstes axial zwischen die Ringmembran 290 und die Ringscheibe 289 ein Dichtung 292 eingefügt. Des weiteren befindet sich auch zwischen dem Außenbund der Buchse 291 und der Ringmembran eine Dichtung, und zwar eine Flachdichtung. Natürlich ist auch zwischen dem Rohr 94 und der Ringscheibe 289 eine Dichtung vorgesehen, auch wenn dies nicht näher dargestellt ist. Der Abdichtung zwischen der Buchse 291 und dem Innenflansch 38 dient eine Anordnung von zwei weiteren metallischen ringförmigen Dichtmembranen 294 und 295, von denen die Dichtmembran 294 mit ihrem inneren Rand zwischen der erwähnten Flachdichtung und dem Außenbund der Buchse 291 eingeklemmt ist. Die andere Dichtmembran 295 ist an ihrem inneren Rand mit einem Klemmring 296 an dem Innenflansch 38 befestigt, wobei zwischen diesem und der Dichtmembran 295 eine Dichtung 297 liegt. An ihren äußeren Rändern sind die beiden Dichtmembranen über zwei äußere Klemmringe 298 und einen zwischen ihnen liegenden Zwischenring 299 miteinander verbunden, wobei sich zwischen dem Zwischenring und jeder Dichtmembran eine Dichtung 300 befindet. Somit ist der Druckraum 35 gegen den Raum zwischen den beiden Dichtmembranen 294 und 295 und damit gegen den sich im Betrieb in seiner Größe ändernden Spalt zwischen der Buchse 291 und dem Klemmring 296 und gegen Atmosphäre abgedichtet.

Der kleine Kolben des Ausführungsbeispiels nach Figur 25 wird wie bei dem Ausführungsbeispiel nach Figur 22 durch eine Mehrzahl von kleinen Kölbchen 256 gebildet, die gleiche Winkelabstände voneinander haben und in in den Innenflansch 38 eingesetzten und in Richtung auf die Ankerplatte 203 den Innenflansch überragende Führungsbuchsen 301 geführt sind. Die Führungsbuchsen bringen eine große Führungs- und Dichtlänge für die Kölbchen 256 mit sich. Die Buchsen 301 dienen außerdem als Führungen für Druckfedern 302, von denen sich jede an dem Innenflansch 38 und über einen Federteller 303 an einem Kölbchen 256 abstützt und das Kölbchen in Anlage an der Ankerplatte 203 hält.

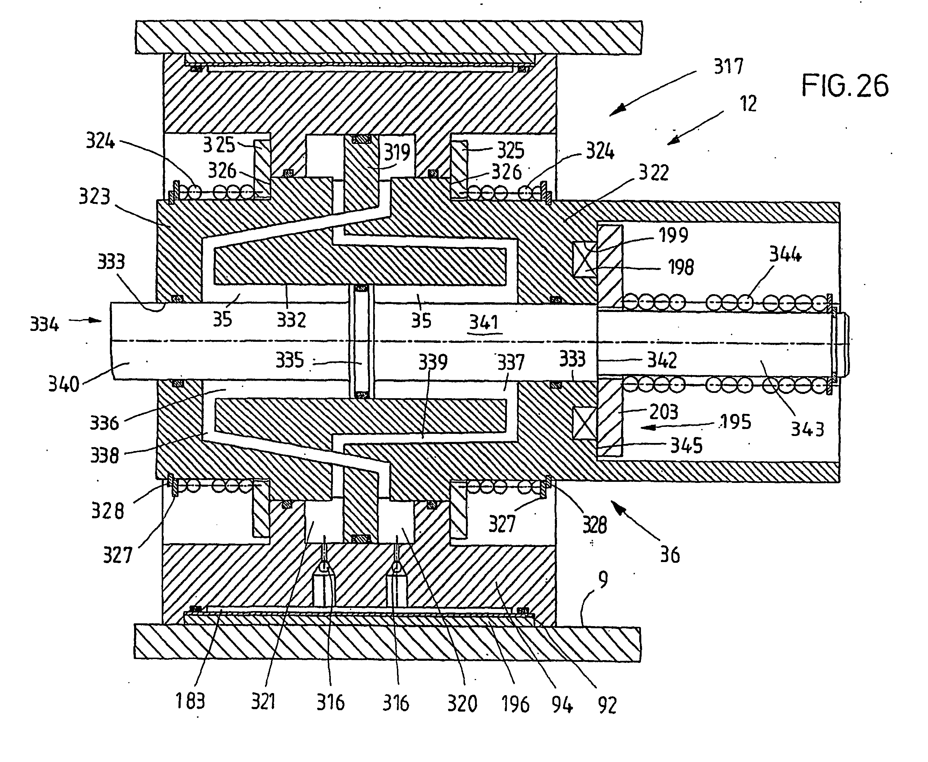

Die Hydroeinheit 12 des stark schematisch gezeigten Ausführungsbeispiels nach Figur 26 ist doppeltwirkend ausgebildet insofern, als mit ihr in zwei entgegengesetzte Richtungen eine Kraftübersetzung möglich ist. Die Hydroeinheit besitzt als Zwischenteil einen Zylinder 317, der symmetrisch bezüglich einer mittleren Radialebene ist und im Abstand zu den beiden Stimseiten eines formstabilen Zylinderrohres 94 zwei Innenflansche 38 und 40 aufweist. Den Raum axial zwischen den beiden Innenflanschen teilt der große Kolben 318 mit einem Kolbenbund 319 in zwei Ringräume 320 und 321 auf, die jeweils Teil eines Druckraums 35 sind.

Jeder Teilraum 320, 321 ist über ein in nicht näher dargestellter Weise entsperrbares Rückschlagventil 316 mit dem Freiraum 183 verbindbar, der zwischen dem formstabilen Zylinderrohr 94 und dem verformbaren äußeren Rohr 92 vorhanden ist, auf dessen Außenseite sich die Bremsstäbe 196 befinden.

Der große Kolben 318 ist ein Gleichgangkolben mit zwei an gegenüberliegenden Seiten vom Kolbenbund 319 wegragenden und durch die Innenflansche nach außen geführten Kolbenstangen 322 und 323. Jede Kolbenstange ist von einer vorgespannten Schraubendruckfeder 324 umgeben, die sich einerseits an einem Federteller 325 abstützt, der sowohl an einer vom Kolbenbund 319 wegzeigenden Schulter 326 der Kolbenstange als auch an der äußeren Stirnseite eines Innenflansches anliegen kann. Der Abstand der beiden Schultern 326 an den beiden Kolbenstangen ist genauso groß wie der Abstand der beiden äußeren Stirnseiten der beiden Innenflansche voneinander. Andererseits stützt sich jede Schraubendruckfeder 324 über einen Federteller 327 und einen Sprengring 328 an der entsprechenden Kolbenstange ab. Auf diese Weise ist der Zylinder 317 durch die Schraubendruckfedern 324 in einer Mittellage bezüglich des großen Kolbens 318 zentriert, solange keine die Vorspannung einer Feder übersteigende Kraft angreift.

Der große Kolben 318 weist einen kreiszylindrischen, mit seiner Achse in der Achse des Kolbens liegenden Hohlraum 332 auf, an dessen beiden Stirnseiten zentrale Durchgänge 333, deren Durchmesser kleiner als der Durchmesser des Hohlraums 332 ist, nach außen führen. In dem Hohlraum 332 und in den Durchgängen 333 befindet sich ein kleiner Kolben 334 der Hydroeinheit 12, der mit einem Kolbenbund 335 den Hohlraum 332 in zwei kleine Teilräume 336 und 337 aufteilt, von denen der eine Teilraum 336 über einen durch den großen Kolben 318 verlaufenden Fluidpfad 338 mit dem im Querschnitt wesentlich größeren Teilraum 320 und der Teilraum 337 über einen Fluidpfad 339 mit dem im Querschnitt wesentlich größeren Teilraum 321 am Kolbenbund 319 des großen Kolbens 318 fluidisch verbunden ist. Die miteinander verbundenen Teilräume und der entsprechende Fluidpfad bilden jeweils einen Druckraum 35. Auf jeder Seite des Kolbenbundes 335 geht von diesem eine Kolbenstange 340 bzw. 341 ab, die durch einen Durchgang 333 nach außen tritt. Die Kolbenstange 340 ist in nicht näher gezeigter Weise mit einem von einem Elektromotor axial in entgegengesetzte Richtungen verfahrbaren Antriebselement, zum Beispiel mit einer Gewindespindel gekoppelt.

Die andere Kolbenstange 341 besitzt eine von dem Kolbenbund 335 wegweisende Außenschulter 342, von der aus sich ein Führungs- und Abstützdom 343 für eine Schraubendruckfeder 344 wegerstreckt und die in der Ebene der Stimfläche 345 der Kolbenstange 322 des großen Kolbens 318 liegt, wenn sich der Kolbenbund 335 des kleinen Kolbens 334 mittig in dem Hohlraum 337 befindet. Eine Ringnut 199 in der Stirnfläche 345 nimmt die Spule 198 einer elektromagnetisch betätigbaren Schaltkupplung 195 auf. Zu dieser gehört noch eine den Dorn 343 der Kolbenstange 341 umgebende Ankerplatte 203, die von der sich an dem Dorn 343 abstützenden Feder 344 in Richtung auf die Außenschulter 342 und die Stirnfläche 345 zu belastet ist.

In Figur 26 ist die Hydroeinheit 12 in einem Zustand gezeigt, in dem die Form einer Kunststoffspritzgießmaschine ganz geöffnet ist Der große Kolben 36 ist durch die Federn 324 bezüglich des Zylinders 317 mittenzentriert. Der kleine Kolben 28 nimmt eine mittige Position zum großen Kolben 318 ein, in der sich die Ankerplatte 203 an der Außenschulter 342 und an der Stirnseite 345 des großen Kolbens befindet. Soll nun die Form geschlossen werden, so wird die Spule 198 bestromt, also die Kupplung 195 wirksam geschaltet und der kleine Kolben 334 durch entsprechende Ansteuerung des nicht gezeigten Elektromotors in der Ansicht nach Figur 15 nach rechts bewegt. Über die Ankerplatte 203 wird der große Kolben 318 synchron mitgenommen und damit die am großen Kolben befestigte bewegliche Formaufspannplatte verfahren. Der große Kolben 318 nimmt über die in der Figur linke Schraubendruckfeder 324 auch den Zylinder 317 mit. Der Druck in den Druckräumen 35 ändert sich nicht.

Ist schließlich die Form geschlossen, steht der weiteren Bewegung des großen Kolbens 318 ein hoher Widerstand entgegen. Die Spule 198 wird stromlos geschaltet. Der kleine Kolben 334 bewegt sich weiter im Sinne einer Verkleinerung des kleinen Teilraums 33. Dadurch steigt der Druck im entsprechenden Druckraum 35 und über das eine Rückschlagventil 316 auch im Freiraum 183 an. Zunächst verhindert noch die vorgespannte linke Schraubendruckfeder 324, daß der Zylinder 317 nach links ausweicht. Durch weiteren Druckanstieg in dem Druckraum 35 wird schließlich das äußere Rohr 92 aufgeweitet, so daß sich die Bremsstäbe 196 innen an die Wand der Bohrung 9 anlegen. Der Zylinder 317 wird dann durch Klemmung in der Bohrung 9 gehalten und durch weitere Bewegung des kleinen Kolbens 334 kann der Druck in dem Druckraum 35 weiter erhöht werden, so daß die Vorspannkraft der linken Schraubendruckfeder 324 überwunden wird und die hohe Zuhaltekraft für die Form aufgebaut wird.

Zum Öffnen der Form, wofür nun zunächst eine höhere Aufreißkraft notwendig ist, wird der Elektromotor in die entgegengesetzte Drehrichtung angetrieben, so daß sich der kleine Kolben 334, nach Figur 26 betrachtet, nach links bewegt, während der große Kolben 318 in seiner Position verbleibt. Durch die Bewegung des Kolbens 334 relativ zum Kolben 318 vergrößert sich der kleine Teilraum 337 und der Druck im entsprechenden Druckraum 35 wird abgebaut. Die Ankerplatte 203 gelangt wieder an die Stirnseite 345 des großen Kolbens 318. Es ist wieder der in Figur 26 gezeigte Zustand erreicht.

Der kleine Kolben 334 wird weiter nach links verfahren und dadurch im anderen Druckraum 35 ein Druck aufgebaut, der schließlich am großen Kolben eine Kraft erzeugt, die zum Aufreißen der Form ausreicht Während sich der kleine Kolben relativ zum großen Kolben bewegt, wird die Schraubendruckfeder 344 stärker gespannt, da ihr eines Ende vom kleinen Kolben mitgenommen wird, während das andere Ende über die Ankerplatte 203 am ruhenden, großen Kolben abgestützt ist. Ist die Form aufgerissen, folgt der große Kolben aufgrund der Schraubendruckfeder 344 dem kleinen nach, bis die Ankerplatte 203 an der Außenschulter 342 anliegt. Im folgenden werden die beiden Kolben gemeinsam verfahren. Daß die Form aufgerissen ist, macht sich in einem Druckabfall in dem einen Druckraum 35 mit dem Teilraum 320 bemerkbar. Nach dem Aufreißen der Form wird der Freiraum 183 von Druck entlastet, so daß sich der Zylinder 317 zum großen Kolben 318 zentriert und im folgenden zusammen mit den Kolben nach links verfahren wird.

Für die Druckbeaufschlagung des Freiraums sind beim gezeigten Ausführungsbeispiel zwei entsperrbare Rückschlagventile 316 vorgesehen. Um die hohe Zuhaltekraft ausüben zu können, wird der Freiraum über das eine Rückschlagventil vom großen Teilraum 321 aus mit Druck beaufschlagt. Nach dem Gießvorgang wird das Rückschlagventil entsperrt, so daß mit dem Abfallen des Druckes in dem Teilraum 321 durch die Bewegung des kleinen Kolbens 334 nach links auch der Druck im Freiraum 183 abgebaut wird und sich der Zylinder 317 zum großen Kolben 318 zentriert. Beim anschließenden Druckaufbau im großen Teilraum 320 wird über das andere Rückschlagventil auch der Freiraum 183 wieder mit Druck beaufschlagt und dadurch der Zylinder 317 wieder festgeklemmt. Nach dem Aufreißen der Form das Rückschlagventil entsperrt.

In einer Variante kann auch nur das eine Rückschlagventil zwischen dem großen Teilraum 321 und dem Freiraum 183 vorgesehen sein. Dieses wird erst nach dem Aufreißen der Form entsperrt, so daß der Zylinder vom Beginn der Zuhaltung bis nach dem Aufreißen ohne Unterbrechung festgeklemmt bleibt.

Um während in dem einen Druckraum 35 durch die Bewegung des kleinen Kolbens relativ zum großen Kolben ein Druck aufgebaut wird, das Entstehen eines Unterdruckes in dem anderen Druckraum 35 zu vermeiden, ist es denkbar, jeden Druckraum gemäß dem Ausführungsbeispiel nach Figur 22 oder dem Ausführungsbeispiel nach Figur 24 an einen Hydrospeicher anzuschließen. Denkbar ist es auch, die beiden Druckräume auf gleiche hohe Drücke vorzuspannen, so daß bei einer relativen Bewegung zwischen den beiden Kolben der Druck im einen Druckraum ansteigt und der Druck im anderen Druckraum abfällt, allerdings nicht unter Atmosphärendruck abfällt. In diesem Fall erscheint eine Fremddruckbeaufschlagung des Freiraums gemäß dem Ausführungsbeispiel nach Figur 20 günstig.

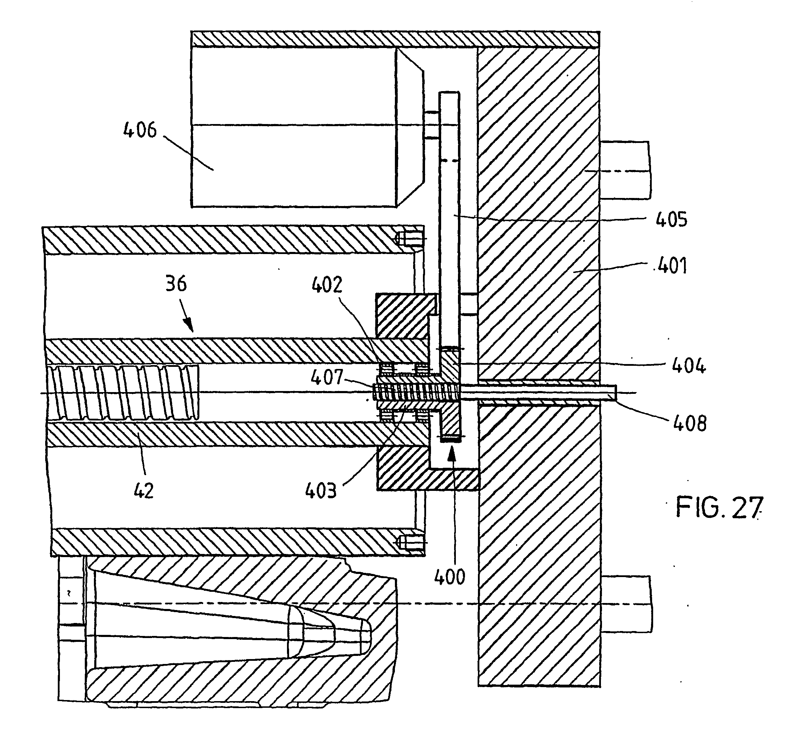

In Figuren 27 bis 31 ist eine jeweils prinzipiell wie das Ausführungsbeispiel nach Figur 22 aufgebaute erfindungsgemäße Antriebsvorrichtung um eine rein elektromechanische Antriebsvorrichtung 400 für die Betätigung eines oder mehrerer Auswerfer für das Formstück ergänzt. Die Komponenten dieser Antriebsvorrichtung befinden sich an der Kolbenstange 42 des großen Kolbens 36 und an der beweglichen Formaufspannplatte 401, die mit dem großen Kolben eine Bewegungseinheit bildet.

Bei dem Ausführungsbeispiel nach Figur 27 ist in der Kolbenstange 42 über Wälzlager 402 eine Spindelmutter 403 drehbar gelagert, die ein verzahntes Treibrad 404 aufweist, über das sie über einen Treibriemen 405 von einem an der Formaufspannplatte befestigten in seiner Drehrichtung umkehrbaren Elektromotor 406 drehend antreibbar ist. durch die Spindelmutter erstreckt sich eine gegen Verdrehen gesicherte Gewindespindel 407 hindurch, an der ein durch die Formaufspannplatte hindurchgehender Auswerferstift 408 befestigt ist. Durch Drehen des Elektromotors 406 in entgegengesetzte Richtungen wird der Auswerferstift 408 vor und zurück bewegt.

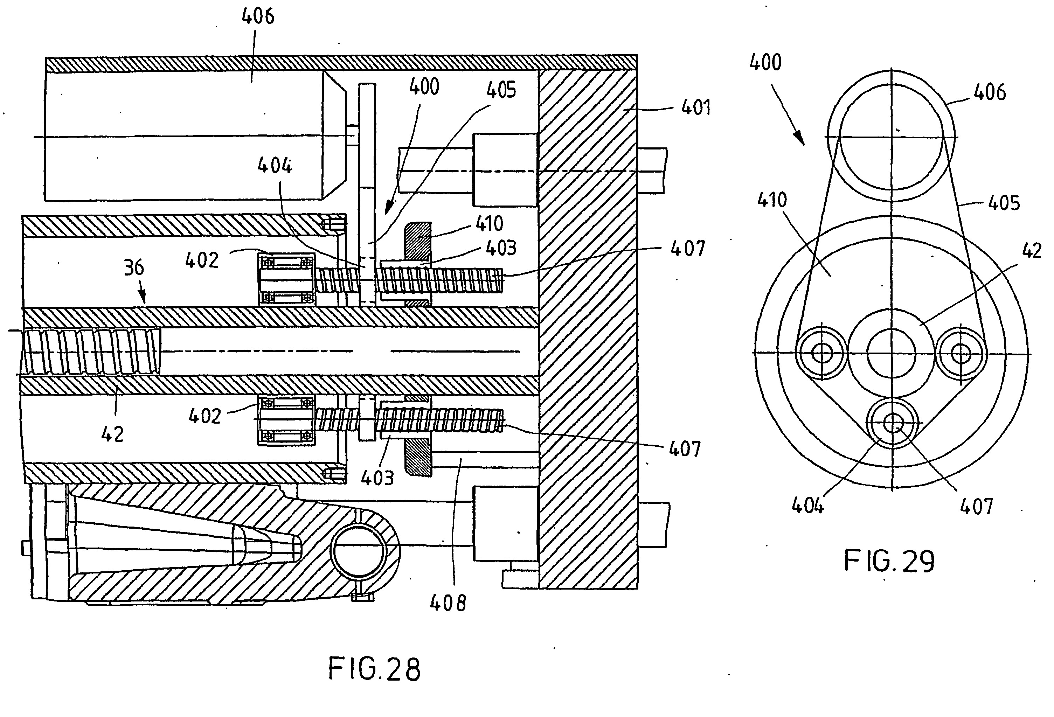

Bei dem Ausführungsbeispiel nach den Figuren 28 und 29 befinden sich mehrere Auswerferstifte 408 an einer Platte 410, in die verdrehsicher drei Spindelmuttem 403 eingesetzt sind. Durch jede Spindelmutter geht eine Gewindespindel 407 hindurch, die in einem außen an der Kolbenstange 42 befestigten Wälzlager 402 drehbar gelagert und axial festgehalten ist und die zwischen dem Wälzlager und der Platte 410 verdrehsicher ein verzahntes Treibrad 404 trägt. An der Formaufspannplatte 401 ist wiederum ein Elektromotor 406 befestigt, der über ein auf seiner Welle sitzendes Ritzel und einen um dieses Ritzel und die drei Treibräder 404 gelegten Treibriemen 405 die Gewindespindeln 407 drehend antreiben und dadurch je nach Drehrichtung die platt 410 und mit dieser die drei Auswerferstift 408 vor und zurück fahren kann.

Zwischen den beiden Figuren 28 und 29 besteht eine Diskrepanz hinsichtlich der Anordnung der einen Gewindespindel 407, die in Figur 28 um 90 Grad gegenüber der Figur 29 gedreht gezeichnet ist, um in Figur 28 mehrere Gewindespindeln zeigen zu können.

Bei dem Ausführungsbeispiel nach den Figuren 30 und 31 weist die Antriebsvorrichtung 400 für mehrere Auswerferstifte 408 ein Schubkurbelgetriebe mit einem Gleitkörper 411 auf, an dem die Auswerferstifte 408 befestigt sind und der in einem an die Kolbenstange 42 angebauten und mit der Formaufspannplatte 401 verbundenen Adapterstück 412 in Achsrichtung der Kolbenstange und der Gewindespindel 25 und in Bewegungsrichtung der Formaufspannplatte 401 geführt ist. An einer verlängerten Motorwelle 413 eines vertikal an der Formaufspannplatte 401 gehaltenen Elektromotors 406 ist eine Kurbel 414 befestigt, die über eine Koppelstange 415 gelenkig mit dem Gleitkörper 411 verbunden ist. Durch Drehen der Motorwelle 413 in die zwei entgegengesetzte Richtungen werden der Gleitkörper 411 und die Auswerferstifte 408 nach vorne und nach hinten bewegt. Damit die Auswerferstifte nicht zu lang sein müssen, ist die Anlenkstelle der Koppelstange 415 in dem Gleitkörper 411 versenkt und in diesem die notwendigen Aussparungen geschaffen, um nicht an die Motorwelle, die Kurbel und die Koppelstange zu stoßen.

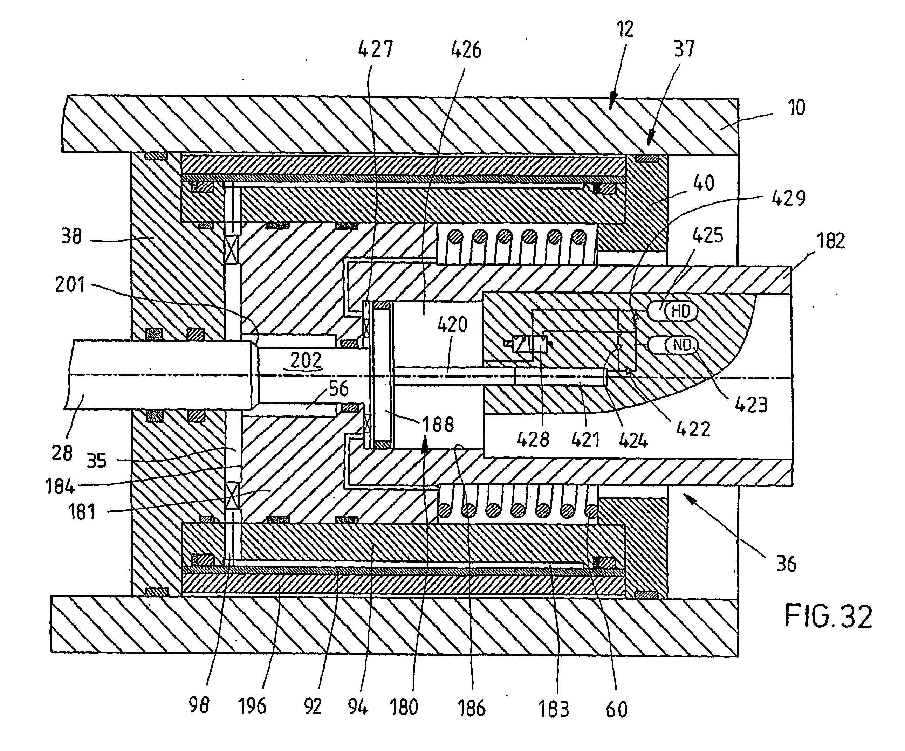

Das Ausführungsbeispiel nach Figur 32 besitzt einen Kraftübersetzer 12 mit einem Zylinder 37, der in seiner Gestaltung mit dem Boden 38, dem Flansch 40 und den Rohren 94 und 92, dem Freiraum 183 dazwischen und den Bremsstäben 196 mit dem Zylinder 37 aus Figur 16 übereinstimmt.

Der nur schematisch dargestellte große Kolbens 36 hat einen kolbenstangenartigen Teil 182, der von kleinerem Durchmesser ist und durch den Flansch 40 nach außen tritt und einen kolbenbundartigen Teil 181, der von größerem Durchmesser ist und der Führung des Kolbens und der Abdichtung des Druckraums 35 dient. Zwischen den Kolben 36 und den Zylinder 37 ist wiederum eine Schraubendruckfeder 60 eingespannt.

Wie der Kolben 36 aus Figur 15 besitzt auch der Kolben 36 des Ausführungsbeispiels nach Figur 32 im Innem einen Hohlraum (Kupplungsraum) 186, der eine Koppelungseinrichtung 180 für die Koppelung der beiden Kolben 36 und 28 aufnimmt. Der kleine Kolben 28 tritt mit einem bestimmten Durchmesser durch den Boden 38 des Zylinders 37 abgedichtet in den Druckraum 35 ein. Darin verkleinert sich sein Querschnitt in einer Stufe 201, der ein Kolbenfortsatz 202 kleineren Durchmessers folgt. Nach Durchqueren einer zum Boden 38 des Zylinders 37 hin offenen Sackbohrung 56 des Kolbens 36, deren Durchmesser so groß ist, daß der Kolben 28 mit seinem größeren Durchmesser in sie eintauchen kann, tritt der Kolbenfortsatz 202 abgedichtet in den Kupplungsraum 186 ein. In diesem ist der kleine Kolben 28 ein weiteres mal im Durchmesser abgesetzt und taucht mit einem Pumpenkolbenabschnitt 420 von gegenüber dem Fortsatz 202 kleinerem Durchmesser dichtend in eine von dem Kupplungsraum 186 ausgehenden axialen Sackbohrung 421 ein. Der Pumpenkolbenabschnitt 420 und die Sackbohrung 421 bilden den Verdränger und den Verdrängerraum einer einfachen Plungerpumpe. Der Sackbohrung 421 kann über ein zu ihr hin öffnendes Rückschlagventil 422 Druckflüssigkeit aus einem Niederdruckspeicher 423 zuströmen. Über ein zu der Sackbohrung hin sperrendes Rückschlagventil 424 kann Druckflüssigkeit aus der Sackbohrung in einen Hochdruckspeicher 425 verdrängt werden.

Innerhalb des Kupplungsraums 186, dessen Querschnittsfläche wesentlich größer als die Querschnittsfläche des Kolbenfortsatzes 202 oder des Pumpenkolbenabschnitts 420 des kleinen Kolbens 28 ist, trägt der Kolben 28 am Übergang von dem Fortsatz 202 auf den Pumpenkolbenabschnitt 420 eine Kolbenscheibe 188, die den Kupplungsraum 186 in zwei gegeneinander abgedichtete Räume 426 und 427 aufteilt. Der Raum 427 (Luftraum) auf Seiten des Fortsatzes 202 ist zur Atmosphäre offen, also mit Luft gefüllt. Der andere Raum 426 (Flüssigkeitsraum) ist mit Druckflüssigkeit gefüllt und an ein elektromagnetisch betätigbares 3/2 Wegeventil 428 angeschlossen, das den Flüssigkeitsraum 426 in der Ruhestellung fluidisch mit dem Hochdruckspeicher 425 und in der betätigten Stellung mit dem Niederdruckspeicher 423 verbindet. Zwischen die beiden Hydrospeicher ist ein Überströmventil 429 eingefügt, das vom Hochdruckspeicher zum Niederdruckspeicher hin öffnet, wenn eine bestimmte Druckdifferenz zwischen den beiden Hydrospeichern überschritten wird.

In Figur 32 ist die Hydroeinheit in einem Zustand gezeigt, in dem die Form einer Kunststoffspritzgießmaschine ganz geöffnet ist. Der große Kolben 36 befindet sich mit seiner Stirnseite 184 über niedrige Abstandshalter am Boden 38 des Zylinders 37. Der kleine Kolben 28 nimmt eine Position ein, in der sich die Kolbenscheibe 188 am einen Ende des Kupplungsraums 186 befindet. Das Wegeventil befindet sich in seiner Ruhestellung, so daß in dem Flüssigkeitsraum 426 Druck ansteht. Dieser ist so groß, daß die Druckflüssigkeit die für die Stellbewegung der beweglichen Formaufspannplatte notwendige Kraft wie eine starre Mechanik überträgt. Soll nun die Form geschlossen werden, so wird der kleine Kolben 28 und mit ihm die Kolbenscheibe 188 durch entsprechende Ansteuerung des in Figur 32 nicht gezeigten Elektromotors in der Ansicht nach Figur 32 nach rechts bewegt. Die Bewegung der Kolbenscheibe wird über die Druckflüssigkeit in dem Flüssigkeitsraum 426 unmittelbar auf den großen Kolben 36 und damit auf die bewegliche Formaufspannplatte übertragen. Der große Kolben 36 nimmt über die Schraubendruckfeder 60 auch den Zylinder 37 mit. Der Druck im Druckraum 35 ändert sich nicht.

ist schließlich die Form geschlossen, so wird das Wegeventil 428 umgeschaltet, so daß sich die Druckflüssigkeit im Flüssigkeitsraum 426 auf Niederdruck entspannt und bei der weiteren Bewegung des kleinen Kolbens 28 relativ zum großen Kolben 36 mit geringer Kraft aus dem Flüssigkeitsraum 426 in den Niederdruckspeicher 423 verdrängt werden kann. Der Kolben 28 bewegt sich weiter und taucht tiefer in die Sackbohrung 56 ein und verdrängt mit seiner Ringfläche 201 Druckflüssigkeit. Dadurch steigt der Druck im Druckraum 35 an, so daß der Zylinder 37 festgeklemmt wird und die hohe Zuhaltekraft aufgebaut wird.

Während der weiteren Bewegung des kleinen Kolbens 28 taucht dessen Pumpenkolbenabschnitt 420 tiefer in die Sackbohrung 421 ein und verdrängt daraus Druckflüssigkeit in den Hochdruckspeicher 425. Die verdrängte Menge ist etwas größer als die Menge, die bei der vorangegangenen Dekompression des Flüssigkeitsraums 426 in den Niederdruckspeicher 423 weggeströmt ist und bei der folgenden Kompression aus dem Hochdruckspeicher in den Flüssigkeitsraum fließen wird. Die überschüssige Menge wird möglichst klein gehalten und gelangt vom Hochdruckspeicher über das Überströmventil 429 wieder in den Niederdruckspeicher, so daß die Druckdifferenz zwischen den beiden Speichern einen bestimmten Wert nicht überschreitet.

Zum Öffnen der Form wird der Elektromotor in die entgegengesetzte Drehrichtung angetrieben, so daß sich der Kolben 28, nach Figur 32 betrachtet, nach links bewegt. Aus dem Niederdruckspeicher 423 strömt Druckflüssigkeit über das Wegeventil 428 in den sich vergrößernden Flüssigkeitsraum 426 und über das Rückschlagventil 422 in den sich vergrößernden Verdrängerraum 421. Der Druck im Druckraum 35 wird abgebaut. Schließlich nimmt der Kolben 28 über die Kolbenscheibe 188 den Kolben 36 und dieser den Zylinder 37 in Öffnungsrichtung der Form mit. Das Wegeventil wird wieder in seine Ruhestellung gebracht und dadurch der Flüssigkeitsraum 426 mit dem im Hydrospeicher 425 herrschenden Hochdruck beaufschlagt.

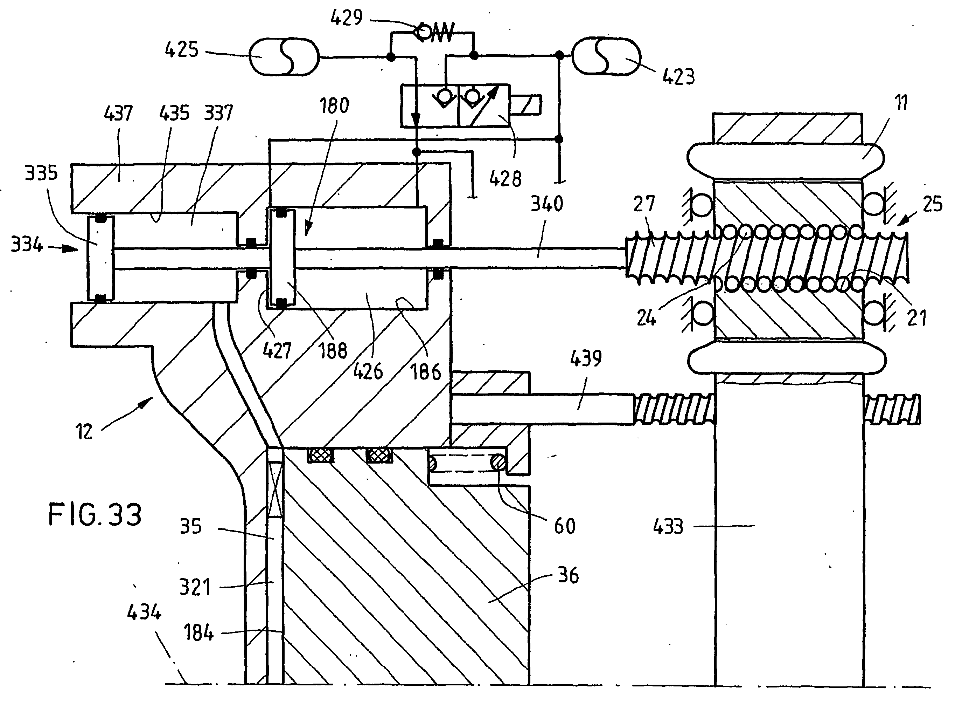

Von dem Ausführungsbeispiel nach Figur 33 ist nur die eine durch Teilung längs der Bewegungsrichtung einer beweglichen Formaufspannplatte entstehende Hälfte gezeigt. Die andere Hälfte ist spiegelbildlich dazu aufgebaut.

In einer feststehenden Formaufspannplatte 433 ist außerhalb der Mittelachse 434 ein elektrischer Hohlwellenmotor 11 befestigt, dessen Hohlwelle innen ein Kugelrollgewinde 21 aufweist und über Kugeln 24 mit einem Gewindeabschnitt 27 einer gegen Drehen gesicherten und geradlinig verfahrbaren Hubspindel 25 in Eingriff steht. Von dem Gewindeabschnitt 27 aus erstreckt sich eine Kolbenstange 340 des kleinen Kolbens 334 eines hydraulischen Kraftübersetzers 12 parallel zur Mittelachse bis in einen zylindrischen Hohlraum 435 eines plattenförmigen Zwischenteils 437 des Kraftübersetzers 12 hinein, das in nicht näher dargestellter weise an Holmen längs der Achse 434 geführt ist. Innerhalb des Hohlraums. 435 ist an der Kolbenstange 340 ein Kolbenbund 335 befestigt, der kolbenstangenseitig einen mit Druckflüssigkeit gefüllten Teilraum 337 eines Druckraums 35 des Kraftübersetzers begrenzt und kolbenstangenabseitig Atmosphäre ausgesetzt ist.

Vor Eintritt in den Hohlraum 435 quert die Kolbenstange 340 einen Kupplungsraum 186, der sich in der Platte 437 befindet und in dem an der Kolbenstange die Kolbenscheibe 188 einer hydraulischen Koppelungseinrichtung 180 befestigt ist. Die Kolbenscheibe teilt wie bei dem Ausführungsbeispiel nach Figur 32 den Kupplungsraum 186 in zwei gegeneinander abgedichtete Kupplungsteilräume 426 und 427 auf. Der zum Hohlraum 435 hin gelegene Kupplungsteilraum 427 ist dauernd mit einem an der Platte 437 sitzenden Niederdruckspeicher 423 verbunden. Der andere Kupplungsteilraum 426 ist wie bei dem Ausführungsbeispiel nach Figur 32 mit Druckflüssigkeit gefüllt und an ein elektromagnetisch betätigbares 3/2 Wegeventil 428 angeschlossen, das den Kupplungsteilraum 426 in der Ruhestellung fluidisch mit dem Hochdruckspeicher 425 und in der betätigten Stellung mit dem Niederdruckspeicher 423 verbindet. Die Kupplungsteilräume am anderen kleinen Kolben 334 sind in gleicher Weise an das Wegeventil 428 und den Niederdruckspeicher 423 angeschlossen. Wie bei dem Ausführungsbeispiel nach Figur 32 ist eine nicht näher gezeigte Pumpeinrichtung vorhanden, die Druckflüssigkeit vom Niederdruckspeicher zum Hochdruckspeicher fördert, um die Verschleppung von Druckflüssigkeit durch den Druckaufbau und den Druckabbau in dem Raum 426 und die Leckage über die Kolbenscheibe 188 auszugleichen.

Zentrisch zu der Mittelachse 434 nimmt die Platte 437 den großen Kolben 36 des Kraftübersetzers 12 auf. Der große Kolben 36 begrenzt mit der Platte 437 einen über einen durch die Platte führenden Kanal 438 mit dem Teilraum 337 am kleinen Kolben 334 fluidisch verbundenen Teilraum 321 des Druckraums 35. Zwischen dem großen Kolben 36 und der Platte 437 ist eine Schraubendruckfeder 60 eingespannt, die die beiden Teile im Sinne einer Minimierung des Volumens des Teilraums 321 beaufschlagt.

An der Platte 437 sind Stangen 439 befestigt, mit denen die Platte gegenüber der festen Formaufspannplatte 433 arretiert, also gegen eine Bewegung blockiert werden kann.

Das Formwerkzeug für das zu spritzende Kunststoffteil kann unmittelbar oder über eine zusätzliche Formaufspannplatte von dem großen Kolben 36 getragen werden.

In Figur 33 ist die Antriebsvorrichtung in einem Zustand gezeigt, in dem die Form einer Kunststoffspritzgießmaschine ganz geöffnet ist. Der große Kolben 36 der Hydroeinheit 12 befindet sich mit seiner Stirnseite 184 über niedrige Abstandshalter am Boden der Aufnahme in der Platte 437. Der kleine Kolben 334 nimmt eine Position ein, in der sich die Kolbenscheibe 188 am einen Ende des Kupplungsraums 186 befindet und der Kolbenbund 335 den Teilraum 337 maximal macht. Das Wegeventil befindet sich in seiner Ruhestellung, so daß in dem Kupplungsteilraum 426 Druck ansteht. Dieser ist so groß, daß die Druckflüssigkeit die für die Stellbewegung der beweglichen Werkzeughälfte notwendige Kraft wie eine starre Mechanik überträgt. Soll nun die Form geschlossen werden, so wird der kleine Kolben 334 und mit ihm die Kolbenscheibe 188 durch entsprechende Ansteuerung des Elektromotors 11 in der Ansicht nach Figur 33 nach rechts bewegt. Die Bewegung der Kolbenscheibe wird über die Druckflüssigkeit in dem Kupplungsteilraum 426 unmittelbar auf die Platte 437, also auf das Zwischenteil des Kraftübersetzers 12 und vom Zwischenteil auf den großen Kolben 36 und damit auf die bewegliche Werkzeughälfte übertragen. Der Druck im Druckraum 35 ändert sich nicht.

Ist schließlich die Form geschlossen, wird die Platte 437 über die Stangen 439 gegen eine Bewegung blockiert und das Wegeventil 428 umgeschaltet. Die Druckflüssigkeit im Kupplungsteilraum 426 entspannt sich auf Niederdruck und kann bei der weiteren Bewegung des kleinen Kolbens 334 relativ zur Platte 437 durch die Kolbenscheibe 188 aus dem Kupplungsteilraum 426 in den Niederdruckspeicher 423 verdrängt werden. Der Kolben 334 bewegt sich weiter und verringert mit seinem Kolbenbund 335 das Volumen des Teilraums 337 des Druckraums 35. Dadurch steigt der Druck im Druckraum 35 an, so daß die hohe Zuhaltekraft aufgebaut wird.

Zum Öffnen der Form wird der Elektromotor 11 in die entgegengesetzte Drehrichtung angetrieben, so daß sich der Kolben 334, nach Figur 33 betrachtet, nach links bewegt. Der Druck im Druckraum 35 wird abgebaut. Aus dem Niederdruckspeicher 423 strömt Druckflüssigkeit über das Wegeventil 428 in den sich vergrößernden Kupplungsteilraum 426. Dann wird die Blockierung der Platte 437 aufgehoben. Im folgenden wird vom kleinen Kolben 334 über die Kolbenscheibe 188 die Platte 437 und von dieser über die entsprechend der für die Stellbewegung zurück notwendigen Kraft vorgespannte Schraubenfeder 60 der Kolben 36 mitgenommen. Das Wegeventil wird wieder in seine Ruhestellung gebracht und dadurch der Flüssigkeitsraum 426 mit dem im Hydrospeicher 425 herrschenden Hochdruck beaufschlagt.

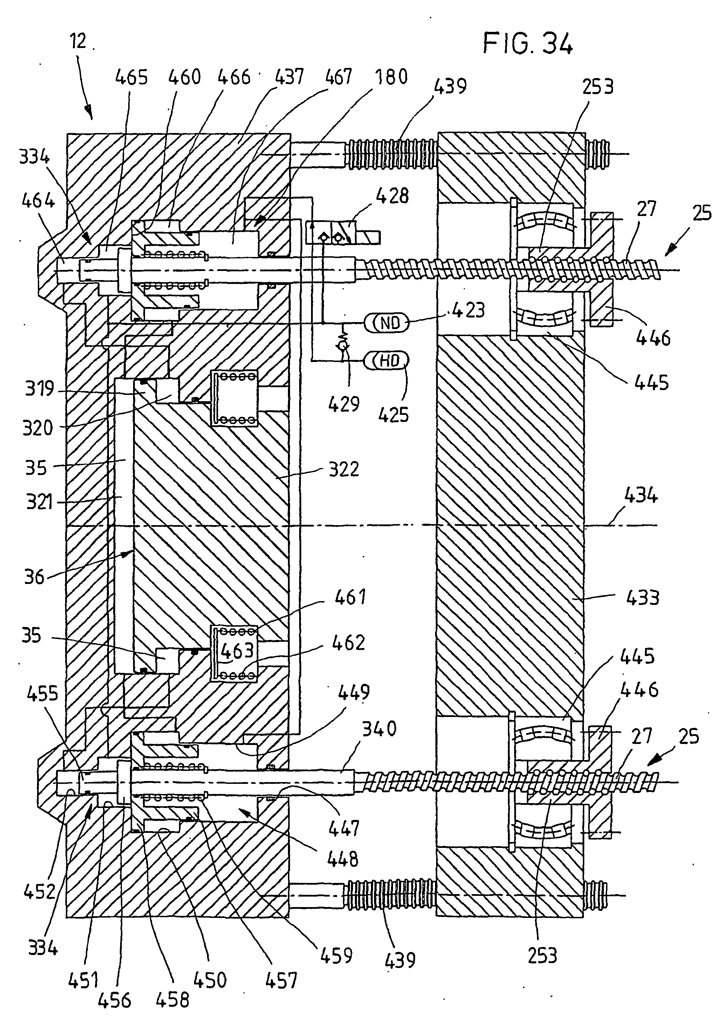

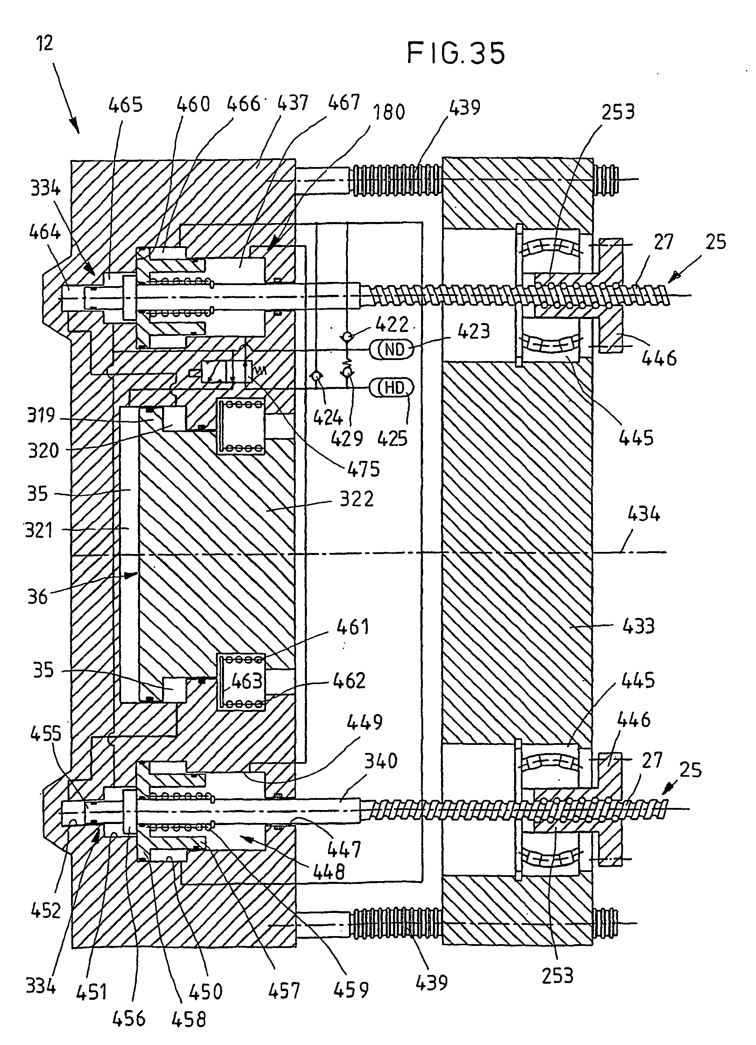

Bei den beiden Ausführungsbeispielen nach den Figuren 34 und 35 ist der hydraulische Kraftübersetzer 12 doppeltwirkend ausgebildet. In der feststehenden Formaufspannplatte 433 sind, bezüglich der Mittelachse 434 einander diametral gegenüberliegend, über Pendelrollenlager 445 zwei Spindelmuttern 253 axial ortsfest drehbar gelagert, die eine Treibscheibe 446 aufweisen, über die sie von einem nicht näher dargestellten Elektromotor über einen Riemen antreibbar sind. Jede Spindelmutter 253 steht über Kugeln mit einem Gewindeabschnitt 27 einer gegen Drehen gesicherten und geradlinig verfahrbaren Hubspindel 25 in Eingriff. Wie bei dem Ausführungsbeispiel nach Figur 33 erstreckt sich von dem Gewindeabschnitt 27 der Hubspindel 25 aus eine Kolbenstange 340 eines kleinen Kolbens 334 des hydraulischen Kraftübersetzers 12 parallel zur Mittelachse 434 abgedichtet durch einen Durchgang 447 hindurch bis in einen mehrere sich in ihren Durchmessern voneinander unterscheidende zylindrische Abschnitte aufweisenden Hohlraum 448 eines plattenförmigen Zwischenteils 437 des Kraftübersetzers 12 hinein, das in nicht näher dargestellter Weise an Holmen längsgeführt ist. Auf den Durchgang 447 folgt zunächst ein Hohlraumabschnitt 449, dessen Durchmesser etwa dreimal so groß wie der Durchmesser der Kolbenstange 340 ist. Der folgende Hohlraumabschnitt 450 hat einen größeren Durchmesser als der Hohlraumabschnitt 449. Der Durchmesser des sich anschließenden Hohlraumabschnitts 451 liegt zwischen den Durchmessern der Abschnitte 449 und 450. Der Durchmesser des letzten, sacklochartigen Hohlraumabschnitts 452 schließlich ist geringfügig kleiner als der Durchmesser des Durchgangs 447. In den Hohlraumabschnitt 452 taucht der kleine Kolben 334 mit einem plungerartigen Kolbenabschnitt 455 abgedichtet hinein. Am Übergang zwischen der Kolbenstange 340 und dem Kolbenabschnitt 455 ist auf diesem eine Mitnahmescheibe 456 befestigt, deren Durchmesser kleiner als der Durchmesser des Hohlraumabschnitts 451 ist. Vor der Mitnahmescheibe ist auf der Kolbenstange 340 ein weiterer, stufiger Kolbenabschnitt 457 längsbeweglich geführt. Dieser taucht abgedichtet in den Hohlraumabschnitt 449 ein und besitzt einen zusätzlichen Kolbenbund 458, der einen weiteren Kolbenabschnitt des kleinen Kolbens 334 darstellt. Der Kolbenbund 458 hat einen Durchmesser, der geringfügig kleiner als der Durchmesser des Hohlraumabschnitts 450 und ist zur Wand dieses Hohlraumabschnitts abgedichtet. Zwischen dem Kolbenabschnitt 457 und der Kolbenstange 340 ist eine Druckfeder 459 eingespannt, die den Kolbenabschnitt in Richtung auf die Mitnahmescheibe 456 und in Richtung auf die Stufe zwischen den beiden Hohlraumabschnitten 450 und 451 zu belastet. Die Stufe bildet eine Anschlag 460 für den Kolbenabschnitt 457.

Zentrisch zu der Mittelachse 434 nimmt die Platte 437 den großen Kolben 36 des Kraftübersetzers 12 auf. Dieser ist nun doppeltwirkend als Differenzkolben mit einem Kolbenbund 319 und mit einer Kolbenstange 322 ausgebildet und begrenzt mit der Platte 437 einen vollzylindrischen Teilraum 321 eines ersten Druckraums 35, durch dessen Druckbeaufschlagung der große Kolben in Richtung Ausfahren der Kolbenstange belastet wird, und einen ringförmigen Teilraum 320 eines zweiten Druckraums 35. Durch zwei die Kolbenstange 322 umgebende Schraubendruckfedern 461 und 462, die sich beide einerseits an einem ringförmigen und sowohl von der Platte 437 als auch vom großen Kolben 36 mitnehmbaren Federteller 463 und andererseits am großen Kolben bzw. an der Platte abstützen, sind Platte und großer Kolben zueinander federzentriert.

Der Teilraum 320 ist bei beiden Ausführungsbeispielen nach den Figuren 34 und 35 dauernd mit dem Freiraum 464 vor den Kolbenabschnitten 455 der beiden kleinen Kolben 334 fluidisch verbunden. Zu beiden Ausführungsbeispielen gehören wiederum ein Niederdruckspeicher 423 und ein Hochdruckspeicher 425 sowie ein 3/2 Wegeventil 428. Die Freiräume 465 zwischen der Dichtung an dem Kolbenabschnitt 455 und der Dichtung an dem Kolbenbund 458 sind fluidisch dauernd mit dem Niederdruckspeicher 423 verbunden.

Unterschiedlich zwischen den beiden gerade betrachteten Ausführungsbeispielen ist die fluidische Anbindung der Freiräume 466 zwischen der Dichtung an den Kolbenbunden 458 und der an der Wand des jeweiligen Hohlraumabschnitts 449 anliegenden Dichtung des Kolbenabschnitts 457 sowie der Freiräume 467 vor der letztgenannten Dichtung. Bei dem Ausführungsbeispiel nach Figur 34 sind die Freiräume 466 dauernd mit dem Teilraum 321 am großen Kolben 36 verbunden und bilden somit Teilräume des ersten Druckraums 35. Die Freiräume 467 sind je nach Stellung des Wegeventils 428 entweder mit dem Niederdruckspeicher oder mit dem Hochdruckspeicher verbunden. Sie bilden zusammen den Kupplungsraum einer zwischen den kleinen Kolben 334 und der Platte 437, also dem Zwischenteil des hydraulischen Kraftübersetzers 12, vorgesehenen hydraulischen Kupplungseinrichtung, deren Kupplungsscheibe der kleinere Teil des Kolbenabschnitts 457 ist.

Beim Ausführungsbeispiel nach Figur 35 entsprechen die Kolbenbunde 458 dem Kolbenabschnitt 420 und die Freiräume 466 dem Raum 421 des Ausführungsbeispiels nach Figur 32. Dementsprechend kann Druckflüssigkeit aus diesen Freiräumen 466 über ein Rückschlagventil 424 in den Hochdruckspeicher 425 verdrängt werden und aus dem Niederdruckspeicher 423 über ein Rückschlagventil 422 in die Freiräume 466 nachfließen. Es ist ein 4/2 Wegeventil mit einer Ruhestellung vorhanden, in der die Freiräume 467 mit dem Hochdruckspeicher 425 und der Teilraum 321 des ersten Druckraums 35 mit dem Niederdruckspeicher 423 verbunden ist. Das Wegeventil kann durch einen Elektromagneten in die zweite Schaltstellung gebracht werden, in der die Hydrospeicher zu den Räumen 321 und 467 abgesperrt und der Teilraum 321 mit den Freiräumen 467 verbunden sind. Diese sind insofern Teilräume des ersten Druckraums 35. Die Freiräume 467 bilden zugleich den Kupplungsraum einer zwischen den kleinen Kolben 334 und der Platte 437 angeordneten hydraulischen Kupplung.

In den Figuren 34 und 35 sind die beiden Antriebsvorrichtungen in einem Zustand gezeigt, in dem die Form einer Kunststoffspritzgießmaschine ganz geöffnet ist. Der Kolbenbund 319 des großen Kolbens 36 der Hydroeinheit 12 befindet sich in einer Mittelstellung bezüglich seiner möglichen Hubstrecke. Die Kolbenabschnitte 457 der kleinen Kolben 334 liegen am Anschlag 460 an Die Mitnahmescheibe 456 befindet sich knapp hinter dem Kolbenabschnitt 457. Das Wegeventil 428 bzw. 475 befindet sich in seiner Ruhestellung, so daß in den Freiräumen 467 Druck ansteht. Dieser ist so groß, daß die Druckflüssigkeit die für die Stellbewegung der beweglichen Werkzeughälfte notwendige Kraft wie eine starre Mechanik überträgt. Soll nun die Form geschlossen werden, so werden die Kolbenstange 340 und mit dieser die verschiedenen Kolbenabschnitte der kleinen Kolben 334 durch entsprechende Ansteuerung des Elektromotors in der Ansicht nach Figur 33 nach rechts bewegt. Die Bewegung des Kolbenabschnitts 457 wird über die Druckflüssigkeit in den Freiräumen 467 unmittelbar auf die Platte 437, also auf das Zwischenteil des Kraftübersetzers 12, und vom Zwischenteil über die Schraubendruckfeder 461 auf den großen Kolben 36 und damit auf die bewegliche Werkzeughälfte übertragen. Der Druck in den Druckräumen 35 ändert sich nicht.

Ist schließlich die Form geschlossen, wird die Platte 437 über die Stangen 439 gegen eine Bewegung blockiert. Bei dem Ausführungsbeispiel nach Figur 34 wird das Wegeventil 428 umgeschaltet. Die Druckflüssigkeit in den Freiräumen 467 entspannt sich auf Niederdruck und kann bei der weiteren Bewegung der kleinen Kolben 334 relativ zur Platte 437 aus den Freiräumen 467 in den Niederdruckspeicher 423 verdrängt werden kann. Die Kolben 334 bewegen sich weiter und verringern mit den Kolbenbunden 458 das Volumen der Teilräume 466 des ersten Druckraums 35. Dadurch steigt der Druck auch im Teilraum 321 dieses Druckraums 35 an, so daß die hohe Zuhaltekraft aufgebaut wird.

Bei dem Ausführungsbeispiel nach Figur 35 wird nach dem Umschalten des Wegeventils 475 durch die Weiterbewegung der kleinen Kolben 334 Druckflüssigkeit aus den Freiräumen 467 in den Teilraum 321 des ersten Druckraums 35 verdrängt, so daß ebenfalls ein hoher Zuhaltedruck aufgebaut wird. Während der weiteren Bewegung der kleinen Kolben 334 verdrängen deren Kolbenbunde 458 Druckflüssigkeit aus den Freiräumen 466 in den Hochdruckspeicher 425. Wie bei dem Ausführungsbeispiel nach Figur 32 wird also die Bewegung der kleinen Kolben relativ zu einem feststehenden Teil des hydraulischen Kraftübersetzers dazu ausgenutzt, um Druckflüssigkeit vom Niederdruckspeicher in den Hochdruckspeicher zu fördern.

Zum Öffnen der Form werden die kleinen Kolben 334 durch Umkehrung der Drehrichtung des antreibenden Elektromotors, nach den Figuren 34 und 35 betrachtet, nach links bewegt, wobei der Kolbenabschnitt 457 der Kolbenstange 340 aufgrund der Feder 459 folgt. Der Druck im ersten Druckraum 35 wird abgebaut. Bei dem Ausführungsbeispiel nach Figur 34 strömt Druckflüssigkeit aus dem Niederdruckspeicher 423 strömt über das Wegeventil 428 in die sich vergrößernde Freiräume 467, bis die Kolbenabschnitte 457 an den Anschlägen 460 anliegen. Im folgenden wird durch Eintauchen der Kolbenabschnitte 455 der kleinen Kolben 334 in die Freiräume 464 im zweiten Druckraum 35 ein Druck aufgebaut, durch den die bewegliche Werkzeughälfte losgerissen wird. Dann wird die Blockierung der Platte 437 aufgehoben. Die Federn 459, deren Vorspannung durch die weitere Bewegung der kleinen Kolben nach links noch vergrößert worden ist, schieben die Platte 437 und den großen Kolben 36 den kleinen Kolben nach. Dann folgen die Platte 437 und der große Kolben 36 den kleinen Kolben 334 aufgrund der Federn 459 und der Feder 462. Das Wegeventil wird wieder in seine Ruhestellung gebracht und dadurch der Flüssigkeitsraum 467 mit dem im Hydrospeicher 425 herrschenden Hochdruck beaufschlagt.

Bei dem Ausführungsbeispiel nach Figur 35 strömt nach Umkehrung der Bewegungsrichtung der kleinen Kolben 334 Druckflüssigkeit aus dem Niederdruckspeicher 423 über das Rückschlagventil 422 in die sich vergrößernden Freiräume 466. Der erste Druckraum 35 wird durch die Bewegung der Kolbenabschnitte 457 bis zu den Anschlägen 460 dekomprimiert. Dann wird das Wegeventil 475 in seine Ruhestellung umgeschaltet, so daß die Teilräume 467 mit dem Hochdruckspeicher und der Teilraum 321 des ersten Druckraums 35 mit dem Niederdruckspeicher verbunden sind. Im folgenden wird wie beim Ausführungsbeispiel nach Figur 34 durch Eintauchen der Kolbenabschnitte 455 der kleinen Kolben 334 in die Freiräume 464 im zweiten Druckraum 35 ein Druck aufgebaut, durch den die bewegliche Werkzeughälfte losgerissen wird. Dann wird die Blockierung der Platte 437 aufgehoben. Anschließend wird die Form wie beim Ausführungsbeispiel nach Figur 34 geöffnet.

## Patentansprüche

1. Antriebsvorrichtung, insbesondere für die Schließeinheit, die Einspritzeinheit oder die Auswerfer einer Kunststoffspritzgießmaschine,
mit einem durch einen Elektromotor (11, 170) axial verfahrbaren Antriebselement (25, 234, 253)
und mit einer durch Verfahren des Antriebselements (25, 234, 253) in dieselbe Richtung wie dieses verfahrbaren Hydroeinheit (12),
**dadurch gekennzeichnet, daß** die Hydroeinheit (12) ein Kraftübersetzer mit zwei relativ zueinander beweglichen und sich in der Größe ihrer Wirkflächen voneinander unterscheidende Kolben (28, 228, 256, 334; 36, 290, 318) und mit einem Zwischenteil (37, 287, 317,437) ist, das zusammen mit den Kolben einen mit einer Druckflüssigkeit gefüllten Druckraum (35) einschließt,
daß der die kleinere Wirkfläche aufweisende, kleine Kolben (28, 228, 256, 334) mit dem Antriebselement (25, 234, 253) mechanisch verbunden ist,
daß für eine Stellbewegung die Hydroeinheit (12) als Ganzes verfahrbar ist, und daß für die Ausübung einer hohen Kraft durch den die größere Wirkfläche aufweisenden, großen Kolben (36, 290, 318) das Zwischenteil gegen eine Verschiebung relativ zu einem ortsfesten Gestell (10, 240, 433) blockierbar ist.

2. Antriebsvorrichtung nach Anspruch 1, **dadurch gekennzeichnet, daß** eine Koppelungseinrichtung (60, 324,) vorhanden ist, durch die Zwischenteil (37, 287, 317) und großer Kolben (36, 287, 318) der Hydroeinheit (12) für eine Stellbewegung lagefest miteinander gekoppelt sind, und daß für die Ausübung der hohen Kraft durch den großen Kolben (36, 318) der Hydroeinheit (12) die feste Koppelung zwischen großem Kolben (36, 318) und Zwischenteil (37, 287, 317) lösbar ist.

3. Antriebsvorrichtung nach Anspruch 1 oder 2, **dadurch gekennzeichnet, daß** die Koppelungseinrichtung eine Feder (60, 324) umfaßt, die zwischen dem großen Kolben (36, 318) und dem Zwischenteil (37, 317) eingespannt ist, daß großer Kolben (36, 318) und Zwischenteil (37, 317) durch die Feder (60, 324) axial aneinander andrückbar sind und daß bei axialer Anlage von großem Kolben (36, 318) und Zwischenteil (37, 317) aneinander die Vorspannkraft der Feder (60, 324) größer ist als die zur Ausführung der Stellbewegung erforderliche Stellkraft.

4. Antriebsvorrichtung nach einem vorhergehenden Anspruch, **dadurch gekennzeichnet, daß** das Zwischenteil als Zylinder (37) ausgebildet ist, der den großen Kolben (36) außen umgibt und daß der kleine Kolben (28, 256) durch einen Flansch (38) des Zylinders (37) hindurch plungerartig frei in den Druckraum (35) hineinragt.

5. Antriebsvorrichtung nach Anspruch 4, **dadurch gekennzeichnet, daß** der große Kolben (36) eine zu dem Flansch (28) des Zylinders (37) hin offene Sackbohrung (56) aufweist, in die der kleine Kolben (28) eintauchen kann.

6. Antriebsvorrichtung nach einem vorhergehenden Anspruch, **dadurch gekennzeichnet, daß** eine Koppelungseinrichtung (85, 180, 195) vorhanden ist, durch die das Antriebselement (25, 253) und das Zwischenteil (37, 287, 437) der Hydroeinheit (12) für eine Stellbewegung unmittelbar lagefest miteinander gekoppelt sind, und daß für die Ausübung der hohen Kraft durch den großen Kolben (36, 290) der Hydroeinheit (12) die feste Koppelung zwischen dem Antriebselement (25, 253) und dem Zwischenteil (37, 287, 437) lösbar ist.

7. Antriebsvorrichtung nach Anspruch 6, **dadurch gekennzeichnet, daß** der große Kolben (36) und das Zwischenteil (37) der Hydroeinheit (12) durch eine Feder (60) aneinander andrückbar sind, deren Vorspannkraft kleiner als die zur Ausführung der Stellbewegung erforderliche Stellkraft ist.

8. Antriebsvorrichtung nach einem vorhergehenden Anspruch, **dadurch gekennzeichnet, daß** eine Koppelungseinrichtung (180, 195) vorhanden ist, durch die das Antriebselement (25, 234) bzw. der kleine Kolben (28, 228, 334) einerseits und der große Kolben (36, 318) der Hydroeinheit (12) andererseits für eine Stellbewegung unmittelbar lagefest miteinander gekoppelt sind, und daß für die Ausübung der hohen Kraft durch den großen Kolben (36, 318) der Hydroeinheit (12) die feste Koppelung zwischen dem Antriebselement (25, 234) bzw. dem kleinen Kolben (28, 228, 334) und dem großen Kolben (36, 318) lösbar ist.

9. Antriebsvorrichtung nach Anspruch 8, **dadurch gekennzeichnet, daß** der große Kolben (36, 318) und das Zwischenteil (37, 317) der Hydroeinheit (12) durch eine Feder (60, 324) aneinander andrückbar sind, über die das Zwischenteil (37, 317) vom großen Kolben (36, 318) in Schließrichtung mitnehmbar ist.

10. Antriebsvorrichtung nach einem der Ansprüche 6 bis 9, **dadurch gekennzeichnet, daß** die Koppelungseinrichtung (195) eine insbesondere elektromagnetisch betätigbare Schaltkupplung ist, die eine am einen Teil (36, 37, 287) befindliche Spule (198) und einen am anderen Teil (28, 228, 253) gehaltenen Anker (203) besitzt, der bei Stromfluß durch die Spule (198) axial an diesem gehalten wird.

11. Antriebsvorrichtung nach einem der Ansprüche 6 bis 9, **dadurch gekennzeichnet, daß** die Koppelungseinrichtung (180) zwischen dem Antriebselement bzw. dem kleinen Kolben (28, 334) einerseits und dem Zwischenteil (437) oder dem großen Kolben (36) andererseits eine hydraulische Kupplung ist, wobei Druckflüssigkeit während der Stellbewegung in einem Kupplungsraum (186, 467) zwischen den beiden miteinander gekuppelten Teilen (28, 36, 437) eingeschlossen und zur Bewegung der beiden Teile gegeneinander aus dem Kupplungsraum (186, 467) verdrängbar ist.

12. Antriebsvorrichtung nach einem der Ansprüche 6 bis 9, **dadurch gekennzeichnet, daß** die Koppelungseinrichtung (180) eine insbesondere hydraulische Grenzkraftkupplung ist, daß das Antriebselement bzw. der kleine Kolben (28) in einen abgeschlossenen und mit einem Fluid gefüllten Kupplungsraum (186) des Zwischenteils oder des großen Kolbens (36) eintritt und im Bereich des Kupplungsraums (186) eine diesen Kupplungsraum in zwei Kupplungsteilräume trennende Trennscheibe (188) trägt und daß die beiden Kupplungsteilräume über eine Ventilanordnung (189, 190) fluidisch miteinander verbindbar sind und daß die Ventilanordnung zwei antiparallel angeordnete Rückschlagventile (189, 190) aufweist.

13. Antriebsvorrichtung nach einem der Ansprüche 8 bis 12, **dadurch gekennzeichnet, daß** der große Kolben (36) einen Kupplungsraum (186) aufweist, in den das Antriebselement bzw. der kleine Kolben (28, 228) hineinreicht und in dem sich die Koppelungseinrichtung (180, 195) befindet.

14. Antriebsvorrichtung nach Anspruch 13, **dadurch gekennzeichnet, daß** der kleine Kolben (28, 228) ein Stufenkolben mit einem Abschnitt größeren Durchmessers und einem diesem folgenden Abschnitt (202) kleineren Durchmessers ist, daß der kleine Kolben (28, 228) mit dem Abschnitt größeren Durchmessers abgedichtet in den Druckraum (35) und mit dem Abschnitt (202) kleineren Durchmessers in den Kupplungsraum (186) eintritt, so daß die Differenzfläche zwischen den beiden Abschnitten unterschiedlicher Durchmesser die Wirkfläche des kleinen Kolbens (28, 228) bildet.

15. Antriebsvorrichtung nach einem vorhergehenden Anspruch, **dadurch gekennzeichnet, daß** das Zwischenteil (37, 287, 317) der Hydroeinheit (12) gegen eine Verschiebung relativ zu dem ortsfesten Gestell (10, 240) durch Reibschluß mit dem ortsfesten Gestell (10, 240) blockierbar ist.

16. Antriebsvorrichtung nach Anspruch 15, **dadurch gekennzeichnet, daß** der Reibschluß durch hydraulische Druckbeaufschlagung des einen Reibschlußpartners (92, 211) herstellbar ist.

17. Antriebsvorrichtung nach Anspruch 16, **dadurch gekennzeichnet, daß** der eine Reibschlußpartner (92) von dem im Druckraum (35) herrschenden Druck beaufschlagbar ist.

18. Antriebsvorrichtung nach Anspruch 17, **dadurch gekennzeichnet, daß** der eine Reibschlußpartner (92, 211) durch Zufuhr von Fremddruckmittel mit Druck beaufschlagbar ist.

19. Antriebsvorrichtung nach einem der Ansprüche 16 bis 18, **dadurch gekennzeichnet, daß** im Gestell wenigstens eine Bremsbacke (211), vorzugsweise mehrere einzelne Bremsbacken (211), angeordnet sind, die von außen mit Druck beaufschlagbar und nach innen hin an das Zwischenteil (37) anlegbar sind.

20. Antriebsvorrichtung nach einem der Ansprüche 16 bis 18, **dadurch gekennzeichnet, daß** das Zwischenteil (37) der Hydroeinheit (12) einen Rohrabschnitt (43, 92) aufweist, der zur Herstellung eines Reibschlusses zwischen dem Zwischenteil und einer Wand einer Bohrung (9) des ortsfesten Gestells (10, 240) durch Innendruck radial nach außen elastisch dehnbar ist.

21. Antriebsvorrichtung nach Anspruch 20, **dadurch gekennzeichnet, daß** um den dehnbaren, dünn ausgebildeten Rohrabschnitt (92) herum einzelne, radial bewegliche Bremsstäbe (196) angeordnet sind, die axial mit geringem Spiel zwischen Anschlägen des Zwischenteils (37, 287, 317) liegen.

22. Antriebsvorrichtung nach Anspruch 20 oder 21, **dadurch gekennzeichnet, daß** das Zwischenteil (37, 287, 317) der Hydroeinheit (12) einen den Druckraum (35) begrenzenden Rohrabschnitt (43, 92) aufweist, der zur Herstellung eines Reibschlusses zwischen dem Zwischenteil und einer Wand einer Bohrung (9) des ortsfesten Gestells (10) durch einen Druck im Druckraum (35) radial nach außen elastisch dehnbar ist.

23. Antriebsvorrichtung nach einem der Ansprüche 20 bis 22, **dadurch gekennzeichnet, daß** das Zwischenteil (37, 287, 317) einen formstabilen inneren Rohrabschnitt (94), in dem der große Kolben (36) abgedichtet geführt ist, und einen den inneren Rohrabschnitt (94) unter Bildung eines Freiraums (96, 97, 183) umgebenden äußeren Rohrabschnitt (92) aufweist, daß der Freiraum mit Druck beaufschlagbar ist und daß der äußere Rohrabschnitt (92) durch einen im Freiraum (96, 97, 183) anstehenden Druck radial nach außen dehnbar ist.

24. Antriebsvorrichtung nach einem der Ansprüche 15 bis 18, **dadurch gekennzeichnet, daß** das Zwischenteil (37) der Hydroeinheit (12) gegen eine Verschiebung relativ zu dem ortsfesten Gestell (10) durch Klemmkeile (111, 117) blockierbar ist.

25. Antriebsvorrichtung nach Anspruch 24, **dadurch gekennzeichnet, daß** das Zwischenteil (37) durch Klemmen der Klemmkeile (111, 117) mit Holmen (124) des Gestells (10) mit dem Gestell (10) verklemmbar ist.

26. Antriebsvorrichtung nach einem der Ansprüche 1 bis 14, **dadurch gekennzeichnet, daß** das Zwischenteil (37) der Hydroeinheit (12) gegen eine Verschiebung relativ zu dem ortsfesten Gestell durch Formschluß mit dem ortsfesten Gestell (10) blockierbar ist.

27. Antriebsvorrichtung nach Anspruch 26, **dadurch gekennzeichnet, daß** das Zwischenteil (37) durch mehrere, um es herum in gleichen Abständen angeordnete Verriegelungselemente (76) blockierbar ist und daß jedes Verriegelungselement (76) um eine zur Achse der Hydroeinheit (12) parallele Achse verschwenkbar ist.

28. Antriebsvorrichtung nach Anspruch 27, **dadurch gekennzeichnet, daß** die Verriegelungselemente (76) in ihrer axialen Position einstellbar sind.

29. Antriebsvorrichtung nach einem der Ansprüche 1 bis 14, **dadurch gekennzeichnet, daß** das Zwischenteil (37) durch einen axialen Anschlag (149, 160, 174) blockierbar ist, der entsprechend der Stellbewegung des Zwischenteils (37) bewegbar ist, wobei die Kraftkette zur axialen Abstützung des Zwischenteils (37) einen selbsthemmenden Gewindetrieb (144, 148; 156, 161) umfaßt.

30. Antriebsvorrichtung nach Anspruch 29, **dadurch gekennzeichnet, daß** der axiale Anschlag (160, 174) von einem zweiten Elektromotor (163) bewegbar ist.

31. Antriebsvorrichtung nach Anspruch 29, **dadurch gekennzeichnet, daß** ein drehend antreibbares Teil (174) des Gewindetriebes (144, 148) unmittelbar mit einem mit einem Gewinde (148) versehenen Abschnitt (177) des Zwischenteils (37) kämmt und den Anschlag darstellt.

32. Antriebsvorrichtung nach einem vorhergehenden Anspruch, **dadurch gekennzeichnet, daß** der kleine Kolben (228) der Hydroeinheit (12) als Hohlkolben ausgebildet ist, daß von dem Elektromotor (11) eine axial ortsfest angeordnete Gewindespindel (25) drehend antreibbar ist, daß die Gewindespindel (25) von dem hohlen kleinen Kolben (228) aufgenommen ist und daß der kleine Kolben (228) eine über den gesamten Hub mit der Gewindespindel (25) in Eingriff stehende, gegen Verdrehen gesicherte Spindelmutter (234) umfaßt.

33. Antriebsvorrichtung nach Anspruch 32, **dadurch gekennzeichnet, daß** der große Kolben (36) als Hohlkolben ausgebildet ist, daß der kleine Kolben (228) durchgehend hohl und als Stufenkolben mit einem Abschnitt größeren Außendurchmessers und mit einem Abschnitt kleineren Außendurchmessers ausgebildet ist, daß der kleine Kolben (228) mit dem Abschnitt größeren Außendurchmessers abgedichtet in den Druckraum (35) und mit dem Abschnitt kleineren Außendurchmessers in den hohlen großen Kolben (36) eintritt und daß die durch den kleinen Kolben (228) hindurchtretende Gewindespindel (25) von dem Hohlraum (186, 231) im großen Kolben (36) aufnehmbar ist.

34. Antriebsvorrichtung nach einem vorhergehenden Anspruch, **dadurch gekennzeichnet, daß** der große Kolben (36, 290) als Hohlkolben ausgebildet ist, daß von dem Elektromotor (11) eine axial ortsfest angeordnete Gewindespindel (25) drehend antreibbar ist, die durch einen Boden (38) des Zwischenteils (37, 287) der Hydroeinheit (12) hindurchgeht und von dem Hohlraum in dem großen Kolben (36, 290) aufgenommen ist und die mit einer Spindelmutter (253) in Eingriff steht, daß der kleine Kolben durch mehrere außerhalb der Achse der Hydroeinheit (12) angeordnete kleine Kölbchen (256) gebildet wird, die sich an der Spindelmutter (253) axial abstützen und in Bohrungen des Zwischenteilbodens (38) eintauchen.

35. Antriebsvorrichtung nach Anspruch 34, **dadurch gekennzeichnet, daß** der Druckraum (35) einen Ringraum umfaßt, der radial außen und innen durch axiale Zwischenteilwände (94, 257) und axial einerseits durch den Zwischenteilboden (38) und andererseits durch einen zwischen die Zwischenteilwände (94, 257) eintauchenden ringförmigen Abschnitt (258) des großen Kolbens (36) begrenzt ist.

36. Antriebsvorrichtung nach Anspruch 34 oder 35, **dadurch gekennzeichnet, daß** die Spindelmutter (253) in den zentralen Durchgang des Zwischenteilbodens (38) eintaucht.

37. Antriebsvorrichtung nach einem vorhergehenden Anspruch, **dadurch gekennzeichnet, daß** der Druckraum (35) der Hydroeinheit (12) mit einem Hydrospeicher (260, 280, 423) verbindbar ist und daß Druckflüssigkeit aus dem Druckraum (35) in den Hydrospeicher (260, 280) betriebszustandsabhängig, insbesondere in Abhängigkeit vom Druck im Druckraum (35) oder wegabhängig, verdrängbar ist.

38. Antriebsvorrichtung nach Anspruch 37, **dadurch gekennzeichnet, daß** der Hydrospeicher (260) ein Kolbenspeicher ist und einen durch eine Feder (264) belasteten Speicherkolben (261) aufweist, der bei einem bestimmten Druck gegen die Kraft der Feder (264) gegen einen Anschlag gedrückt wird.

39. Antriebsvorrichtung nach Anspruch 37 oder 38, **dadurch gekennzeichnet, daß** in der Fluidverbindung zwischen dem Hydrospeicher (280, 423) und dem Druckraum (35) ein Ventil (281, 475) angeordnet ist, durch das die Fluidverbindung sperrbar ist.

40. Antriebsvorrichtung nach Anspruch 39, **dadurch gekennzeichnet, daß** das Ventil (281) elektrisch betätigbar ist und zugleich mit dem Lösen einer elektromagnetisch betätigbaren Schaltkupplung (195) geschaltet wird.

41. Antriebsvorrichtung nach einem vorhergehenden Anspruch, **dadurch gekennzeichnet, daß** der große Kolben (36) als Membrankolben mit einer Membrane (290) ausgebildet ist.

42. Antriebsvorrichtung nach Anspruch 41, **dadurch gekennzeichnet, daß** die Membrane (290) federelastisch ausgebildet ist und zugleich die Koppelungseinrichtung, durch die Zwischenteil (287) und großer Kolben (36) für die Stellbewegung lagefest miteinander gekoppelt sind, bildet.

43. Antriebsvorrichtung nach einem vorhergehenden Anspruch, **dadurch gekennzeichnet, daß** der Kraftübersetzer (12) doppeltwirkend ausgebildet ist, wobei zumindest der große Kolben (36) doppeltwirkend ausgebildet ist.

44. Antriebsvorrichtung nach Anspruch 43, **dadurch gekennzeichnet, daß** das Zwischenteil (317) der Hydroeinheit (12) gegen eine Verschiebung relativ zu dem ortsfesten Gestell durch Reibschluß mit dem ortsfesten Gestell blockierbar und der Reibschluß durch hydraulische Druckbeaufschlagung des einen Reibschlußpartners (92) herstellbar ist und daß die Druckbeaufschlagung jeweils von dem unter Druck gesetzten Druckraum (35) aus erfolgt, wobei der andere Druckraum (35) zu dem beaufschlagten Reibschlußpartner (92) hin abgesperrt ist.

45. Antriebsvorrichtung nach Anspruch 43 oder 44, **dadurch gekennzeichnet, daß** zwischen dem großen Kolben (36) und dem Zwischenteil (317, 437) wenigstens eine Feder (324, 461, 462) abgestützt ist und daß das eineTeil (36, 317, 437) durch die wenigstens eine Feder (324, 461, 462) in Richtung einer Mittellage bezüglich des anderen Teils belastbar ist.

46. Antriebsvorrichtung nach einem der Ansprüche 43 bis 45, **gekennzeichnet durch** eine zwischen dem kleinen Kolben (334) und dem großen Kolben (36) oder dem Zwischenteil (437) angeordnete Koppelungseinrichtung (180, 195) mit einem Kupplungsteil (203, 457), das von einer am kleinen Kolben (334) abgestützten Feder (344, 459) in Richtung auf eine Schulter (342, 456) des kleinen Kolbens (334) belastet ist.

47. Antriebsvorrichtung nach einem vorhergehenden Anspruch, **dadurch gekennzeichnet, daß** das eine Ende der Gewindespindel (25) in einem Radiallager (270) gelagert ist, das, wenn eine Radialkraft eine Grenzkraft überschreitet, gegenüber einer der Längsführung der Gewindespindel (25) dienenden Führungsbuchse (274) radial verstellbar ist.

48. Antriebsvorrichtung nach einem vorhergehenden Anspruch, **dadurch gekennzeichnet, daß** die Koppelungseinrichtung (180) zwischen dem Antriebselement (28, 253) bzw. dem kleinen Kolben (334,) einerseits und dem Zwischenteil (437) oder dem großen Kolben (36) andererseits eine hydraulische Kupplung (180) mit einem Kupplungsraum (426, 467) zwischen den beiden miteinander koppelbaren Teilen ist, wobei Druckflüssigkeit während der Stellbewegung in dem Kupplungsraum (426, 467) zwischen den beiden miteinander gekuppelten Teilen eingeschlossen und zur Bewegung der beiden Teile gegeneinander aus dem Kupplungsraum (426, 467) verdrängbar ist, und daß für die Stellbewegung der Kupplungsraum (426, 467) über ein Wegeventil (428, 475) mit einem Hochdruckspeicher (425) verbindbar ist.

49. Antriebsvorrichtung nach Anspruch 48, **dadurch gekennzeichnet, daß** zur Bewegung der beiden miteinander kuppelbaren Teile (28, 253, 36, 437) gegeneinander der Kupplungsraum (426, 467) über das Wegeventil (428) mit einem Niederdruckspeicher (423) verbindbar ist.

50. Antriebsvorrichtung nach einem vorhergehenden Anspruch, **dadurch gekennzeichnet, daß** der Kraftübersetzer (12) doppeltwirkend ausgebildet ist und einen doppeltwirkenden großen Kolben (36) mit einem an eine erste große Druckkammer ((321) und an eine zweite große Druckkammer (320) angrenzenden Kölbenbund (319) aufweist, daß der kleine Kolben (334) einen an eine erste kleine Druckkammer (466, 467), aus der Druckflüssigkeit in die erste große Druckkammer (321) verdrängbar ist, angrenzenden, ersten Kolbenabschnitt (457) und einen relativ dazu bewegbaren und an eine zweite kleine Druckkammer (464), aus der Druckflüssigkeit in die zweite große Druckkammer (320) verdrängbar ist, angrenzenden, zweiten Kolbenabschnitt (455) aufweist, daß der zweite Kolbenabschnitt (455) zwangsgekoppelt vom Antriebselement 25) mitnehmbar ist, daß das den kleinen Kolben (334) aufnehmende Teil (437) für den ersten Kolbenabschnitt (457) einen Anschlag (460) besitzt, von dem aus der erste Kolbenabschnitt (457) im Sinne einer Verkleinerung der ersten kleinen Druckkammer (466, 467) vom Antriebselement (25) in eine erste Richtung mitnehmbar ist, während in die entgegengesetzte, zweite Richtung nach Anlage des ersten Kolbenabschnitts (457) an dem Anschlag (460) der zweite Kolbenabschnitt (455) im Sinne einer Verkleinerung der zweiten kleinen Druckkammer (464) weiter verfahrbar ist.

## Claims

1. A drive device, in particular for the closing unit, the injection unit or the ejectors of an injection moulding machine for plastics, having a drive element (25, 234, 253) which can be moved axially by an electric motor (11, 170),
and having a hydraulic unit (12) which can be moved in the same direction as the drive element (25, 234, 253) by moving the latter,
**characterized by the fact that** the hydraulic unit (12) is a power transmission means having two pistons (28, 228, 256, 334; 36, 290, 318), which are movable relative to one another and differ from one another in the size of their effective areas, and having an intermediate part (37, 287, 317, 437) which together with the pistons encloses a pressure chamber (35) filled with a pressure fluid,
by the fact that the small piston (28, 228, 256, 334) having the smaller effective area is mechanically connected to the drive element (25, 234, 253),
by the fact that the hydraulic unit (12) can be moved as an entity for a regulating movement,
and by the fact that, for exerting a high force by the large piston (36, 290, 318) having the larger effective area, the intermediate part can be locked against displacement relative to a fixed frame (10, 240, 433).

2. A drive device according to claim 1, **characterized by** the fact that there is a coupling device (60, 324) with which the intermediate part (37, 287, 317) and the large piston (36, 287, 318) of the hydraulic unit (12), for a regulating movement, are coupled to one another in a fixed position, and by the fact that, for exerting the high force by the large piston (36, 318) of the hydraulic unit (12) , the fixed coupling between large piston (36, 318) and intermediate part (37, 287, 317) can be released.

3. A drive device according to claim 1 or 2, **characterized by** the fact that the coupling device comprises a spring (60, 324) which is secured in position between the large piston (36, 318) and the intermediate part (37, 317), by the fact that the large piston (36, 318) and the intermediate part (37, 317) can be pressed against one another axially by means of the spring (60, 324), and by the fact that when the large piston (36, 318) and the intermediate part (37, 317) are axially in contact with one another, the preloading force of the spring (60, 324) is greater than the regulating force required for performing the regulating movement.

4. A drive device according to any of the preceding claims, **characterized by** the fact that the intermediate part is formed as a cylinder (37) which surrounds the large piston (36) on the outside, and by the fact that the small piston (28, 256) projects plunger-like through a flange (38) of the cylinder (37) freely into the pressure chamber (35).

5. A drive device according to claim 4, **characterized by** the fact that the large piston (36) has a blind hole (56) which is open toward the flange (28) of the cylinder (37) and into which the small piston (28) can plunge.

6. A drive device according to any of the preceding claims, **characterized by** the fact that there is a coupling device (85, 180, 195) with which the drive element (25, 253) and the intermediate part (37, 287, 437) of the hydraulic unit (12) are directly coupled to one another in a fixed position for a regulating movement, and by the fact that, for exerting the high force by the large piston (36, 290) of the hydraulic unit (12), the fixed coupling between the drive element (25, 253) and the intermediate part (37, 287, 437) can be released.

7. A drive device according to claim 6, **characterized by** the fact that the large piston (36) and the intermediate part (37) of the hydraulic unit (12) can be pressed against one another by a spring (60), the preloading force of which is lower than the regulating force required for performing the regulating movement.

8. A drive device according to any of the preceding claims, **characterized by** the fact that there is a coupling device (180, 195) with which the drive element (25, 234) or the small piston (28, 228, 334), on the one hand, and the large piston (36, 318) of the hydraulic unit (12), on the other hand, are coupled directly to one another in a fixed position for a regulating movement, and by the fact that, for exerting the high force by the large piston (36, 318) of the hydraulic unit (12), the fixed coupling between the drive element (25, 234) or the small piston (28, 228, 334) and the large piston (36, 318) can be released.

9. A drive device according to claim 8, **characterized by** the fact that the large piston (36, 318) and the intermediate part (37, 317) of the hydraulic unit (12) can be pressed against one another by a spring (60, 324), via which the intermediate part (37, 317) can be carried along in the closing direction by the large piston (36, 318).

10. A drive device according to any of claims 6 to 9, **characterized by** the fact that the coupling device (195) is an, in particular, electromagnetically actuable clutch which has a coil (198) located on one part (36, 37, 287) and an armature (203) which is held on the other part (28, 228, 253) which, when current flows through the coil (198), is held axially on the latter.

11. A drive device according to any of claims 6 to 9, **characterized by** the fact that the coupling device (180) between the drive element or the small piston (28, 334), on the one hand, and the intermediate part (437) or the large piston (36), on the other hand, is a hydraulic clutch, in which case pressure fluid, during the regulating movement, is trapped in a clutch chamber (186, 467) between the two parts (28, 36, 437) coupled to one another and can be displaced from the coupling chamber (186, 467) for moving the two parts relative to one another.

12. A drive device according to any of claims 6 to 9, **characterized by** the fact that the coupling device (180) is, in particular, a hydraulic slip clutch, by the fact that the drive element or the small piston (28) enters a closed-off clutch chamber (186), filled with a fluid, of the intermediate part or of the large piston (36) and carries, in the region of the clutch chamber (186), a separating disk (188) separating said clutch chamber into two clutch sectional chambers, and by the fact that the two clutch sectional chambers can be fluidically connected to one another by a valve arrangement (189, 190), and by the that the valve arrangement has two check valves (189, 190) in an antiparallel arrangement.

13. A drive device according to any of claims 8 to 12, **characterized by** the fact that the large piston (36) has a clutch chamber (186), into which the drive element or the small piston (28, 228) extends and in which the coupling device (180, 195) is located.

14. A drive device according to claim 13, **characterized by** the fact that the small piston (28, 228) is a stepped piston with a section of larger diameter and a section (202) of smaller diameter following this section of larger diameter, by the fact that the small piston (28, 228), with the section of larger diameter, enters the pressure chamber (35) in a sealed-off manner and, with the section (202) of smaller diameter, enters the clutch chamber (186), so that the differential area between the two sections of different diameters forms the effective area of the small piston (28, 228).

15. A drive device according to any of the preceding claims, **characterized by** the fact that the intermediate part (37, 287, 317) of the hydraulic unit (12) can be locked against displacement relative to the fixed frame (10, 240) by friction grip with the fixed frame (10, 240).

16. A drive device according to claim 15, **characterized by** the fact that the friction grip can be produced by hydraulically applying pressure to the one friction-grip partner (92, 211).

17. A drive device according to claim 16, **characterized by** the fact that the pressure prevailing in the pressure chamber (35) can be applied to the one friction-grip partner (92).

18. A drive device according to claim 17, **characterized by** the fact that pressure can be applied to the one friction grip partner (92, 211) by feeding external pressure medium.

19. A drive device according to any of claims 16 to 18, **characterized by** the fact that at least one brake shoe (211), preferably a plurality of individual brake shoes (211), to which pressure can be applied from outside and which can be brought into contact with the intermediate part (37) towards the inside, are arranged in the frame.

20. A drive device according to any of claims 16 to 18, **characterized by** the fact that the intermediate part (37) of the hydraulic unit (12) has a tube section (43, 92) which can be elastically expanded radially outwards by internal pressure for producing a friction grip between the intermediate part and a wall of a bore (9) of the fixed frame (10, 240).

21. A drive device according to claim 20, **characterized by** the fact that individual, radially movable brake rods (196) are arranged around the expansible tube section (92) of thin construction, these brake rods (196) lying axially with slight play between stops of the intermediate part (37, 287, 317).

22. A drive device according to claim 20 or 21, **characterized by** the fact that the intermediate part (37, 287, 317) of the hydraulic unit (12) has a tube section (43, 92) which defines the pressure chamber (35) and which can be elastically expanded radially outwards by a pressure in the pressure chamber (35) for producing a friction grip between the intermediate part and a wall of a bore (9) of the fixed frame (10).

23. A drive device according to any of claims 20 to 22, **characterized by** the fact that the intermediate part (37, 287, 317) has a dimensionally stable inner tube section (94), in which the large piston (36) is guided in a sealed―off manner, and an outer tube section (92) which surrounds the inner tube section (94) while forming a clearance space (96, 97, 183), by the fact that pressure can be applied to the clearance space, and by the fact that the outer tube section (92) can be expanded radially outwards by a pressure prevailing in the clearance space (96, 97, 183).

24. A drive device according to any of claims 15 to 18, **characterized by** the fact that the intermediate part (37) of the hydraulic unit (12) can be locked against displacement relative to the fixed frame (10) by clamping wedges (111, 117).

25. A drive device according to claim 24, **characterized by** the fact that the intermediate part (37) can be clamped to the frame (10) by clamping the clamping wedges (111, 117) to spars (124) of the frame (10).

26. A drive device according to any of claims 1 to 14, **characterized by** the fact that the intermediate part (37) of the hydraulic unit (12) can be locked against a displacement relative to the fixed frame by positive locking with the fixed frame (10)

27. A drive device according to claim 26, **characterized by** the fact that the intermediate part (37) can be locked by a plurality of locking elements (76) which are arranged around it at equal distances apart and by the fact that each locking element (76) is pivotable about an axis parallel to the axis of the hydraulic unit (12).

28. A drive device according to claim 27, **characterized by** the fact that the locking elements (76) can be set in the axial position.

29. A drive device according to any of claims 1 to 14, **characterized by** the fact that the intermediate part (37) can be locked by an axial stop (149, 160, 174) which can be moved in accordance with the regulating movement of the intermediate part (37), the force chain for axially supporting the intermediate part (37) comprising a self locking screw drive (144, 148; 156, 161).

30. A drive device according to claim 29, **characterized by** the fact that the axial stop (160, 174) can be moved by a second electric motor (163).

31. A drive device according to claim 29, **characterized by** the fact that a rotationally drivable part (174) of the screw drive (144, 148) meshes directly with a section (177), provided with a thread (148), of the intermediate part (37) and constitutes the stop.

32. A drive device according to any of the preceding claims, **characterized by** the fact that the small piston (228) of the hydraulic unit (12) is formed as a hollow piston, by the fact that a screw spindle (25) arranged in an axially fixed position can be rotationally driven by the electric motor (11), by the fact that the screw spindle (25) is accommodated by the hollow small piston (228), and by the fact that the small piston (228) comprises a spindle nut (234) which is in engagement with the screw spindle (25) over the entire stroke and is locked against rotation.

33. A drive device according to claim 32, **characterized by** the fact that the large piston (36) is formed as a hollow piston, by the fact that the small piston (228) is hollow throughout and is formed as a stepped piston with a section of larger outside diameter and with a section of smaller outside diameter, by the fact that the small piston (228), with the section of larger outside diameter, enters the pressure chamber (35) in a sealed-off manner and, with the section of smaller outside diameter, enters the hollow large piston (36), and by the fact that the screw spindle (25) passing through the small piston (228) can be accommodated by the cavity (186, 231) in the large piston (36).

34. A drive device according to any of the preceding claims, **characterized by** the fact that the large piston (36, 290) is formed as a hollow piston, by the fact that a screw spindle (25) arranged in an axially fixed position can be rotationally driven by the electric motor (11), and this screw spindle (25) passes through a base (38) of the intermediate part (37, 287) of the hydraulic unit (12) and is accommodated by the cavity in the large piston (36, 290) and is in engagement with a spindle nut (253), by the fact that the small piston is formed by a plurality of little pistons (256) which are arranged outside the axis of the hydraulic unit (12), are supported axially on the spindle nut (253) and plunge into holes of the intermediate-part base (38).

35. A drive device according to claim 34, **characterized by** the fact that the pressure chamber (35) comprises an annular space which is defined radially on the outside and inside by axial intermediate-part walls (94, 257) and axially on the one side by the intermediate-part base (38) and on the other side by an annular section (258), plunging between the intermediate-part walls (94, 257), of the large piston (36).

36. A drive device according to claims 34 or 35, **characterized by** the fact that the spindle nut (253) plunges into the central passage of the intermediate-part base (38).

37. A drive device according to any of the preceding claims, **characterized by** the fact that the pressure chamber (35) of the hydraulic unit (12) can be connected to a hydraulic accumulator (260, 280, 423), and by the fact that pressure fluid can be displaced from the pressure chamber (35) into the hydraulic accumulator (260, 280) as a function of the operating state, in particular as a function of the pressure in the pressure chamber (35) or as a function of travel.

38. A drive device according to claim 37, **characterized by** the fact that the hydraulic accumulator (260) is a piston accumulator and has an accumulator piston (261) which is loaded by a spring (264) and which, at a certain pressure, is pressed against a stop against the force of the spring (264).

39. A drive device according to claim 37 or 38, **characterized by** the fact that a valve (281, 475) is arranged in the fluid connection between the hydraulic accumulator (280, 423) and the pressure chamber (35), with which valve (281, 475) the fluid connection can be shut off.

40. A drive device according to claim 39, **characterized by** the fact that the valve (281) can be actuated electrically and is operated at the same time as the release of an electromagnetically actuable clutch (195).

41. A drive device according to any of the preceding claims, **characterized by** the fact that the large piston (36) is formed as a diaphragm piston with a diaphragm (290).

42. A drive device according to claim 41, **characterized by** the fact that the diaphragm (290) is of elastic construction and at the same time forms the coupling device with which the intermediate part (287) and the large piston (36) are coupled to one another in a fixed position for the regulating movement.

43. A drive device according to any of the preceding claims, **characterized by** the fact that the power transmission means (12) is constructed so as to be double-acting, in which case at least the large piston (36) is constructed so as to be double-acting.

44. A drive device according to claim 43, **characterized by** the fact that the intermediate part (317) of the hydraulic unit (12) can be locked against a displacement relative to the fixed frame by friction grip with the fixed frame, and the friction grip can be produced by hydraulically applying pressure to the one friction-grip partner (92), and by the fact that the application of pressure is effected in each case from the pressure chamber (35) under pressure, the other pressure chamber (35) being shut off towards the friction grip partner (92) acted upon.

45. A drive device according to claim 43 or 44, **characterized by** the fact that at least one spring (324, 461, 462) is supported between the large piston (36) and the intermediate part (317, 437), and by the fact that the one part (36, 317, 437) can be loaded in the direction of a centre position relative to the other part by the at least one spring (324, 461, 462).

46. A drive device according to any of claims 43 to 45, **characterized by** a coupling device (180, 195) arranged between the small piston (334) and the large piston (36) or the intermediate part (437) and having a clutch part (203, 457) which is loaded in the direction of a shoulder (342, 456) of the small piston (334) by a spring (344, 459) supported on the small piston (334).

47. A drive device according to any of the preceding claims, **characterized by** the fact that the one end of the screw spindle (25) is mounted in a radial bearing (270) which, if a radial force exceeds a limit force, is radially adjustable relative to a guide bush (274) serving for the longitudinal guidance of the screw spindle (25).

48. A drive device according to any of the preceding claims, **characterized by** the fact that the coupling device (180) between the drive element (28, 253) or the small piston (334), on the one hand, and the intermediate part (437) or the large piston (36), on the other hand, is a hydraulic clutch (180) having a clutch chamber (426, 467) between the two parts that can be coupled to one another, in which case pressure fluid, during the regulating movement, is trapped in the clutch chamber (426, 467) between the two parts coupled to one another and can be displaced from the clutch chamber (426, 467) for moving the two parts relative to one another, and by the fact that, for the regulating movement, the clutch chamber (426, 467) can be connected to a high-pressure accumulator (425) via a directional control valve (428, 475).

49. A drive device according to claim 48, **characterized by** the fact that, for moving the two parts (28, 253, 36, 437), which can be coupled to one another, relative to one another, the clutch chamber (426, 467) can be connected to a low-pressure accumulator (423) via the directional control valve (428).

50. A drive device according to any of the preceding claims, **characterized by** the fact that the power transmission means (12) is constructed so as to be double-acting and has a double-acting large piston (36) with a piston collar (319) adjoining a first large pressure chamber (321) and a second large pressure chamber (320), by the fact that the small piston (334) has a first piston section (457), adjoining a first small pressure chamber (466, 467) from which pressure fluid can be displaced into the first large pressure chamber (321), and a second piston section (455) which is movable relative to the first piston section (457) and adjoins a second small pressure chamber (464), from which pressure fluid can be displaced into the second large pressure chamber (320), by the fact that the second piston section (455) can be carried along by the drive element (25) by positive coupling, by the fact that the part (437) accommodating the small piston (334) has a stop (460) for the first piston section (457), from which stop (460) the first piston section (457), in the direction for reducing the first small pressure chamber (466, 467), can be carried along by the drive element (25) in a first direction, whereas in the opposite, second direction, after the first piston section (457) bears against the stop (460), the second piston section (455) can continue to be moved for reducing the second small pressure chamber (464).

## Revendications

1. Un dispositif d'entraînement, en particulier pour l'unité de fermeture, l'unité d'injection ou les éjecteurs d'une machine à mouler le plastique par injection,
doté d'un élément (25, 234, 253) d'entraînement; qu'un moteur (11, 170) électrique peut faire coulisser dans la direction axiale,
et doté d'une unité (12) hydraulique, qu'un coulissement de l'élément (25, 234, 253) d'entraînement peut faire coulisser dans le même sens que lui,
**caractérisé en ce que** l'unité (12) hydraulique est un multiplicateur de force doté de deux pistons (28, 228, 256, 334 ; 36, 290, 318), qui peuvent bouger l'un par rapport à l'autre et qui se distinguent l'un de l'autre par la taille de leur surface active, et doté d'un élément (37, 287, 317, 437) intermédiaire, qui conjointement avec les pistons enferme une chambre (35) de pression remplie d'un fluide de pression,
que le petit piston (28, 228, 256, 334), présentant la surface active la plus petite, est relié à l'élément (25, 234, 253) d'entraînement par voie mécanique,
que l'unité (12) hydraulique dans son ensemble peut coulisser pour un mouvement de réglage
et que, pour permettre au gros piston (36, 290, 318), présentant la surfacé active la plus grande, de déployer une force élevée, l'élément intermédiaire peut être bloqué pour prévenir tout coulissement par rapport à un socle (10, 240, 433) fixe.

2. Un dispositif d'entraînement selon la revendication n° 1, **caractérisé en ce qu'** est prévu un dispositif (60, 324) de couplage, qui couple l'élément (37, 287, 317) intermédiaire et le gros piston (36, 287, 318) de l'unité (12) hydraulique l'un avec l'autre, les rendant solidaires pour un mouvement de réglage, et que le couplage fixe entre le gros piston (36, 318) et l'élément (37, 287, 317) intermédiaire peut être relâché pour le déploiement de la force élevée par le gros piston (36, 318) de l'unité (12) hydraulique.

3. Un dispositif d'entraînement selon la revendication n° 1 ou n° 2, **caractérisé en ce que** le dispositif de couplage présente un ressort (60, 324), qui est contraint entre le gros piston (36, 318) et l'élément (37, 317) intermédiaire, que le gros piston (36, 318) et l'élément (37, 317) intermédiaire peuvent venir s'appuyer l'un contre l'autre dans la direction axiale au travers du ressort (60, 324) et que, lorsque le gros piston (36, 318) et l'élément (37, 317) intermédiaire sont appuyés l'un contre l'autre dans la direction axiale, la force de précontrainte du, ressort (60, 324) est supérieure à la force de réglage requise pour l'exécution du mouvement de réglage.

4. Un dispositif d'entraînement selon une revendication précédente, **caractérisé en ce que** l'élément intermédiaire est conçu sous forme d'un vérin (37), qui entoure le gros piston (36) extérieurement, et que le petit piston (28, 256) pénètre librement dans la chambre (35) de pression, à la manière d'un vérin plongeur, au travers d'une bride (38) du vérin (37).

5. Un dispositif d'entraînement selon la revendication n° 4, **caractérisé en ce que** le gros piston (36) présente un alésage (56) en cul-de-sac ouvert sur la bride (28) du vérin (37), dans lequel peut plonger le petit piston (28).

6. Un dispositif d'entraînement selon une revendication précédente, **caractérisé en ce qu'**est prévu un dispositif (85, 180, 195) de couplage qui couple l'élément (25, 253) d'entraînement et l'élément (37, 287, 437) intermédiaire de l'unité (12) hydraulique, de façon à les rendre immédiatement solidaires en termes de position pour un mouvement de réglage, et que le couplage fixe entre l'élément (25, 253) d'entraînement et l'élément (37, 287, 437) intermédiaire peut être desserré pour permettre au gros piston (36, 290) d'exercer la force élevée.

7. Un dispositif d'entraînement selon la revendication n° 6, **caractérisé en ce que** le gros piston (36) et l'élément (37) intermédiaire de l'unité (12) hydraulique peuvent venir s'appuyer l'un contre l'autre au travers d'un ressort (60), dont la force de précontrainte est inférieure à la force de réglage requise pour l'exécution du mouvement de réglage.

8. Un dispositif d'entraînement selon une revendication précédente, **caractérisé en ce qu'**est prévu un dispositif (180, 195) de couplage, qui permet de coupler l'un à l'autre, de façon à les rendre immédiatement solidaires en termes de position pour un mouvement de réglage, d'une part l'élément (25, 234) d'entraînement ou le petit piston (28, 228, 334), selon le cas, d'autre part le gros piston (36, 318) de l'unité (12) hydraulique, et que le couplage fixe entre l'élément (25, 234) d'entraînement ou le petit piston (28, 228, 334), selon le cas, et le gros piston (36, 318) peut être desserré pour permettre au gros piston (36, 318) de l'unité (12) hydraulique d'exercer la force élevée.

9. Un dispositif d'entraînement selon la revendication n° 8, **caractérisé en ce que** le gros piston (36, 318) et l'élément (37, 317) intermédiaire de l'unité (12) hydraulique peuvent venir s'appuyer l'un contre l'autre au travers d'un ressort (60, 324), qui permet au gros piston (36, 318) d'entraîner l'élément (37, 317) intermédiaire dans le sens de la fermeture.

10. Un dispositif d'entraînement selon une des revendications n° 6 à n° 9, **caractérisé en ce que** le dispositif (195) de couplage est un couplage commutatif, en particulier à actionnement électromagnétique, qui présente une bobine (198) disposée au niveau de l'un des éléments (36, 37, 287) et un induit (203) maintenu au niveau de l'autre élément (28, 228, 253), qui est maintenu dans la direction axiale contre ce dernier en cas de flux de courant dans la bobine (198).

11. Un dispositif d'entraînement selon une des revendications n° 6 à n° 9, **caractérisé en ce que** le dispositif (180) de couplage entre d'une part l'élément d'entraînement ou le petit piston (28, 334), selon le cas, et d'autre part l'élément (437) intermédiaire ou le gros piston (36), selon le cas, est un couplage hydraulique, cependant que du fluide de pression est enfermé dans une chambre (186, 467) de couplage entre les deux pièces (28, 36, 437) couplées l'une à l'autre pendant le mouvement de réglage et peut être refoulé hors de la chambre (186, 467) de couplage pour le mouvement des deux pièces l'une par rapport à l'autre.

12. Un dispositif d'entraînement selon une des revendications n° 6 à n° 9, **caractérisé en ce que** le dispositif (180) de couplage est un couplage par force limitrophe, en particulier hydraulique, que l'élément d'entraînement ou le petit piston (28), selon le cas, pénètre dans une chambre (186) de couplage de l'élément intermédiaire ou du gros piston (36), laquelle est fermée et remplie de fluide, et porte dans la zone de la chambre (186) de couplage un disque (188) de séparation, qui sépare cette chambre de couplage en deux chambres de couplage partielles, et qu'un dispositif de valves (189, 190) permet de relier par voie fluide les deux chambres de couplage partielles l'une à l'autre et que le dispositif de valves présente deux clapets (189, 190) anti-retour, disposés de façon anti-parallèle.

13. Un dispositif d'entraînement selon une des revendications n° 8 à n° 12, **caractérisé en ce que** le gros piston (36) présente une chambre (186) de couplage, dans laquelle pénètre l'élément d'entraînement ou le petit piston (28, 228), selon le cas, et dans laquelle se trouve le dispositif (180, 195) de couplage.

14. Un dispositif d'entraînement selon la revendication n° 13, **caractérisé en ce que** le petit piston (28, 228) est un piston à étages, doté d'un segment de diamètre supérieur suivi par un segment (202) de diamètre inférieur, que le petit piston (28, 228) pénètre, de façon étanche, de par le segment de diamètre supérieur dans la chambre (35) de pression et de par le segment (202) de diamètre inférieur dans la chambre (186) de couplage, de façon à ce que la surface différentielle entre les deux segments de diamètres différents constitue la surface active du petit piston (28, 228).

15. Un dispositif d'entraînement selon une revendication précédente, **caractérisé en ce que** l'élément (37, 287, 317) intermédiaire de l'unité (12) hydraulique peut être bloqué par verrouillage par friction contre le socle (10, 240) fixe, pour prévenir tout coulissement par rapport au socle (10, 240) fixe.

16. Un dispositif d'entraînement selon la revendication n° 15, **caractérisé en ce que** le verrouillage par friction peut être réalisé par une mise sous pression hydraulique de l'un des partenaires (92, 211) du verrouillage par friction.

17. Un dispositif d'entraînement selon la revendication n° 16, **caractérisé en ce que** l'un des partenaires (92) du verrouillage par friction peut être soumis à la pression régnant dans la chambre (35) de pression.

18. Un dispositif d'entraînement selon la revendication n° 17, **caractérisé en ce que** l'un des partenaires (92, 211) du verrouillage par friction peut être soumis à la pression par apport d'un fluide de pression extérieur.

19. Un dispositif d'entraînement selon une des revendications n° 16 à n° 18, **caractérisé en ce que** dans le socle sont disposées au moins une plaquette (211) de frein, de préférence plusieurs plaquettes (211) de frein individuelles, qui peuvent être soumises à une pression provenant de l'extérieur et qui peuvent être amenées à rentrer vers l'intérieur et à venir s'appliquer contre l'élément (37) intermédiaire.

20. Un dispositif d'entraînement selon une des revendications n° 16 à n° 18, **caractérisé en ce que** l'élément (37) intermédiaire de l'unité (12) hydraulique présente un segment (43, 92) tubulaire, qu'une pression intérieure peut gonfler radialement vers l'extérieur, de façon élastique, pour réaliser un verrouillage par friction entre l'élément intermédiaire et une paroi d'un alésage (9) du socle (10, 240) fixe.

21. Un dispositif d'entraînement selon la revendication n° 20, **caractérisé en ce que** tout autour du segment (92) tubulaire, conçu fin et gonflable, sont placés des bâtonnets (196) de freinage, qui sont mobiles dans la direction radiale et qui sont disposés de façon à ne présenter qu'un faible jeu axial entre des butées de l'élément (37, 287, 317) intermédiaire.

22. Un dispositif d'entraînement selon la revendication n° 20 ou n° 21, **caractérisé en ce que** l'élément (37, 287, 317) intermédiaire de l'unité (12) hydraulique présente un segment (43, 92) tubulaire, qui délimite la chambre (35) de pression et qu'une pression dans la chambre (35) de pression peut gonfler radialement vers l'extérieur, de façon élastique, pour réaliser un verrouillage par friction entre l'élément intermédiaire et une paroi d'un alésage (9) du socle (10) fixe.

23. Un dispositif d'entraînement selon une des revendications n° 20 à n° 22, **caractérisé en ce que** l'élément (37, 287, 317) intermédiaire présente un segment (94) tubulaire intérieur indéformable, dans lequel est guidé le gros piston (36) de façon étanche, et un segment (92) tubulaire extérieur, qui entoure le segment (94) tubulaire intérieur en formant un espace (96, 97, 183) libre, que l'espace libre peut être soumis à une pression et qu'une pression dans l'espace (96, 97, 183) libre peut gonfler le segment (92) tubulaire extérieur radialement vers l'extérieur.

24. Un dispositif d'entraînement selon une des revendications n° 15 à n° 18, **caractérisé en ce que** des coins (111, 117) de serrage peuvent caler l'élément (37) intermédiaire de l'unité (12) hydraulique, afin de prévenir tout coulissement par rapport au socle (10) fixe.

25. Un dispositif d'entraînement selon la revendication n° 24, **caractérisé en ce que** l'élément (37) intermédiaire peut être calé contre le socle (10) par serrage des coins (111, 117) de serrage contre des tiges (124) du socle (10).

26. Un dispositif d'entraînement selon une des revendications n° 1 à n° 14, **caractérisé en ce que** l'élément (37) intermédiaire de l'unité (12) hydraulique peut être bloqué contre tout coulissement par rapport au socle fixé par fermeture géométrique avec le socle (10) fixe.

27. Un dispositif d'entraînement selon la revendication n° 26, **caractérisé en ce que** l'élément (37) intermédiaire peut être bloqué à l'aide de plusieurs éléments (76) de verrouillage, qui sont disposés à intervalles réguliers autour de lui, et que chaque élément (76) de verrouillage peut basculer autour d'un axe parallèle à l'axe de l'unité (12) hydraulique.

28. Un dispositif d'entraînement selon la revendication n° 27, **caractérisé en ce que** les éléments (76) de verrouillage sont réglables en termes de position axiale.

29. Un dispositif d'entraînement selon une des revendications n° 1 à n° 14, **caractérisé en ce que** l'élément (37) intermédiaire peut être bloqué contre une butée (149, 160, 174) axiale, qui peut bouger en fonction du mouvement de réglage de l'élément (37) intermédiaire, cependant que la chaîne de forces soutenant l'élément (37) intermédiaire dans la direction axiale comporte un entraînement (144, 148 156, 161) fileté autobloquant.

30. Un dispositif d'entraînement selon la revendication n° 29, **caractérisé en ce qu'**un deuxième moteur (163) électrique peut faire bouger la butée (160, 174) axiale.

31. Un dispositif d'entraînement selon la revendication n° 29, **caractérisé en ce que** une partie (174) de l'entraînement (144, 148) fileté, qui peut être entraînée en rotation, prend directement dans un segment (177) pourvu d'un filetage (148) de l'élément (37) intermédiaire et constitue la butée.

32. Un dispositif d'entraînement selon une revendication précédente, **caractérisé en ce que** le petit piston (228) de l'unité (12) hydraulique est conçu sous forme de piston creux, que le moteur (11) électrique peut entraîner en rotation une broche (25) filetée disposée de façon fixe dans la direction axiale, que la broche (25) filetée est reçue par le petit piston (228) creux et que le petit piston (228) comporte un écrou (234) de broche, qui est en engrènement avec la broche (25) filetée sur l'ensemble de la course et qui est sécurisé contre toute rotation.

33. Un dispositif d'entraînement selon la revendication n° 32, **caractérisé en ce que** le gros piston (36) est conçu sous forme de piston creux, que le petit piston (228) est conçu de façon à être creux de part et d'autre et à être étagé, doté d'un segment de diamètre extérieur plus élevé et d'un segment de diamètre extérieur plus faible, que le petit piston (228) de par le segment de diamètre extérieur plus élevé pénètre de façon étanche dans la chambre (35) de pression et de par le segment de diamètre extérieur plus faible pénètre dans le gros piston (36) creux et que la broche (25) filetée, qui traverse le petit piston (228) de part et d'autre, peut être reçue par la cavité (186, 231) dans le gros piston (36).

34. Un dispositif d'entraînement selon une revendication précédente, **caractérisé en ce que** le gros piston (36, 290) est conçu sous forme de piston creux, que le moteur (11) électrique peut entraîner en rotation une broche (25) filetée, qui est disposée de façon fixe dans la direction axiale, qui traverse de part et d'autre un fond (38) de l'élément (37, 287) intermédiaire de l'unité (12) hydraulique, qui est reçue par la cavité dans le gros piston (36, 290) et qui est en prise avec un écrou (253) de broche, et que le petit piston est constitué de plusieurs pistonnets (256), qui sont disposés à l'extérieur de l'axe de l'unité (12) hydraulique, qui s'appuient dans la direction axiale contre l'écrou (253) de broche et qui plongent dans des alésages dans le fond (38) partiel intermédiaire.

35. Un dispositif d'entraînement selon la revendication n° 34, **caractérisé en ce que** la chambre (35) de pression comprend une chambre annulaire, qui est délimitée dans la direction radiale, à l'extérieur comme à l'intérieur, par des cloisons (94, 257) intermédiaires partielles axiales et dans la direction axiale, d'un côté, par le fond (38) partiel intermédiaire et, de l'autre côté, par un segment (258) annulaire du gros piston (36), qui plonge entre les cloisons (94, 257) intermédiaires partielles.

36. Un dispositif d'entraînement selon la revendication n° 34 ou n° 35, **caractérisé en ce que** l'écrou (253) de broche plonge dans le passage central du fond (38) partiel intermédiaire.

37. Un dispositif d'entraînement selon une revendication précédente, **caractérisé en ce que** la chambre (35) de pression de l'unité (12) hydraulique peut être reliée à un accumulateur (260, 280, 423) hydraulique et que du fluide de pression peut être refoulé hors de la chambre (35) de pression vers l'accumulateur (260, 280) hydraulique en fonction du mode de fonctionnement, en particulier en fonction de la pression dans la chambre (35) de pression ou en fonction de la course.

38. Un dispositif d'entraînement selon la revendication n° 37, **caractérisé en ce que** l'accumulateur (260) hydraulique est un accumulateur à piston et présente un piston (261) d'accumulateur, qui est sollicité par un ressort (264) et qui pour une pression déterminée est plaqué contre une butée, contre la force exercée par le ressort (264).

39. Un dispositif d'entraînement selon la revendication n° 37 ou n° 38, **caractérisé en ce que**, dans la connexion fluide entre l'accumulateur (280, 423) hydraulique et la chambre (35) de pression, est disposée une valve (281, 475), qui permet de fermer la connexion fluide.

40. Un dispositif d'entraînement selon la revendication n° 39, **caractérisé en ce que** la valve (281) est actionnable par voie électrique et est branchée conjointement avec le débrayage d'un embrayage (195) à actionnement électromagnétique.

41. Un dispositif d'entraînement selon une revendication précédente, **caractérisé en ce que** le gros piston (36) est conçu sous forme de piston à membrane avec une membrane (290).

42. Un dispositif d'entraînement selon la revendication n° 41, **caractérisé en ce que** la membrane (290) est conçue de façon à présenter l'élasticité d'un ressort et simultanément à constituer le dispositif d'embrayage, qui couple l'élément (287) intermédiaire et le gros piston (36) l'un avec l'autre, de façon à les rendre solidaires en termes de position pour le mouvement de réglage.

43. Un dispositif d'entraînement selon une revendication précédente, **caractérisé en ce que** le multiplicateur (12) de force est conçu à double effet, cependant qu'au moins le gros piston (36) est conçu à double effet.

44. Un dispositif d'entraînement selon la revendication n° 43, **caractérisé en ce que** l'élément (317) intermédiaire de l'unité (12) hydraulique peut être bloqué pour tout coulissement par rapport au socle fixe par friction contre le socle fixe, le blocage par friction pouvant être obtenu en soumettant l'un des partenaires (92) de blocage par friction à une pression hydraulique, et que la mise sous pression est effectuée à partir de la chambre (35) de pression sous pression, selon le cas, cependant que l'autre chambre (35) de pression est isolée du partenaire (92) de blocage par friction sollicité.

45. Un dispositif d'entraînement selon la revendication n° 43 ou n° 44, **caractérisé en ce qu'**au moins un ressort (324, 461, 462) est étayé entre le gros piston (36) et l'élément (317, 437) intermédiaire et que l'un des éléments (36, 317, 437) peut être sollicité par le ou les ressorts (324, 461, 462) dans le sens d'une position médiane par rapport à l'autre élément.

46. Un dispositif d'entraînement selon une des revendications n° 43 à n° 45, **caractérisé par** un dispositif (180, 195) d'embrayage, qui est disposé entre le petit piston (334) et le gros piston (36) ou l'élément (437) intermédiaire et qui est doté d'un élément (203, 457) d'embrayage, lequel est sollicité dans le sens d'une épaule (342, 456) du petit piston (334) par un ressort (344, 459) étayé contre le petit piston (334).

47. Un dispositif d'entraînement selon une revendication précédente, **caractérisé en ce que** l'une des extrémités de la broche (25) filetée est guidée dans un palier (270) radial, qui, lorsqu'une force radiale dépasse une force limite, peut être calibré dans la direction radiale par rapport à une douille (274) de guidage servant au guidage longitudinal de la broche (25) filetée.

48. Un dispositif d'entraînement selon une revendication précédente, **caractérisé en ce que** le dispositif (180) d'embrayage entre d'une part l'élément (28, 253) d'entraînement ou, le cas échéant, le petit piston (334) et d'autre part l'élément (437) intermédiaire ou le gros piston (36) est un embrayage (180) hydraulique, doté d'une chambre (426, 467) d'embrayage entre les deux éléments pouvant être couplés l'un avec l'autre, cependant que, pendant le mouvement de réglage, du fluide de pression peut être enfermé dans la chambre (426, 467) d'embrayage entre les deux éléments couplés l'un avec l'autre et, pour le mouvement relatif des deux éléments l'un par rapport à l'autre, peut être refoulé hors de la chambre (426, 467) d'embrayage, et **en ce qu'**un distributeur (428, 475) peut raccorder la chambre (426, 467) d'embrayage à un accumulateur (425) haute pression pour le mouvement de réglage.

49. Un dispositif d'entraînement selon la revendication n° 48, **caractérisé en ce que** le distributeur (428) peut raccorder la chambre (426, 467) d'embrayage à un accumulateur (423) basse pression pour le mouvement relatif des deux éléments (28, 253, 36, 437), qui peuvent être couplés l'un avec l'autre.

50. Un dispositif d'entraînement selon une revendication précédente, **caractérisé en ce que** le multiplicateur (12) de force est conçu à double effet et présente un gros piston (36) à double effet, doté d'une collerette (319) de piston avoisinant une première grande chambre (321) de pression et une seconde grande chambre (320) de pression, que le petit piston (334) présente un premier segment (457) de piston, qui avoisine une première petite chambre (466, 467) de pression, hors de laquelle du fluide de pression peut être refoulé vers la première grande chambre (321) de pression, et un second segment (455) de piston, qui peut être déplacé par rapport au précédent et qui avoisine une seconde petite chambre (464) de pression, hors de laquelle du fluide de pression peut être refoulé vers la seconde grande chambre (320) de pression, que l'élément (25) d'entraînement peut entraîner le second segment (455) de piston par couplage forcé et que l'élément (437), qui reçoit le petit piston (334), présente une butée (460) pour le premier segment (457) de piston, à partir de laquelle l'élément (25) d'entraînement peut entraîner le premier segment (457) de piston dans un premier sens, dans le sens d'une réduction de la première petite chambre (466, 467) de pression, cependant que dans le second sens, opposé, après que le premier segment (457) de piston soit en butée contre la butée (460), le second segment (455) de piston peut continuer son mouvement, dans le sens d'une réduction de la seconde petite chambre (464) de pression.
